(19) Europäisches Patentamt / European Patent Office / Office européen des brevets

(11) EP 2 525 658 B1

(12) EUROPÄISCHE PATENTSCHRIFT

(45) Veröffentlichungstag und Bekanntmachung des Hinweises auf die Patenterteilung:
**01.03.2017 Patentblatt 2017/09**

(21) Anmeldenummer: **11700922.5**

(22) Anmeldetag: **14.01.2011**

(51) Int Cl.:
***A01N 43/12*** *(2006.01)* ***A01N 43/90*** *(2006.01)*

(86) Internationale Anmeldenummer:
**PCT/EP2011/050453**

(87) Internationale Veröffentlichungsnummer:
**WO 2011/089071 (28.07.2011 Gazette 2011/30)**

# (54) AKARIZIDE UND/ODER INSEKTIZIDE WIRKSTOFFKOMBINATIONEN

ACARICIDES AND/OR INSECTICIDAL AGENT COMBINATIONS

COMBINAISONS D'AGENTS ACTIFS ACARICIDES ET/OU INSECTICIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.01.2010 US 297395 P**
**22.01.2010 EP 10151415**

(43) Veröffentlichungstag der Anmeldung:
**28.11.2012 Patentblatt 2012/48**

(73) Patentinhaber: **Bayer Intellectual Property GmbH**
**40789 Monheim (DE)**

(72) Erfinder:
- **FISCHER, Reiner**
  **40789 Monheim (DE)**
- **COMPANYS GARCIA, Veronica**
  **40764 Langenfeld (DE)**
- **JARA DOMINGUEZ, Estuardo**
  **50259 Pulheim (DE)**
- **HUNGENBERG, Heike**
  **40764 Langenfeld (DE)**
- **MEISNER, Peter**
  **53859 Niederkassel (DE)**

(74) Vertreter: **BIP Patents**
**c/o Bayer Intellectual Property GmbH**
**Alfred-Nobel-Straße 10**
**40789 Monheim am Rhein (DE)**

(56) Entgegenhaltungen:
**WO-A1-01/60158 WO-A1-01/78511**
**WO-A2-01/70027**

- **BUSCHMAN L L ET AL: "EFFICACY OF EARLY SEASON MITICIDE APPLICATIONS AGAINST SPIDER MITES AND YIELD RESPONSE IN CORN, 2003B", ARTHROPOD MANAGEMENT TESTS, ENTOMOLOGICAL SOCIETY OF AMERICA, LANHAM, MD, US, Bd. 30, 1. Januar 2005 (2005-01-01), Seite F12,4PP, XP009152652,**
- **ELBERT A ET AL: "Field development of Oberon for whitefly and mite control in vegetables, cotton, corn, strawberries, ornamentals and tea", PFLANZENSCHUTZ NACHRICHTEN BAYER, BAYER, LEVERKUSSEN, DE, Bd. 58, Nr. 3, 1. Januar 2005 (2005-01-01) , Seiten 441-468, XP002456476, ISSN: 0340-1723**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 525 658 B1

Printed by Jouve, 75001 PARIS (FR)

**Beschreibung**

**Akarizide und/oder insektizide Wirkstoffkombinationen**

Die vorliegende Erfindung betrifft neue Wirkstoffkombinationen, die aus einem bekannten Dihydrofuranon-Derivat einerseits und einem weiteren bekannten pestiziden Wirkstoff andererseits bestehen und sehr gut zur Bekämpfung von tierischen Schädlingen, insbesondere zur Bekämpfung von tierischen Schädlingen aus der Familie der Aleyrodidae, der Thripidae, der Psyllidae und der Agromyzidae, sowie insbesondere aus der Ordnung der Acari geeignet sind.

Es ist bereits bekannt, dass das Dihydrofuranon-Derivat der Formel

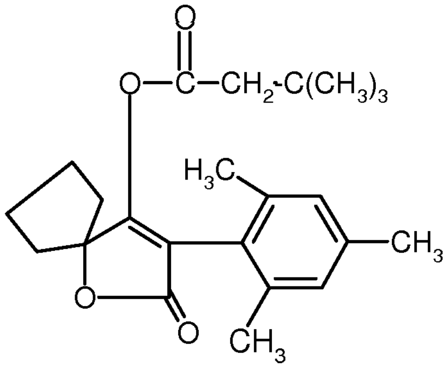

(I)

zur Bekämpfung von tierischen Schädlingen, wie Insekten und unerwünschten Akariden eingesetzt werden kann (vgl. EP-A-0528156, WO 00/42850, WO 06/002824, WO 07/115686). Die Wirksamkeit dieses Stoffes ist gut, lässt aber bei niedrigen Aufwandmengen in manchen Fällen zu wünschen übrig.

Weiterhin bekannt sind Mischungen von (I) mit anderen Insektiziden und/oder Akariziden: z.Bsp. WO 00/56156, WO 01/60158, WO 01/70027, WO 01/76369, WO 01/78511, WO 01/72125, WO 05/048712, WO 05/065453, WO 07/098852, DE-A-10342673.

Es wurde nun gefunden, dass sich Wirkstoffkombinationen enthaltend das Dihydrofuranon-Derivat der Formel

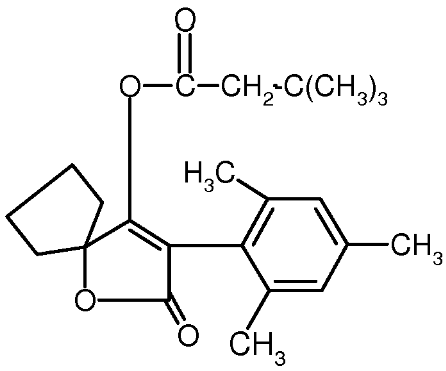

(I)

und

Abamectin im Verhältnis 10:1 oder im Verhältnis 20:1

besonders gut zur Bekämpfung von tierischen Schädlingen aus der Familie der Aleyrodidae, der Thripidae, der Psyllidae und der Agromyzidae, sowie insbesondere aus der Ordnung der Acari in ein- oder mehrjährigen Kulturen eignen. Überraschenderweise ist insbesondere nicht nur die insektizide und/oder akarizide Wirkung der Wirkstoffkombinationen höher als die Summe der Wirkungen der einzelnen Wirkstoffe, sondern es ist auch wider Erwarten eine verbesserte Nützlingsschonung der Wirkstoffkombination zu beobachten.

Abamectin ist bekannt aus DE-A-02717040.

Die vorliegende Erfindung betrifft außerdem ein Verfahren zur Verbesserung der Nutzung des Produktionspotentials einer transgenen Pflanze, dadurch gekennzeichnet, dass die Pflanze mit einer wirksamen Menge der erfindungsgemäßen Wirkstoffkombinationen behandelt wird. Es ist bereits bekannt, dass sich das Produktionspotential einer transgenen Pflanze durch die Behandlung mit der Verbindung der Formel (I) verbessern lässt (WO 2009/132779). Diese

Wirkung wird durch Behandlung mit den erfindungsgemäßen Wirkstoffkombinationen verstärkt.

Die vorliegende Erfindung betrifft weiterhin neue Kombinationen, die aus den oben genannten Wirkstoffkombinationen (im weiteren auch als Mischung(en) definiert) einerseits und Nützlingen (natürliche Feinde) andererseits bestehen und sehr gut zur Bekämpfung von tierischen Schädlingen wie Insekten und/oder unerwünschten Akariden geeignet sind, insbesondere zur Bekämpfung von tierischen Schädlingen aus der Familie der Aleyrodidae, der Thripidae, der Psyllidae und der Agromyzidae, sowie insbesondere aus der Ordnung der Acari geeignet sind.

Weiterhin ist schon bekannt, dass zahlreiche Nützlinge zur Bekämpfung von Insekten und Spinnmilben eingesetzt werden "Knowing and recognizing; M.H. Malais, W.J. Ravensberg publiziert von Koppert B.V., Reed Business Information (2003). Allerdings ist der Einsatz von Nützlingen allein nicht immer befriedigend.

Auch ist bereits bekannt, dass das Dihydrofuranon-Derivat der Formel (I) verbesserte insektizide und akarizide Eigenschaften in Kombination mit Nützlingen zeigt; siehe beispielsweise WO 07/144087 und für IPM-Programme empfohlen wird.

Es wurde nun gefunden, dass Wirkstoffkombinationen (Mischungen) enhaltend die Verbindung der Formel (I) und Abamectin in Mischungsverhältnissen 20:1, 10:1 sich in Kombination mit Nützlingen aus den Ordnungen bzw. Unterordnungen der Araneae, Acari, Dermaptera, Hymenoptera, Coleoptera, Neuroptera, Thysanoptera, Heteroptera, Diptera, Hemiptera, Dermaptera und / oder Parasitiformes einsetzen lassen und sehr gute insektizide und/oder akarizide Eigenschaften besitzen.

Überraschenderweise ist die insektizide und/oder akarizide Wirkung der erfindungsgemäßen Mischungs-Nützlings-Kombinationen besser als die Wirkungen der Mischung und der Nützlinge alleine. Es liegt eine nicht vorhersehbare Wirksteigerung vor. Weiterhin wurde gefunden, dass sich mit Mischungs-Nützlings-Kombinationen Anwendungen von alten toxikologisch und/oder ökologisch bedenklichen Wirkstoffen unter Erhalt einer vergleichbaren Wirkung ersetzen lassen, welches vor allem der Sicherheit der Anwender und/oder der Umwelt zugute kommt und sich gegebenenfalls sogar Spritzfolgen einsparen lassen. Die Anwendung der Mischungs-Nützlings-Kombinationen erfolgt derart, dass die Pflanzen oder Pflanzenteile vorteilhafterweise zunächst mit den erfindungsgemäßen Mischungen behandelt und anschließend die Nützlinge ausgebracht werden.

Gegenstand der Erfindung ist auch ein Kit enthaltend die oben genannten Wirkstoffkombinationen und Nützlinge.

Die vorliegende Erfindung betrifft außerdem ein Verfahren zur Verbesserung der Nutzung des Produktionspotentials einer transgenen Pflanze, dadurch gekennzeichnet, dass die Pflanze mit einer wirksamen Menge der erfindungsgemäßen Mischungs-Nützlings-Kombinationen behandelt wird.

Die erfindungsgemäßen Mischungs-Nützlings-Kombinationen enthalten neben mindestens einer der oben genannten Wirkstoffkombinationen (Mischungen) mindestens einen Nützling aus den unten genannten Ordnungen bzw. Unterodnungen.

Die Wirkstoffkombinationen (Mischungen) können darüber hinaus noch weitere fungizid, akarazid oder insektizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich die verbesserte Wirkung besonders deutlich.

Als Nützlinge kommen besonders bevorzugt Arten aus den folgenden Familien in Frage:

Besonders bevorzugt sind aus der Familie der Lehmwespen (Eumenidae): Eumenes spp., Oplomerus spp., in Kulturen wie z.B. Kernobst, Steinobst, Gemüse, Zierpflanzen, Coniferen und Gewürze.

Besonders bevorzugt sind aus der Familie der Grabwespen (Sphecidae): Ammophila sabulos, Cerceris arenaria, in Kulturen wie z.B. Kernobst, Steinobst, Gemüse, Zierpflanzen, Coniferen und Gewürze.

Besonders bevorzugt sind aus der Familie der Faltenwespen (Vespidae): Polistes spp. Vespa spp., Dolichovespula spp., Vespula spp., Paravespula spp., in Kulturen wie z.B. Kernobst, Steinobst, Gemüse, Zierpflanzen, Coniferen und Gewürze.

Besonders bevorzugt sind aus der Familie der Erzwespen (Aphelinidae): Coccophagus spp., Encarsia spp. z.B. Encarsia formosa, Aphytis spp., Aphelinus spp., z.B. Aphelinus mali, Aphelinus abdominalis, Erelmocerus spp., z.B. Erelmocerus erimicus, Erelmocerus mundus, Prospaltella spp., in Kulturen wie z.B. Kernobst, Steinobst, Gemüse, Zierpflanzen, Coniferen und Gewürze.

Besonders bevorzugt aus der Familie der Erzwespen (Trichogrammatidae): Trichogramma spp., z.B. Trichogamma brassicae, in Kulturen wie z.B. Kernobst, Steinobst, Gemüse, Zierpflanzen, Coniferen und Gewürze.

Besonders bevorzugt aus der Familie der Erzwespen (Encyrtidae): Encyrtus fuscicollis, Aphidencyrtrus spp., in Kulturen wie z.B. Kernobst, Steinobst, Gemüse, Zierpflanzen, Coniferen, Gewürze und Forst.

Besonders bevorzugt aus der Familie der Zwergwespen (Mymaridae), in Kulturen wie z.B. Kernobst, Steinobst, Gemüse, Zierpflanzen, Coniferen und Gewürze.

Besonders bevorzugt aus der Familie Ichneumoidae: Coccigomymus spp. Diadegma spp., Glypta spp., Ophion

spp., Pimpla spp,. in Kulturen wie z.B. Kernobst, Steinobst, Gemüse, Zierpflanzen, Coniferen und Gewürze.

Besonders bevorzugt aus der Familie der Erzwespen (Eulophidae): Dyglyphus spp., z.B. Dyglyphus isaea, Eulophus viridula, Colpoclypeus florus, in Kulturen wie z.B. Kernobst, Steinobst, Gemüse, Zierpflanzen, Coniferen, Mais und Gewürze.

Besonders bevorzugt aus der Familie der Gallwespen (Alloxystidae): Alloxysta spp., in Kulturen wie z.B. Kernobst, Steinobst, Gemüse, Zierpflanzen, Coniferen und Gewürze.

Besonders bevorzugt aus der Familie (Megaspilidae): Dendrocerus spp., in Kulturen wie z.B. Kernobst, Steinobst, Gemüse, Zierpflanzen, Coniferen und Gewürze.

Besonders bevorzugt aus der Familie der Brackwespen (Bracconidae): Aphidrus spp., Praon spp., Opius spp., Dacnusa spp. z.B. Dacnusa sibiria, Apanteles spp., Ascogaster spp., Macrocentrus spp., in Kulturen wie z.B. Kernobst, Steinobst, Gemüse, Zierpflanzen, Coniferen und Gewürze.

Besonders bevorzugt aus der Familie Aphidiidae: Aphidius spp. z.B. Aphidius colemani, Aphidius ervi, Diaeretiella spp., Lysiphlebus spp., in Kulturen wie z.B. Kernobst, Steinobst, Gemüse, Zierpflanzen, Coniferen und Gewürze.

Besonders bevorzugt aus der Familie der Marienkäfer (Coccinellidae): Harmonia spp., Coccinella spp. z.B. Coccinella septempunctata, Adalia spp. z.B. Adalia bipunctata, Calvia spp., Chilocorus spp. z.B. Chilocorus bipustulatus, Scymnus spp., Cryptolaemus montrouzieri, Exochomus spp., Stethorus spp., z.B. Scymnus abietes, Scymnus interruptus, Anatis spp., Rhizobius spp., Thea spp., in Kulturen wie z.B. Kernobst, Steinobst, Gemüse, Zierpflanzen, Coniferen und Gewürze.

Besonders bevorzugt aus der Familie der Kurzflügler (Staphylenidae): Aleochara spp., Aligota spp., Philonthus spp., Staphylinus spp., in Kulturen wie z.B. Kernobst, Steinobst, Gemüse, Zierpflanzen, Coniferen und Gewürze.

Besonders bevorzugt aus der Familie der Florfliegen (Chrysopidae): Chrysopa spp. z.B. Chrysopa oculata, Chrysopa perla, Chrysopa carnea, Chrysopa flava, Chrysopa septempunctata, Chrysoperla spp., Chrysopidia spp., z.B. Chrysopidia ciliata, Hypochrysa spp., z.B. Hypochrysa elegans, in Kulturen wie z.B. Kernobst, Steinobst, Gemüse, Zierpflanzen, Coniferen und Gewürze.

Besonders bevorzugt aus der Familie der Blattlauslöwen (Hemerobiidae): Hemerobius spp., z.B. Hemerobius fenestratus, Hemerobius humulinus, Hemerobius micans, Hemerobius nitidulus, Hemerobius pini, Wesmaelius spp., z.B. Wesmaelius nervosus, in Kulturen wie z.B. Kernobst, Steinobst, Gemüse, Zierpflanzen, Coniferen und Gewürze.

Besonders bevorzugt aus der Familie der Blumenwanzen (Anthocoridae): Anthocoris spp., z.B. Anthocoris nemoralis, Anthocoris nemorum, Orius spp., z.B. Orius majusculus, Orius minutus, Orius laevigatus, Orius insidiosus, Orius niger, Orius vicinus, in Kulturen wie z.B. Kernobst, Steinobst, Gemüse, Zierpflanzen, Coniferen und Gewürze.

Besonders bevorzugt aus der Familie der Weichwanzen (Miridae): Atractotomus spp., z.B. Atractotomus mali, Blepharidopterus spp., z.B. Blepharidopterus angulatus, Camylomma spp., z.B. Camylomma verbasci, Deraeocoris spp., Macrolophus spp., z.B. Macrolophus caliginosus, in Kulturen wie z.B. Baumwolle, Kernobst, Steinobst, Gemüse, Zierpflanzen, Coniferen und Gewürze.

Besonders bevorzugt aus der Familie der Baumwanzen (Pentatomidae): Arma spp., Podisus spp., z.B. Podisus maculiventris, in Kulturen wie z.B. Kernobst, Steinobst, Gemüse, Zierpflanzen, Coniferen und Gewürze.

Besonders bevorzugt aus der Familie der Sichelwanzen (Nabidae): Nabis spp., z.B. Nabis apterus, in Kulturen wie z.B. Kernobst, Steinobst, Gemüse, Zierpflanzen, Coniferen und Gewürze.

Besonders bevorzugt aus der Familie der Raubwanzen (Reduviidae): Empicornis vagabundus, Reduvius personatus, Rhinocoris spp., in Kulturen wie z.B. Kernobst, Steinobst, Gemüse, Zierpflanzen, Coniferen und Gewürze.

Besonders bevorzugt aus der Familie der Raupenfliegen (Tachinidae): Bessa fugax, Cyzenius albicans, Compsileura concinnata, Elodia tragica, Exorista larvarum, Lyphia dubia, in Kulturen wie z.B. Kernobst, Steinobst, Gemüse, Zierpflanzen, Coniferen und Gewürze.

Besonders bevorzugt aus der Familie der Schwebfliegen (Syrphidae): Dasysyrphus spp., Episyrphus balteatus, Melangyna triangulata, Melanostoma spp., Metasyrphus spp., Platycheirus spp., Syrphus spp., in Kulturen wie z.B. Kernobst, Steinobst, Gemüse, Zierpflanzen, Coniferen und Gewürze.

Besonders bevorzugt aus der Familie der Gallmücken (Cecidomyiidae): Aphidoletes aphidimyza, Feltiella acarisuga, in Kulturen wie z.B. Kernobst, Steinobst, Gemüse, Zierpflanzen, Coniferen und Gewürze.

Besonders bevorzugt aus der Familie der Raubmilben (Phytoseidae): Amblyseius spp., Thyphlodromus spp., Phytoseiulus spp., in Kulturen wie Kernobst, Steinobst, Gemüse, Zierpflanzen und Gewürze.

Die erfindungsgemäßen Wirkstoffkombinationen (Mischungen) sowie die erfindungsgemäßen Mischungs-Nützlings-Kombinationen eignen sich bei guter Pflanzenverträglichkeit, günstiger Warmblütertoxizität und guter Umweltverträglichkeit zum Schutz von Pflanzen und Pflanzenorganen, zur Steigerung der Ernteerträge, Verbesserung der Qualität des Erntegutes und zur Bekämpfung von tierischen Schädlingen, insbesondere Insekten, Spinnentieren, Helminthen, Nematoden und Mollusken, die in der Landwirtschaft, im Gartenbau, bei der Tierzucht, in Forsten, in Gärten und Freizeiteinrichtungen, im Vorrats- und Materialschutz sowie auf dem Hygienesektor vorkommen. Sie können vorzugsweise als Pflanzenschutzmittel eingesetzt werden. Sie sind gegen normal sensible und resistente Arten sowie gegen alle oder einzelne Entwicklungsstadien wirksam.

Zu den oben erwähnten Schädlingen gehören:

Schädlinge aus dem Stamm: Arthropoda, insbesondere aus der Unterklasse der Acari, z.B. Acarus spp., Aceria sheldoni, Aculops spp., Aculus spp., Amblyomma spp., Amphitetranychus viennensis, Argas spp., Boophilus spp., Brevipalpus spp., Bryobia praetiosa, Chorioptes spp., Dermanyssus gallinae, Dermatophagoides pteronyssinus, Dermatophagoides farinae, Dermacentor spp., Eotetranychus spp., Epitrimerus pyri, Eutetranychus spp., Eriophyes spp., Halotydeus destructor, Hemitarsonemus spp., Hyalomma spp., Ixodes spp., Metatetranychus spp., Nuphersa spp., Oligonychus spp., Ornithodorus spp., Ornithonyssus spp., Panonychus spp., Phyllocoptruta oleivora, Polyphagotarsonemus latus, Psoroptes spp., Rhipicephalus spp., Rhizoglyphus spp., Sarcoptes spp., Steneotarsonemus spp., Steneotarsonemus spinki, Tarsonemus spp., Tetranychus spp., Vasates lycopersici.

Aus der Ordnung der Homoptera, insbesondere aus der Familie der Aleyrodidae, z.B. Aleyrodes proletella, Aleurolobus barodensis Aleurothrixus floccosus, Bemisia tabaci, Dialeurodes citri, Parabemisia myricae, Siphoninus phillyreae, Trialeurodes vaporariorum und aus der Familie der Psyllidae, z.B. Acizzia acaciaebaileyanae, Acizzia dodonaeae, Acizzia uncatoides, Agonoscena spp., Allocaridara malayensis, Arytainilla spp., Blastopsylla occidentalis, Boreioglycaspis melaleucae, Cacopsylla spp., Cryptoneossa spp., Ctenarytaina spp., Diaphorina citri, Eucalyptolyma spp., Euphyllura spp., Glycaspis spp., Heteropsylla cubana, Heteropsylla spinulosa, Pachypsylla spp., Prosopidopsylla flava, Psyllopsis spp., Psylla spp. und Tetragonocephela spp..

Aus der Ordnung der Thysanoptera, insbesondere aus der Familie der Thriphidae, z.B. Anaphothrips obscurus, Baliothrips biformis, Drepanothrips reuteri, Frankliniella spp., Heliothrips spp., Hercinothrips femoralis, Rhipiphorothrips cruentatus, Scirtothrips spp., Taeniothrips cardamomi und Thrips spp..

Aus der Ordnung der Diptera, insbesondere aus der Familie der Agromyzidae, z.B. Agromyza spp., Liriomyza spp., und Tipula spp.

in einjährigen Kulturen wie z.B. Gemüse, Melonen, Zierpflanzen, Mais, Soja, Baumwolle aber auch in mehrjährigen Pflanzen, wie z.B. Zitrus, Kern- und Steinobst, Gewürze, Coniferen und andere Zierpflanzen sowie im Forst.

Die nur allgemein beschriebenen zu schützenden Kulturen sind im Folgenden differenziert und näher spezifiziert. So versteht man hinsichtlich der Anwendung unter Gemüse z.B. Fruchtgemüse und Blütenstände als Gemüse, beispielsweise Paprika, Peperoni, Tomaten, Auberginen, Gurken, Kürbisse, Zucchini, Ackerbohnen, Stangenbohnen, Erbsen, Artischocken; aber auch Blattgemüse, beispielsweise Kopfsalat, Chicoree, Endivien, Kressen, Rauken, Feldsalat, Eisbergsalat, Lauch, Spinat, Mangold;
weiterhin Knollen-, Wurzel- und Stengelgemüse, beispielsweise Sellerie, Rote Beete, Möhren, Radieschen, Meerrettich, Schwarzwurzeln, Spargel, Speiserüben, Palmsprossen, Bambussprossen, außerdem Zwiebelgemüse, beispielsweise Zwiebeln, Lauch, Fenchel, Knoblauch.

Hinsichtlich der Anwendung versteht man unter mehrjährigen Kulturen Zitrus, wie beispielsweise Orangen, Grapefruits, Mandarinen, Zitronen, Limetten, Bitterorangen, Kumquats, Satsumas;
aber auch Kernobst, wie beispielsweise Äpfel, Birnen und Quitten und Steinobst, wie beispielsweise Pfirsiche, Nektarinen, Kirschen, Pflaumen, Zwetschgen, Aprikosen;
weiterhin Wein, Hopfen, Oliven, Tee und tropische Kulturen, wie beispielsweise Mangos, Papayas, Feigen, Ananas, Datteln, Bananen, Durians (Stinkfrüchte), Kakis, Kokosnüsse, Kakao, Kaffee, Avocados, Litschies, Maracujas, Guaven, Palmen
außerdem Mandeln und Nüsse wie beispielsweise Haselnüsse, Walnüsse, Pistazien, Cashewnüsse, Paranüsse, Pekannüsse, Butternüsse, Kastanien, Hickorynüsse, Macadamiannüsse, Erdnüsse,
darüber hinaus auch Beerenfrüchte wie beispielsweise Johannisbeeren, Stachelbeeren, Himbeeren, Brombeeren, Heidelbeeren, Erdbeeren, Preiselbeeren, Kiwis, Cranberries.

Hinsichtlich der Anwendung versteht man unter Zierpflanzen ein- und mehrjährige Pflanzen, z.B. Schnittblumen wie beispielsweise Rosen, Nelken, Gerbera, Lilien, Margeriten, Chrysanthemen, Tulpen, Narzissen, Anemonen, Mohn, Amarillis, Dahlien, Azaleen, Malven,
aber auch z.B. Beetpflanzen, Topfpflanzen und Stauden, wie beispielsweise Rosen, Tagetes, Stiefmütterchen, Geranien, Fuchsien, Hibiscus, Chrysanthemen, Fleißige Lieschen, Alpenveilchen, Ursambaraveilchen, Sonnenblumen, Begonien,
ferner z.B. Sträucher und Koniferen wie beispielsweise Ficus, Rhododendron, Fichten, Tannen, Kiefern, Eiben, Wacholder, Pinien, Oleander.

Hinsichtlich der Anwendung versteht man unter Gewürzen ein- und mehrjährige Pflanzen wie beispielsweise Anis, Chilli, Paprika, Pfeffer, Vanille, Majoran, Thymian, Gewürznelken, Wacholderbeeren, Zimt, Estragon, Koryander, Safran, Ingwer.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder

Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffkombinationen bzw. den Mischungs-Nützlings-Kombinationen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injizieren und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wird (Genetic Modified Organisms) und deren Teile behandelt. Der Begriff "Teile" bzw. "Teile von Pflanzen" oder "Pflanzenteile" wird oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Tabak, Raps sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete)

Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Erfindungsgemäß können alle Pflanzen und Pflanzenteile behandelt werden. Unter Pflanzen versteht man alle Pflanzen und Pflanzenpopulationen wie erwünschte und unerwünschte wilde Pflanzen, Sorten und Pflanzenvarietäten (egal, ob diese durch Pflanzensortenschutzrechte oder Pflanzenzüchterrecht geschützt werden können oder nicht). Sorten und Pflanzenvarietäten können Pflanzen sein, die mit traditionellen Vermehrungs- und Züchtungsmethoden erhalten werden, welche durch eine oder mehrere biotechnologische Methoden, wie zum Beispiel die Verwendung von Doppelhaploiden, Protoplastenfusion, zufälliger und gerichteter Mutagenese, molekularen oder genetischen Markern, oder durch Bioengineering-Methoden und gentechnische Methoden unterstützt oder ergänzt werden können. Unter Pflanzenteilen versteht man alle oberirdischen und unterirdischen Teile und Organe der Pflanzen wie Sproß, Blatt, Blüte und Wurzel, wobei beispielhaft Blätter, Nadeln, Stängel, Stämme, Blüten, Fruchtkörper, Früchte und Saatgut sowie Wurzeln, Knollen und Rhizome aufgeführt werden. Erntegut und vegetatives und generatives Vermehrungsmaterial, zum Beispiel Stecklinge, Knollen, Rhizome, Ableger und Saatgut, zählen ebenfalls zu den Pflanzenteilen.

Unter den Pflanzen, die nach dem erfindungsgemäßen Verfahren geschützt werden können, sind zu nennen: Hauptfeldfruchtarten wie Mais, Sojabohne, Baumwolle, *Brassica*-Ölsaaten wie *Brassica napus* (z.B. Canola), *Brassica rapa, B. juncea* (z.B. Senf) und *Brassica carinata,* Reis, Weizen, Zuckerrübe, Zuckerrohr, Hafer, Roggen, Gerste, Hirse, Triticale, Flax, Rebe und verschiedene Früchte und Gemüse aus verschiedenen botanischen Taxa wie *Rosaceae sp.* (zum Beispiel Kernobst wie Äpfel und Birnen, jedoch auch Steinobst wie Aprikosen, Kirschen, Mandeln und Pfirsiche, Beerenfrüchte wie Erdbeeren), *Ribesioidae sp., Juglandaceae sp., Betulaceae sp., Anacardiaceae sp., Pagaceae sp., Moraceae sp., Oleaceae sp., Actinidaceae sp., Lauraceae sp., Musaceae sp.* (zum Beispiel Bananenbäume und -plantagen), *Rubiaceae sp.* (zum Beispiel Kaffee), *Theaceae sp., Sterculiceae sp., Rutaceae sp.* (zum Beispiel Zitronen, Orangen und Grapefruit); *Solanaceae sp.* (zum Beispiel Tomaten, Kartoffeln, Paprika, Aubergine), *Liliaceae sp., Compositiae sp.* (zum Beispiel Salat, Artichoke und Cichorum - darunter Wurzel Cichorie, Endivie oder Gemeine Wegwarte), *Umbelliferae sp.* (zum Beispiel Karotte, Petersilie, Stauden- und Wurzelsellerie), *Cucurbitaceae sp.* (zum Beispiel Gurke - darunter Einlegegurke, Sommerkürbis, Wassermelone, Kürbisse und Melonen), *Alliaceae sp.* (zum Beispiel Zwiebel und Lauch), *Cruciferae sp.* (zum Beispiel Weißkohl, Rotkohl, Brokkoli, Blumenkohl, Rosenkohl, Pakchoi, Kohlrabi, Radieschen/Rettich, Meerrettich, Kresse, Chinakohl), *Leguminosae sp.* (zum Beispiel Erdnüsse, Erbsen und Bohnen - wie Stangenbohnen und Dicke Bohnen), *Chenopodiaceae sp.* (zum Beispiel Mangold, Beißkohl, Spinat, Rote Rüben), *Malvaceae* (zum Beispiel Okra), *Asparagaceae* (zum Beispiel Spargel); gartenbauliche Kulturen und Forstkulturen; Zierpflanzen; sowie genetisch modifizierte Homologe dieser Kulturpflanzen.

Das erfindungsgemäße Behandlungsverfahren kann bei der Behandlung von genetisch modifizierten Organismen (GMOs), z.B. Pflanzen oder Samen, verwendet werden. Bei genetisch modifizierten Pflanzen (oder transgenen Pflanzen) handelt es sich um Pflanzen, bei denen ein heterologes Gen stabil in das Genom eingebaut wurde. Der Ausdruck "heterologes Gen" bedeutet im wesentlichen ein Gen, das außerhalb der Pflanze bereitgestellt oder assembliert wird und das, wenn es in das Zellkerngenom, das Chloroplastengenom oder das Mitochondriengenom eingeführt wird, der transformierten Pflanze neue oder verbesserte agronomische oder sonstige Merkmale verleiht, und zwar dadurch, dass es ein Protein oder Polypeptid von Interesse exprimiert oder dass es ein anderes Gen, das in der Pflanze vorliegt, bzw. andere Gene, die in der Pflanze vorliegen, herunterreguliert oder abschaltet (zum Beispiel mittels Antisense-Technologie, Cosuppressionstechnologie oder RNA-Interferenz-Technologie (RNAi-Technologie)). Ein heterologes Gen, das sich in dem Genom befindet, wird auch als Transgen bezeichnet. Ein Transgen, das durch seine bestimmte Lage in dem Pflanzengenom definiert ist, wird Transformations-Event oder transgenes Event genannt.

In Abhängigkeit von den Pflanzenarten oder Pflanzensorten, ihrem Standort und ihren Wachstumsbedingungen (Böden, Klima, Vegetationsperiode, Ernährung) kann die erfindungsgemäße Behandlung auch zu überadditiven ("synergistischen") Effekten führen. So sind zum Beispiel die folgenden Effekte möglich, die über die eigentlich zu erwartenden Effekte hinausgehen: verringerte Aufwandmengen und/oder erweitertes Wirkungsspektrum und/oder erhöhte Wirksamkeit der Wirkstoffe und Zusammensetzungen, die erfindungsgemäß eingesetzt werden können, besseres Pflanzenwachstum, erhöhte Toleranz gegenüber hohen oder niedrigen Temperaturen, erhöhte Toleranz gegenüber Trockenheit oder Wasser- oder Bodensalzgehalt, erhöhte Blühleistung, Ernteerleichterung, Reifebeschleunigung, höhere Erträge, größere Früchte, größere Pflanzenhöhe, intensivere grüne Farbe des Blatts, frühere Blüte, höhere Qualität und/oder höherer Nährwert der Ernteprodukte, höhere Zuckerkonzentration in den Früchten, bessere Lagerfähigkeit und/oder Verarbeitbarkeit der Ernteprodukte.

In gewissen Aufwandmengen können die erfindungsgemäßen Wirkstoffkombinationen auch eine stärkende Wirkung auf Pflanzen ausüben. Sie eignen sich daher für die Mobilisierung des pflanzlichen Abwehrsystems gegen Angriff durch unerwünschte Mikroorganismen. Dies kann gegebenenfalls einer der Gründe für die erhöhte Wirksamkeit der erfindungsgemäßen Kombinationen sein, zum Beispiel gegen Pilze. Pflanzenstärkende (resistenzinduzierende) Substanzen sollen im vorliegenden Zusammenhang auch solche Substanzen oder Substanzkombinationen bedeuten, die fähig sind, das pflanzliche Abwehrsystem so zu stimulieren, dass die behandelten Pflanzen, wenn sie im Anschluß

daran mit unerwünschten Mikroorganismen inokkuliert werden, einen beträchtlichen Resistenzgrad gegen diese Mikroorganismen aufweisen. Im vorliegenden Fall versteht man unter unerwünschten Mikroorganismen phytopathogene Pilze, Bakterien und Viren. Die erfindungsgemäßen Substanzen lassen sich daher zum Schutz von Pflanzen gegen Angriff durch die oben erwähnten Pathogene innerhalb eines gewissen Zeitraums nach der Behandlung einsetzen. Der Zeitraum, über den eine Schutzwirkung erzielt wird, erstreckt sich im allgemeinen von 1 bis 10 Tagen, vorzugsweise 1 bis 7 Tagen, nach der Behandlung der Pflanzen mit den Wirkstoffen.

Zu Pflanzen und Pflanzensorten, die vorzugsweise erfindungsgemäß behandelt werden, zählen alle Pflanzen, die über Erbgut verfügen, das diesen Pflanzen besonders vorteilhafte, nützliche Merkmale verleiht (egal, ob dies durch Züchtung und/oder Biotechnologie erzielt wurde).

Pflanzen und Pflanzensorten, die ebenfalls vorzugsweise erfindungsgemäß behandelt werden, sind gegen einen oder mehrere biotische Streßfaktoren resistent, d. h. diese Pflanzen weisen eine verbesserte Abwehr gegen tierische und mikrobielle Schädlinge wie Nematoden, Insekten, Milben, phytopathogene Pilze, Bakterien, Viren und/oder Viroide auf.

Beispiele für nematodenresistente Pflanzen sind zum Beispiel in den US-Patentanmeldungen Nr. 11/765,491, 11/765,494, 10/926,819, 10/782,020, 12/032,479, 10/783,417, 10/782,096, 11/657,964, 12/192,904, 11/396,808, 12/166,253, 12/166,239, 12/166,124, 12/166,209, 11/762,886, 12/364,335, 11/763,947, 12/252,453, 12/209,354, 12/491,396 oder 12/497,221 beschrieben.

Pflanzen und Pflanzensorten, die ebenfalls erfindungsgemäß behandelt werden können, sind solche Pflanzen, die gegen einen oder mehrere abiotische Streßfaktoren resistent sind. Zu den abiotischen Streßbedingungen können zum Beispiel Dürre, Kälte- und Hitzebedingungen, osmotischer Streß, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen oder Vermeidung von Schatten zählen.

Pflanzen und Pflanzensorten, die ebenfalls erfindungsgemäß behandelt werden können, sind solche Pflanzen, die durch erhöhte Ertragseigenschaften gekennzeichnet sind. Ein erhöhter Ertrag kann bei diesen Pflanzen z. B. auf verbesserter Pflanzenphysiologie, verbessertem Pflanzenwuchs und verbesserter Pflanzenentwicklung, wie Wasserverwertungseffizienz, Wasserhalteeffizienz, verbesserter Stickstoffverwertung, erhöhter Kohlenstoffassimilation, verbesserter Photosynthese, verstärkter Keimkraft und beschleunigter Abreife beruhen. Der Ertrag kann weiterhin durch eine verbesserte Pflanzenarchitektur (unter Streß- und nicht-Streß-Bedingungen) beeinflußt werden, darunter frühe Blüte, Kontrolle der Blüte für die Produktion von Hybridsaatgut, Keimpflanzenwüchsigkeit, Pflanzengröße, Internodienzahl und -abstand, Wurzelwachstum, Samengröße, Fruchtgröße, Schotengröße, Schoten- oder Ährenzahl, Anzahl der Samen pro Schote oder Ähre, Samenmasse, verstärkte Samenfüllung, verringerter Samenausfall, verringertes Schotenplatzen sowie Standfestigkeit. Zu weiteren Ertragsmerkmalen zählen Samenzusammensetzung wie Kohlenhydratgehalt, Proteingehalt, Ölgehalt und Ölzusammensetzung, Nährwert, Verringerung der nährwidrigen Verbindungen, verbesserte Verarbeitbarkeit und verbesserte Lagerfähigkeit.

Beispiele für Pflanzen mit den obengenannten Merkmalen sind in Tabelle A aufgelistet, die jedoch nicht allumfassend ist.

Pflanzen, die erfindungsgemäß behandelt werden können, sind Hybridpflanzen, die bereits die Eigenschaften der Heterosis bzw. des Hybrideffekts exprimieren, was im allgemeinen zu höherem Ertrag, höherer Wüchsigkeit, besserer Gesundheit und besserer Resistenz gegen biotische und abiotische Streßfaktoren führt. Solche Pflanzen werden typischerweise dadurch erzeugt, dass man eine ingezüchtete pollensterile Elternlinie (den weiblichen Kreuzungspartner) mit einer anderen ingezüchteten pollenfertilen Elternlinie (dem männlichen Kreuzungspartner) kreuzt. Das Hybridsaatgut wird typischerweise von den pollensterilen Pflanzen geerntet und an Vermehrer verkauft. Pollensterile Pflanzen können manchmal (z. B. beim Mais) durch Entfahnen, d. h. mechanisches Entfernen der männlichen Geschlechtsorgane (bzw. der männlichen Blüten), produziert werden; es ist jedoch üblicher, dass die Pollensterilität auf genetischen Determinanten im Pflanzengenom beruht. In diesem Fall, insbesondere dann, wenn es sich bei dem gewünschten Produkt, das man von den Hybridpflanzen ernten will, um die Samen handelt, ist es üblicherweise günstig, sicherzustellen, dass die Pollenfertilität in Hybridpflanzen völlig restoriert wird. Dies kann erreicht werden, indem sichergestellt wird, dass die männlichen Kreuzungspartner entsprechende Fertilitätsrestorergene besitzen, die in der Lage sind, die Pollenfertilität in Hybridpflanzen, die die genetischen Determinanten, die für die Pollensterilität verantwortlich sind, enthalten, zu restorieren. Genetische Determinanten für Pollensterilität können im Cytoplasma lokalisiert sein. Beispiele für cytoplasmatische Pollensterilität (CMS) wurden zum Beispiel für Brassica-Arten beschrieben (WO 92/05251, WO 95/09910, WO 98/27806, WO 05/002324, WO 06/021972 und US 6,229,072). Genetische Determinanten für Pollensterilität können jedoch auch im Zellkerngenom lokalisiert sein. Pollensterile Pflanzen können auch mit Methoden der pflanzlichen Biotechnologie, wie Gentechnik, erhalten werden. Ein besonders günstiges Mittel zur Erzeugung von pollensterilen Pflanzen ist in WO 89/10396 beschrieben, wobei zum Beispiel eine Ribonuklease wie eine Barnase selektiv in den Tapetumzellen in den Staubblättern exprimiert wird. Die Fertilität kann dann durch Expression eines Ribonukleasehemmers wie Barstar in den Tapetumzellen restoriert werden (z. B. WO 91/02069).

Pflanzen oder Pflanzensorten (die mit Methoden der Pflanzenbiotechnologie, wie der Gentechnik, erhalten

werden), die erfindungsgemäß behandelt werden können, sind herbizidtolerante Pflanzen, d. h. Pflanzen, die gegenüber einem oder mehreren vorgegebenen Herbiziden tolerant gemacht worden sind. Solche Pflanzen können entweder durch genetische Transformation oder durch Selektion von Pflanzen, die eine Mutation enthalten, die solch eine Herbizidtoleranz verleiht, erhalten werden.

Herbizidresistente Pflanzen sind zum Beispiel glyphosatetolerante Pflanzen, d. h. Pflanzen, die gegenüber dem Herbizid Glyphosate oder dessen Salzen tolerant gemacht worden sind. Pflanzen können auf verschiedene Weisen glyphosatetolerant gemacht werden. So können zum Beispiel glyphosatetolerante Pflanzen durch Transformation der Pflanze mit einem Gen, das für das Enzym 5-Enolpyruvylshikimat-3-phosphatsynthase (EPSPS) kodiert, erhalten werden. Beispiele für solche EPSPS-Gene sind das AroA-Gen (Mutante CT7) des Bakterium *Salmonella typhimurium* (Comai et al., Science (1983), 221, 370-371), das CP4-Gen des Bakteriums *Agrobacterium sp.* (Barry et al., Curr. Topics Plant Physiol. (1992), 7, 139-145), die Gene, die für eine EPSPS aus der Petunie (Shah et al., Science (1986), 233, 478-481), für eine EPSPS aus der Tomate (Gasser et al., J. Biol. Chem. (1988), 263, 4280-4289) oder für eine EPSPS aus Eleusine (WO 01/66704) kodieren. Es kann sich auch um eine mutierte EPSPS handeln, wie sie zum Beispiel in EP 0837944, WO 00/66746, WO 00/66747 oder WO 02/26995 beschrieben ist. Glyphosatetolerante Pflanzen können auch dadurch erhalten werden, dass man ein Gen exprimiert, das für ein Glyphosate-Oxidoreduktase-Enzym, wie es in US-Patenten Nr. 5,776,760 und 5,463,175 beschrieben ist, kodiert. Glyphosatetolerante Pflanzen können auch dadurch erhalten werden, dass man ein Gen exprimiert, das für ein Glyphosate-acetyltransferase-Enzym, wie es in z. B. WO 02/036782, WO 03/092360, WO 05/012515 und WO 07/024782 beschrieben ist, kodiert. Glyphosatetolerante Pflanzen können auch dadurch erhalten werden, dass man Pflanzen, die natürlich vorkommende Mutationen der oben erwähnten Gene, wie sie zum Beispiel in WO 01/024615 oder WO 03/013226 beschrieben sind, enthalten, selektiert. Pflanzen, die eine Glyphosatetoleranz vermittelnde EPSPS-Gene exprimieren, sind zum Beispiel in den US-Patentanmeldungen Nr. 11/517,991, 10/739,610, 12/139,408, 12/352,532, 11/312,866, 11/315,678, 12/421,292, 11/400,598, 11/651,752, 11/681,285, 11/605,824, 12/468,205, 11/760,570, 11/762,526, 11/769,327, 11/769,255, 11/943801 oder 12/362,774 beschrieben. Pflanzen, die andere eine Glyphosatetoleranz vermittelnde Gene enthalten, wie Decarboxylase-Gene, sind zum Beispiel in den US-Patentanmeldungen Nr. 11/588,811, 11/185,342, 12/364,724, 11/185,560 oder 12/423,926 beschrieben.

Sonstige herbizidresistente Pflanzen sind zum Beispiel Pflanzen, die gegenüber Herbiziden, die das Enzym Glutaminsynthase hemmen, wie Bialaphos, Phosphinothricin oder Glufosinate, tolerant gemacht worden sind. Solche Pflanzen können dadurch erhalten werden, dass man ein Enzym exprimiert, das das Herbizid oder eine Mutante des Enzyms Glutaminsynthase, das gegenüber Hemmung resistent ist, entgiftet, zum Beispiel beschrieben in der US-Patentanmeldung Nr. 11/760,602. Solch ein wirksames entgiftendes Enzym ist zum Beispiel ein Enzym, das für eine Phosphinotricin-acetyltransferase kodiert (wie zum Beispiel das bar- oder pat-Protein aus Streptomyces-Arten). Pflanzen, die eine exogene Phosphinothricin-acetyltransferase exprimieren, sind zum Beispiel in den US-Patenten Nr. 5,561,236; 5,648,477; 5,646,024; 5,273,894; 5,637,489; 5,276,268; 5,739,082; 5,908,810 und 7,112,665 beschrieben.

Weitere herbizidtolerante Pflanzen sind auch Pflanzen, die gegenüber den Herbiziden, die das Enzym Hydroxyphenylpyruvatdioxygenase (HPPD) hemmen, tolerant gemacht worden sind. Bei HPPD handelt es sich um ein Enzym, das die Reaktion, in der para-Hydroxyphenylpyruvat (HPP) zu Homogentisat umgesetzt wird, katalysiert. Pflanzen, die gegenüber HPPD-Hemmern tolerant sind, können mit einem Gen, das für ein natürlich vorkommendes resistentes HPPD-Enzym kodiert, oder einem Gen, das für ein mutiertes oder chimäres HPPD-Enzym gemäß WO 96/38567, WO 99/24585 und WO 99/24586 kodiert, transformiert werden. Eine Toleranz gegenüber HPPD-Hemmern kann auch dadurch erzielt werden, dass man Pflanzen mit Genen transformiert, die für gewisse Enzyme kodieren, die die Bildung von Homogentisat trotz Hemmung des nativen HPPD-Enzyms durch den HPPD-Hemmer ermöglichen. Solche Pflanzen und Gene sind in WO 99/34008 und WO 02/36787 beschrieben. Die Toleranz von Pflanzen gegenüber HPPD-Hemmern kann auch dadurch verbessert werden, dass man Pflanzen zusätzlich zu einem Gen, das für ein HPPD-tolerantes Enzym kodiert, mit einem Gen transformiert, das für ein Enzym mit Prephenatdehydrogenase-Aktivität (PDH-Aktivität) kodiert, wie dies in WO 2004/024928 beschrieben ist. Außerdem können Pflanzen dadurch toleranter gegenüber HPPD-Hemmer-Herbiziden gemacht werden, dass man ihrem Genom ein Gen hinzufügt, welches ein Enzym kodiert, das zur Metabolisierung oder zum Abbau von HPPD-Hemmern, wie den in WO 2007/103567 und WO 2008/150473 gezeigten CYP450-Enzymen, befähigt ist.

Noch weitere herbizidresistente Pflanzen sind Pflanzen, die gegenüber Acetolactatsynthase (ALS)-Hemmern tolerant gemacht worden sind. Zu bekannten ALS-Hemmern zählen zum Beispiel Sulfonylharnstoff, Imidazolinon, Triazolopyrimidine, Pyrimidinyloxy(thio)benzoate und/oder Sulfonylaminocarbonyltriazolinon-Herbizide. Es ist bekannt, dass verschiedene Mutationen im Enzym ALS (auch als AcetohydroxysäureSynthase, AHAS, bekannt) eine Toleranz gegenüber unterschiedlichen Herbiziden bzw. Gruppen von Herbiziden verleihen, wie dies zum Beispiel bei Tranel und Wright, Weed Science (2002), 50, 700-712, jedoch auch in den US-Patenten Nr. 5,605,011, 5,378,824, 5,141,870 und 5,013,659, beschrieben ist. Die Herstellung von sulfonylharnstofftoleranten Pflanzen und imidazolinontoleranten Pflanzen ist in den US-Patenten Nr. 5,605,011; 5,013,659; 5,141,870; 5,767,361; 5,731,180; 5,304,732; 4,761,373; 5,331,107; 5,928,937; und 5,378,824; sowie in der internationalen Veröffentlichung WO 96/33270 beschrieben. Weitere imidazolinontolerante Pflanzen sind auch in z. B. WO 2004/040012, WO 2004/106529, WO 2005/020673, WO 2005/093093, WO 2006/007373, WO 2006/015376, WO 2006/024351 und WO 2006/060634 beschrieben. Weitere sulfonylharnstoff- und imidazolinontolerante Pflanzen sind auch in z.B. WO 07/024782 und in der US-Patentanmeldung Nr. 61/288958 beschrieben.

Weitere Pflanzen, die gegenüber Imidazolinon und/oder Sulfonylharnstoff tolerant sind, können durch induzierte Mutagenese, Selektion in Zellkulturen in Gegenwart des Herbizids oder durch Mutationszüchtung erhalten werden, wie dies zum Beispiel für die Sojabohne in dem US-Patent Nr. 5,084,082, für Reis in WO 97/41218, für die Zuckerrübe in dem US-Patent Nr. 5,773,702 und WO 99/057965, für Salat in dem US-Patent 5,198,599 oder für die Sonnenblume in WO 01/065922 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind insektenresistente transgene Pflanzen, d.h. Pflanzen, die gegen Befall mit gewissen Zielinsekten resistent gemacht wurden. Solche Pflanzen können durch genetische Transformation oder durch Selektion von Pflanzen, die eine Mutation enthalten, die solch eine Insektenresistenz verleiht, erhalten werden.

Der Begriff "insektenresistente transgene Pflanze" umfaßt im vorliegenden Zusammenhang jegliche Pflanze, die mindestens ein Transgen enthält, das eine Kodiersequenz umfaßt, die für folgendes kodiert:

1) ein insektizides Kristallprotein aus *Bacillus thuringiensis* oder einen insektiziden Teil davon, wie die insektiziden Kristallproteine, die von Crickmore et al., Microbiology and Molecular Biology Reviews (1998), 62, 807-813, von Crickmore et al. (2005) in der Bacillus thuringiensis-Toxinnomenklatur aktualisiert, online bei: http://www.lifesci.sussex.ac.uk/Home/Neil_Crickmore/Bt/), zusammengestellt wurden, oder insektizide Teile davon, z.B. Proteine der Cry-Proteinklassen Cry1Ab, Cry1Ac, Cry1B, Cry1C, Cry1D, Cry1F, Cry2Ab, Cry3Aa oder Cry3Bb oder insektizide Teile davon (z.B. EP-A 1999141 und WO 2007/107302), oder derartige von synthetischen Genen kodierte Proteine, wie zum Beispiel in und der US-Patentanmeldung Nr. 12/249,016 beschrieben; oder

2) ein Kristallprotein aus *Bacillus thuringiensis* oder einen Teil davon, der in Gegenwart eines zweiten, anderen Kristallproteins als *Bacillus thuringiensis* oder eines Teils davon insektizid wirkt, wie das binäre Toxin, das aus den Kristallproteinen Cry34 und Cry35 (Moellenbeck et al., Nat. Biotechnol. (2001), 19, 668-72; Schnepf et al., Applied Environm. Microbiol. (2006), 71, 1765-1774) besteht, oder das binäre Toxin, das aus dem Cry1A- oder Cry1F-Protein und dem Cry2Aa- oder Cry2Ab- oder Cry2Ae-Protein besteht (US-Patentanmeldung Nr. 12/214,022 und EP 08010791.5) besteht; oder

3) ein insektizides Hybridprotein, das Teile von zwei unterschiedlichen insektiziden Kristallproteinen aus *Bacillus thuringiensis* umfaßt, wie zum Beispiel ein Hybrid aus den Proteinen von 1) oben oder ein Hybrid aus den Proteinen von 2) oben, z. B. das Protein Cry1A.105, das von dem Mais-Event MON89034 produziert wird (WO 2007/027777); oder

4) ein Protein gemäß einem der Punkte 1) bis 3) oben, wobei einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der betroffenen Zielinsektenarten zu erweitern und/oder wegen Veränderungen, die in die Kodier-DNA während der Klonierung oder Transformation induziert wurden, wie das Protein Cry3Bb1 in Mais-Events MON863 oder MON88017 oder das Protein Cry3A im Mais-Event MIR604; oder

5) ein insektizides sezerniertes Protein aus *Bacillus thuringiensis* oder *Bacillus cereus* oder einen insektiziden Teil davon, wie die vegetativ wirkenden insektiziden Proteine (vegetative insecticidal proteins, VIP), die unter http://www.lifesci.sussex.ac.uk/home/Neil_Crickmore/Bt/vip.html angeführt sind, z. B. Proteine der Proteinklasse VIP3Aa; oder

6) ein sezerniertes Protein aus *Bacillus thuringiensis* oder *Bacillus cereus,* das in Gegenwart eines zweiten sezernierten Proteins aus *Bacillus thuringiensis* oder *B. cereus* insektizid wirkt, wie das binäre Toxin, das aus den Proteinen VIP1A und VIP2A besteht (WO 94/21795) oder

7) ein insektizides Hybridprotein, das Teile von verschiedenen sezernierten Proteinen von *Bacillus thuringiensis* oder *Bacillus cereus* umfaßt, wie ein Hybrid der Proteine von 1) oder ein Hybrid der Proteine von 2) oben; oder

8) ein Protein gemäß einem der Punkte 5) bis 7) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der betroffenen Zielinsektenart zu erweitern und/oder wegen Veränderungen,

die in die Kodier- DNA während der Klonierung oder Transformation eingeführt wurden (wobei die Kodierung für ein insektizides Protein erhalten bleibt), wie das Protein VIP3Aa im Baumwoll-Event COT 102; oder

9) ein sezerniertes Protein aus *Bacillus thuringiensis* oder *Bacillus cereus,* das in Gegenwart eines Kristallproteins aus *Bacillus thuringiensis* insektizid wirkt, wie das binäre Toxin, das aus VIP3 und Cry1A oder Cry1F besteht (US-Patentanmeldungen Nr. 61/126083 und 61/195019), oder das binäre Toxin, das aus dem Protein VIP3 und den Proteinen Cry2Aa oder Cry2Ab oder Cry2Ae besteht (US-Patentanmeldung Nr. 12/214,022 und EP 08010791.5); oder

10) ein Protein gemäß 9) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen, und/oder um das Spektrum der betroffenen Zielinsektenart zu erweitern, und/oder wegen Veränderungen, die in die Kodier-DNA während der Klonierung oder Transformation eingeführt wurden (wobei die Codierung für eine insektizides Protein erhalten bleibt).

Natürlich zählt zu den insektenresistenten transgenen Pflanzen im vorliegenden Zusammenhang auch jegliche Pflanze, die eine Kombination von Genen umfaßt, die für die Proteine von einer der oben genannten Klassen 1 bis 10 kodieren. In einer Ausführungsform enthält eine insektenresistente Pflanze mehr als ein Transgen, das für ein Protein nach einer der oben genannten Klassen 1 bis 10 kodiert, um das Spektrum der betroffenen Zielinsektenarten zu erweitern wenn verschiedene Proteine, die auf verschiedene Zielinsektenarten abzielen, verwendet werden, oder um die Entwicklung einer Resistenz der Insekten gegen die Pflanzen dadurch hinauszuzögern, dass man verschiedene Proteine einsetzt, die für dieselbe Zielinsektenart insektizid sind, jedoch eine unterschiedliche Wirkungsweise, wie Bindung an unterschiedliche Rezeptorbindungsstellen im Insekt, aufweisen.

Eine "insektenresistente transgene Pflanze" beinhaltet im vorliegenden Zusammenhang weiterhin jegliche Pflanze, die mindestens ein Transgen enthält, welches eine Sequenz umfasst, die bei Expression eine doppelsträngige RNA produziert, welche bei Aufnahme durch ein Pflanzenschädlingsinsekt das Wachstum dieses Schädlingsinsekts hemmt, wie dies z.B. in WO 2007/080126, WO 2006/129204, WO 2007/074405, WO 2007/080127 und WO 2007/035650 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind gegenüber abiotischen Streßfaktoren tolerant. Solche Pflanzen können durch genetische Transformation oder durch Selektion von Pflanzen, die eine Mutation enthalten, die solch eine Streßresistenz verleiht, erhalten werden. Zu besonders nützlichen Pflanzen mit Streßtoleranz zählen folgende:

1) Pflanzen, die ein Transgen enthalten, das die Expression und/oder Aktivität des Gens für die Poly(ADP-ribose)polymerase (PARP) in den Pflanzenzellen oder Pflanzen zu reduzieren vermag, wie dies in WO 00/04173, WO/2006/045633, EP 04077984.5 oder EP 06009836.5 beschrieben ist.

2) Pflanzen, die ein streßtoleranzförderndes Transgen enthalten, das die Expression und/oder Aktivität der für PARG kodierenden Gene der Pflanzen oder Pflanzenzellen zu reduzieren vermag, wie dies z.B. in WO 2004/090140 beschrieben ist;

3) Pflanzen, die ein streßtoleranzförderndes Transgen enthalten, das für ein in Pflanzen funktionelles Enzym des Nicotinamidadenindinukleotid-Salvage-Biosynthesewegs kodiert, darunter Nicotinamidase, Nicotinatphosphoribosyltransferase, Nicotinsäuremononukleotidadenyltransferase, Nicotinamidadenindinukleotidsynthetase oder Nicotinamidphosphoribosyltransferase, wie dies z. B. in der EP 04077624.7, WO 2006/133827, PCT/EP07/002433, EP 1999263 oder WO 2007/107326 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, weisen eine veränderte Menge, Qualität und/oder Lagerfähigkeit des Ernteprodukts und/oder veränderte Eigenschaften von bestimmten Bestandteilen des Ernteprodukts auf, wie zum Beispiel:

1) Transgene Pflanzen, die eine modifizierte Stärke synthetisieren, die bezüglich ihrer chemisch-physikalischen Eigenschaften, insbesondere des Amylosegehalts oder des Amylose/Amylopektin-Verhältnisses, des Verzweigungsgrads, der durchschnittlichen Kettenlänge, der Verteilung der Seitenketten, des Viskositätsverhaltens, der Gelfestigkeit, der Stärkekorngröße und/oder Stärkekornmorphologie im Vergleich mit der synthetisierten Stärke in Wildtyppflanzenzellen oder -pflanzen verändert ist, so dass sich diese modifizierte Stärke besser für bestimmte

Anwendungen eignet. Diese transgenen Pflanzen, die eine modifizierte Stärke synthetisieren, sind zum Beispiel in EP 0571427, WO 95/04826, EP 0719338, WO 96/15248, WO 96/19581, WO 96/27674, WO 97/11188, WO 97/26362, WO 97/32985, WO 97/42328, WO 97/44472, WO 97/45545, WO 98/27212, WO 98/40503, WO 99/58688, WO 99/58690, WO 99/58654, WO 00/08184, WO 00/08185, WO 00/08175, WO 00/28052, WO 00/77229, WO 01/12782, WO 01/12826, WO 02/101059, WO 03/071860, WO 2004/056999, WO 2005/030942, WO 2005/030941, WO 2005/095632, WO 2005/095617, WO 2005/095619, WO 2005/095618, WO 2005/123927, WO 2006/018319, WO 2006/103107, WO 2006/108702, WO 2007/009823, WO 00/22140, WO 2006/063862, WO 2006/072603, WO 02/034923, EP 06090134.5, EP 06090228.5, EP 06090227.7, EP 07090007.1, EP 07090009.7, WO 01/14569, WO 02/79410, WO 03/33540, WO 2004/078983, WO 01/19975, WO 95/26407, WO 96/34968, WO 98/20145, WO 99/12950, WO 99/66050, WO 99/53072, US 6,734,341, WO 00/11192, WO 98/22604, WO 98/32326, WO 01/98509, WO 01/98509, WO 2005/002359, US 5,824,790, US 6,013,861, WO 94/04693, WO 94/09144, WO 94/11520, WO 95/35026 bzw. WO 97/20936 beschrieben.

2) Transgene Pflanzen, die Nichtstärkekohlenhydratpolymere synthetisieren, oder Nichtstärkekohlenhydratpolymere, deren Eigenschaften im Vergleich zu Wildtyppflanzen ohne genetische Modifikation verändert sind. Beispiele sind Pflanzen, die Polyfructose, insbesondere des Inulin- und Levantyps, produzieren, wie dies in EP 0663956, WO 96/01904, WO 96/21023, WO 98/39460 und WO 99/24593 beschrieben ist, Pflanzen, die alpha-1,4-Glucane produzieren, wie dies in WO 95/31553, US 2002031826, US 6,284,479, US 5,712,107, WO 97/47806, WO 97/47807, WO 97/47808 und WO 00/14249 beschrieben ist, Pflanzen, die alpha-1,6-verzweigte alpha-1,4-Glucane produzieren, wie dies in WO 00/73422 beschrieben ist, und Pflanzen, die Alternan produzieren, wie dies in WO 00/47727, WO 00/73422, EP 06077301.7, US 5,908,975 und EP 0728213 beschrieben ist.

3) Transgene Pflanzen, die Hyaluronan produzieren, wie dies zum Beispiel in WO 2006/032538, WO 2007/039314, WO 2007/039315, WO 2007/039316, JP 2006304779 und WO 2005/012529 beschrieben ist.

4) Transgene Pflanzen oder Hybridpflanzen, wie Zwiebeln mit Merkmalen wie 'hoher Gehalt an löslichen Feststoffen', 'milde' (low pungency, ist gleich LP) und/oder 'Langzeitlagerung' (long storage, ist gleich LS), wie dies in den US-Patentanmeldungen Nr. 12/020,360 und 61/054,026 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Baumwollpflanzen mit veränderten Fasereigenschaften. Solche Pflanzen können durch genetische Transformation oder durch Selektion von Pflanzen, die eine Mutation enthalten, die solche veränderten Fasereigenschaften verleiht, erhalten werden; dazu zählen:

a) Pflanzen wie Baumwollpflanzen, die eine veränderte Form von Cellulosesynthasegenen enthalten, wie dies in WO 98/00549 beschrieben ist,

b) Pflanzen wie Baumwollpflanzen, die eine veränderte Form von rsw2- oder rsw3-homologen Nukleinsäuren enthalten, wie dies in WO 2004/053219 beschrieben ist;

c) Pflanzen wie Baumwollpflanzen mit einer erhöhten Expression der Saccharosephosphatsynthase, wie dies in WO 01/17333 beschrieben ist;

d) Pflanzen wie Baumwollpflanzen mit einer erhöhten Expression der Saccharosesynthase, wie dies in WO 02/45485 beschrieben ist;

e) Pflanzen wie Baumwollpflanzen bei denen der Zeitpunkt der Durchlaßsteuerung der Plasmodesmen an der Basis der Faserzelle verändert ist, z. B. durch Herunterregulieren der faserselektiven β-1,3-Glucanase, wie dies in WO 2005/017157, oder wie in der EP 08075514.3 oder in der US-Patentanmeldung Nr. 61/128,938 beschrieben ist;

f) Pflanzen wie Baumwollpflanzen mit Fasern mit veränderter Reaktivität, z. B. durch Expression des N-Acetylglucosamintransferasegens, darunter auch nodC, und von Chitinsynthasegenen, wie dies in WO 2006/136351 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Raps oder verwandte *Brassica*-Pflanzen mit veränderten Eigenschaften der Ölzusammensetzung. Solche Pflanzen können durch genetische Transformation oder durch Selektion von Pflanzen, die eine Mutation enthalten, die solche veränderten Öleigenschaften

verleiht, erhalten werden; dazu zählen:

a) Pflanzen wie Rapspflanzen, die Öl mit einem hohen Ölsäuregehalt produzieren, wie dies zum Beispiel in US 5,969,169, US 5,840,946 oder US 6,323,392 oder US 6,063, 947 beschrieben ist;

b) Pflanzen wie Rapspflanzen, die Öl mit einem niedrigen Linolensäuregehalt produzieren, wie dies in US 6,270,828, US 6,169,190 oder US 5,965,755 beschrieben ist.

c) Pflanzen wie Rapspflanzen, die Öl mit einem niedrigen gesättigten Fettsäuregehalt produzieren, wie dies z. B. in US 5,434,283 oder US-Patentanmeldung Nr. 12/668303 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Raps oder verwandte *Brassica*-Pflanzen mit veränderten Samenstreuungseigenschaften. Solche Pflanzen können durch genetische Transformation oder durch Selektion von Pflanzen, die eine Mutation enthalten, die solche veränderten Samenstreuungseigenschaften verleihen, erhalten werden; dazu zählen Rapspflanzen mit verzögerter oder verringerter Samenstreuung, wie dies in der US-Patentanmeldung Nr. 61/135,230, WO09/068313 und WO10/006732 beschrieben ist.

Besonders nützliche transgene Pflanzen, die erfindungsgemäß behandelt werden können, sind Pflanzen, die Transformations-Events, oder Kombination von Transformations-Events, enthalten und für die Anmeldungen in den Vereinigten Staaten von Amerika beim Animal and Plant Health Inspection Service (APHIS) des United States Department of Agriculture (USDA) auf Deregulierung vorliegen, egal, ob solche Anträge genehmigt wurden oder noch bearbeitet werden. Diese Information ist jeder Zeit leicht von APHIS erhältlich, (4700 River Road Riverdale, MD 20737, USA) zum Beispiel auf der Website (URL http://www.aphis.usda.gov/brs/not_reg.html). Zum Einreichdatum der vorliegenden Anmeldung handelte es sich bei den Anträgen auf Deregulierung, die bei APHIS bearbeitet wurden oder von APHIS genehmigt wurden, um diejenigen, die in Tabelle B aufgelistet sind, wobei diese Tabelle die folgende Information enthält:

- Antrag: Identifikationsnummer des Antrags. Technische Beschreibungen der Transformations-Events finden sich in den einzelnen Antragsdokumenten, die von APHIS durch Bezug auf diese Antragsnummer erhältlich sind, zum Beispiel auf der APHIS-Website. Die Beschreibungen werden in den folgenden Text hiermit durch Bezugnahme aufgenommen.
- Erweiterung eines Antrags: Bezugnahme auf einen früheren Antrag, für den eine Erweiterung beantragt wird.
- Institution: Name des Antragstellers.
- Gegenstand der Regulation: die jeweilige Pflanzenart.
- Transgener Phänotyp: das den Pflanzen durch das Transformations-Event vermittelte Merkmal.
- Transformations-Event oder Linie: Name des bzw. der Events (manchmal auch als Linie(n) bezeichnet), für das Deregulation beantragt wird.
- APHIS-Dokumente: verschiedene von APHIS in Bezug auf den Antrag veröffentlichte Dokumente, die von APHIS erhältlich sind.

Zusätzliche besonders nützliche Pflanzen, die einzelne Transformations-Events oder eine Kombination von Transformations-Events enthalten, sind zum Beispiel in den Datenbanken von verschiedenen nationalen oder regionalen Behörden angeführt (siehe zum Beispiel http://gmoinfo.jrc.it/gmp browse.aspx und http://cera-gmc.org/index.php?evidcode=&hstIDXCode=&gType=&AbbrCode=&atCode=&stCode=&coIDC ode=&action=gm_crop_database&mode=Submit).

Zu weiteren besonderen transgenen Pflanzen zählen Pflanzen, die ein Transgen in einer agronomisch neutralen oder vorteilhaften Stellung enthalten, wie dies in beliebigen Patentveröffentlichungen, die in Tabelle C aufgelistet sind, beschrieben ist.

Bei einer besonders bevorzugten Variante wird das erfindungsgemäße Verfahren für die Behandlung von transgenen Gemüse-, Baumwoll- und Sojabohnensorten verwendet.

**Tabelle A:**

Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php.

| Nr. | Transgenes Event | Unternehmen | Beschreibung | Kulturpflanze |
|---|---|---|---|---|
| A-1 | ASR368 | Scotts Seeds | Glyphosate -Toleranz, die durch Insertieren eines modifizierten, für die 5-Enolpyruvylshikimat-3-phosphatsynthase (EPSPS) codierenden Gens aus Agrobacterium tumefaciens, Kreuzungspartner B99061, erhalten wurde. | *Agrostis stolonifera Weißes Straußgras* |
| A-2 | Asr-368 | | Glyphosate-Toleranz; US 2006-162007 | Straußgras |
| A-3 | H7-1 | Monsanto Company | Zuckerrübe mit Toleranz für das Herbizid Glyphosate; Erzeugung durch Insertieren eines Gens für das Enzym 5-Enolypyruvylshikimat-3-phosphatsynthase (EPSPS) aus dem Agrobacterium tumefaciens Stamm CP4; WO 2004-074492 | *Beta vulgaris* |
| A-4 | T120-7 | Bayer Crop-Science (Aventis Crop-Science (AgrEvo)) | Einführen des Gens für die PPT-Acetyltransferase (PAT) aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. | *Beta vulgaris* |
| A-5 | GTSB77 | Novartis Seeds; Monsanto Company | Zuckerrübe mit Toleranz für das Herbizid Glyphosate; Erzeugung durch Insertieren eines Gens für das Enzym 5-Enolypyruvylshikimat-3-phosphatsynthase (EPSPS) aus dem Agrobacterium tumefaciens-Stamm CP4. | *Beta vulgaris* (*Zuckerrübe*) |
| A-6 | T227-1 | | Glyphosate-Toleranz; US 2004-117870 | *Beta vulgaris* Zuckerrübe |
| A-7 | 23-18-17, 23-198 | Monsanto Company (früher Calgene) | Canola-Raps mit hohem Laurinsäure-(12:0) und Myristinsäure- (14:0)-Gehalt; Erzeugung durch Insertieren eines Gens für Thioesterase aus dem Kalifornischen Lorbeer (Umbellularia californica). | *Brassica napus* (Argentinischer Canola-Raps) |
| A-8 | 45A37, 46A40 | Pioneer Hi-Bred International Inc. | Canola-Raps mit hohem Ölsäure- und niedrigem Linolensäuregehalt ; Erzeugung durch eine Kombination von chemischer Mutagenese für die Selektion auf eine Fettsäuredesaturase-Mutante mit erhöhtem Ölsäuregehalt und traditionelle Rückkreuzung zur Einführung des Merkmals niedriger Linolensäuregehalt. | *Brassica napus* (Argentinischer Canola-Raps) |
| A-9 | 46A12, 46A16 | Pioneer Hi-Bred International Inc. | Kombination von chemischer Mutagenese zur Erzeugung des Merkmals hoher Ölsäuregehalt und traditioneller Züchtung mit eingetragenen Canola-Rapssorten. | *Brassica napus* (Argentinischer Canola-Raps) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-10 | GT200 | Monsanto Company | Canola-Raps mit Toleranz für das Herbizid Glyphosate; Erzeugung durch Insertieren von Genen für die Enzyme 5-Enolypyruvylshikimat-3-phosphatsynthase (EPSPS) aus dem Agrobacterium tumefaciens-Stamm CP4 und Glyphosate-Oxidase aus Ochrobactrum anthropi. | *Brassica napus* (Argentinischer Canola-Raps) |
| A-11 | GT73, RT73 | Monsanto Company | Canola-Raps mit Toleranz für das Herbizid Glyphosate; Erzeugung durch Insertieren von Genen für die Enzyme 5-Enolypyruvylshikimat-3-phosphatsynthase (EPSPS) aus dem Agrobacterium tumefaciens-Stamm CP4 und Glyphosate-Oxidase aus Ochrobactrum anthropi. | *Brassica napus* (Argentinischer Canola-Raps) |
| A-12 | HCN10 | Aventis CropScience | Einführen des Gens für die PPT-Acetyltransferase (PAT) aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. | *Brassica napus* (Argentinischer Canola-Raps) |
| A-13 | HCN92 | Bayer Crop-Science (Aventis CropScience (AgrEvo)) | Einführen des Gens für die PPT-Acetyltransferase (PAT) aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. | *Brassica napus* (Argentinischer Canola-Raps) |
| A-14 | MS1, RF1 =>PGS1 | Aventis CropScience (formerly Plant Genetic Systems) | Pollensterilitäts/Fertilitätsrestorations/Bestäubungs- kontrollsystem mit Toleranz für das Herbizid Glufosinate. Die MS -Linien enthielten das Barnase Gen aus Bacillus amyloliquefaciens, die RF-Linien enthielten das Barstar-Gen aus demselben Bakterium, und beide Linien enthielten das Gen für die Phosphinothricin-N-acetyltransferase (PAT) aus Streptomyces hygroscopicus. | *Brassica napus* (Argentinischer Canola-Raps) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-15 | MS1, RF2 =>PGS2 | Aventis CropScience (früher Plant Genetic Systems) | Pollensterilitäts/Fertilitätsrestorations/Bestäubungs- kontrollsystem mit Toleranz für das Herbizid Glufosinate. Die MS -Linien enthielten das Barnase Gen aus Bacillus amyloliquefaciens, die RF-Linien enthielten das Barstar-Gen aus demselben Bakterium, und beide Linien enthielten das Gen für die Phosphinothricin-N-acetyltransferase (PAT) aus Streptomyces hygroscopicus. | *Brassica napus* (Argentinischer Canola-Raps) |
| A-16 | MS8xRF3 | Bayer CropScience (Aventis CropScience (AgrEvo)) | Pollensterilitäts/Fertilitätsrestorations/Bestäubungs- kontrollsystem mit Toleranz für das Herbizid Glufosinate. Die MS -Linien enthielten das Barnase Gen aus Bacillus amyloliquefaciens, die RF-Linien enthielten das Barstar-Gen aus demselben Bakterium, und beide Linien enthielten das Gen für die Phosphinothricin-N-acetyltransferase (PAT) aus Streptomyces hygroscopicus. | *Brassica napus* (Argentinischer Canola-Raps) |
| A-17 | MS-B2 | | Pollensterilität; WO 01/31042 | *Brassica napus* (Argentinischer Canola-Raps) |
| A-18 | MS-BN1/RF-BN1 | | Pollensterilität/Restoration; WO 01/41558 | *Brassica napus* (Argentinischer Canola-Raps) |
| A-19 | NS738, NS1471, NS1473 | Pioneer HiBred International Inc. | Selektion von somaclonal Varianten mit veränderten Acetolactatsynthase (ALS) -Enzymen und anschließende chemische Mutagenese. Zwei Linien (P1, P2) mit Modifikationen an verschiedenen, nicht gekoppelten Loci wurden ursprünglich selektiert. NS738 enthält nur die P2 Mutation. | *Brassica napus* (Argentinischer Canola-Raps) |
| A-20 | OXY-235 | Aventis CropScience (formerly Rhône Poulenc Inc.) | Toleranz für die Herbizide Bromoxynil und loxynil durch Einbau des Nitrilase-Gens aus Klebsiella pneumoniae. | *Brassica napus* (Argentinischer Canola-Raps) |
| A-21 | PHY14, PHY35 | Aventis CropScience (früher Plant Genetic Systems) | Erzeugung der Pollensterilität mittels Insertion des Barnase-Ribonucleasegens aus Bacillus amyloliquefaciens; Restoration Fertilität durch Insertieren des Barstar-RNase-Hemmers; PPT-Resistenz durch PPT-Acetyltransferase (PAT) aus Streptomyces hygroscopicus. | *Brassica napus* (Argentinischer Canola-Raps) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-22 | PHY36 | Aventis CropScience (früher Plant Genetic Systems) | Erzeugung der Pollensterilität mittels Insertion des Barnase-Ribonucleasegens aus Bacillus amyloliquefaciens; Restoration Fertilität durch Insertieren des Barstar-RNase-Hemmers; PPT-Acetyltransferase (PAT) aus Streptomyces hygroscopicus. | *Brassica napus* (Argentinischer Canola-Raps) |
| A-23 | RT73 | | Glyphosate-Resistenz; WO 02/36831 | *Brassica napus* (Argentinischer Canola-Raps) |
| A-24 | T45 (HCN28) | Bayer Crop-Science (Aventis CropScience (AgrEvo)) | Einführen des für die PPT-Acetyltransferase (PAT) codierenden Gens aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. | *Brassica napus* (Argentinischer Canola-Raps) |
| A-25 | HCR-1 | Bayer Crop Science (Aventis CropScience (AgrEvo)) | Einführung des Merkmals Toleranz für das Herbizid Glufosinate-Ammonium aus der transgenen B. napus-Linie T45. Dieses Merkmal wird von dem Gen für die Phosphinothricinacetyltransferase (PAT) aus S. viridochromogenes vermittelt. | *Brassica rapa* (Polnischer Canola-Raps) |
| A-26 | ZSR500/502 | Monsanto Company | Einführung einer modifizierten 5-Enolpyruvylshikimat-3-phosphatsynthase (EPSPS) und eines Gens aus Achromobacter sp., das Glyphosate durch Umwandlung in Aminomethylphosphonsäure (AMPA) und Glyoxylate abbaut, mittels Artkreuzung mit GT73. | *Brassica rapa* (Polnischer Canola-Raps) |
| A-27 | EE-1 | | Insektenresistenz (CrylAc); WO 2007/091277 | Aubergine |
| A-28 | 55-1 /63-1 | Cornell University | Gegen das Papaya-Ringspot-Virus (PRSV) resistente Papaya, die durch Insertion der für das Hüllprotein (CP) codierenden Sequenzen von diesem Pflanzen-Potyvirus erzeugt wurde. | *Carica papaya* (Papaya) |
| A-29 | RM3-3, RM3-4, RM3-6 | Bejo Zaden BV | Erzeugung der Pollensterilität mittels Insertion des Barnase-Ribonucleasegens aus Bacillus amyloliquefaciens; die PPT-Resistenz mittels dem bar-Gen aus S. hygroscopicus, das für das PAT-Enzym codiert. | *Cichorium intybus* (Chicoree) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-30 | A, B | Agritope Inc. | Verringerte Akkumulation von S-Adenosylmethionin (SAM), und daher verringerte Ethylensynthese, durch Einführung des für die S-Adenosylmethioninhydrolase codierenden Gens. | *Cucumis melo* (Melone) |
| A-31 | CZW-3 | Asgrow (USA); Seminis Vegetable Inc. (Canada) | Gegen das Gurkenmosaikvirus (CMV), das Zucchini- Yellows Mosaic-Virus (ZYMV) und das Wassermelonenmosaikvirus (WMV) 2 resistenter Kürbis ( Curcurbita pepo); Erzeugung durch Insertieren der für das Hüllprotein (CP) codierenden Sequenzen von jedem dieser Pflanzenviren in das Wirtsgenom. | *Cucurbita pepo* (Kürbis) |
| A-32 | ZW20 | Upjohn (USA); Seminis Vegetable Inc. (Canada) | Gegen das Zucchini-Yellows Mosaic-Virus (ZYMV) und das Wassermelonenmosaik-Virus (WMV) 2 resistenter Kürbis ( Curcurbita pepo); Erzeugung durch Insertieren der für das Hüllprotein (CP) codierenden Sequenzen von jedem dieser Pflanzenpotyviren in das Wirtsgenom. | *Cucurbita pepo* (Kürbis) |
| A-33 | 66 | Florigene Pty Ltd. | Gegen Sulfonylharnstoffherbizide tolerante Nelken mit verzögerter Seneszenz; Erzeugung durch Insertieren einer verkürzten Kopie des Gens für die Aminocyclopropancyclase (ACC)-Synthase aus der Nelke zwecks Unterdrückung der Expression des endogenen nichtmodifizierten Gens, das für die normale Ethylenbiosynthese erforderlich ist. Die Toleranz für Sulfonylharnstoffherbizide wurde durch Einführung einer chlorsulfurontoleranten Version des Gens für die Acetolactatsynthase (ALS) aus Tabak erzeugt. | *Dianthus caryophyllus* (Nelke) |
| A-34 | 4,11,15,16 | Florigene Pty Ltd. | Gegen Sulfonylharnstoffherbizide tolerante Nelken mit modifizierter Farbe, die dadurch erzeugt wurden, dass zwei Anthocyaninbiosynthesegene insertiert wurden, deren Expression zu einer violett/malvenfarbenen Färbung führt. Die Toleranz für Sulfonylharnstoffherbizide wurde durch Einführung einer chlorsulfurontoleranten Version des Gens für die Acetolactatsynthase (ALS) aus Tabak erzeugt. | *Dianthus caryophyllus* (Nelke) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-35 | 959A, 988A, 1226A, 1351A, 1363A, 1400A | Florigene Pty Ltd. | Einführung von zwei Anthocyaninbiosynthesegenen, die zu einer violett/malvenfarbenen Färbung führt; Einführung einer Variante der Acetolactatsynthase (ALS). | *Dianthus caryophyllus* (Nelke) |
| A-36 | 3560.4.3.5 | | Glyphosate/ALS-Hemmer-Toleranz; WO 2008002872 | *Glycine max* L. (Soj abohne) |
| A-37 | A2704-12 | | Glufosinate-Toleranz; WO 2006/108674 | *Glycine max* L. (Sojabohne) |
| A-38 | A2704-12, A2704-21, A5547-35 | Aventis CropScience | Sojabohne mit Toleranz für Glufosinate-Ammonium- Herbizide; Erzeugung durch Insertieren eines modifizierten Gens für die Phosphinothricin- acetyltransferase (PAT) aus dem Bodenbakterium Streptomyces viridochromogenes. | *Glycine max* L. (Sojabohne) |
| A-39 | A5547-127 | Bayer CropScience (Aventis CropScience (AgrEvo)) | Sojabohne mit Toleranz für Glufosinate-Ammonium- Herbizide; Erzeugung durch Insertieren eines modifizierten Gens für die Phosphinothricin- acetyltransferase (PAT) aus dem Bodenbakterium Streptomyces viridochromogenes. | *Glycine max* L. (Sojabohne) |
| A-40 | A5547-35 | | Glufosinate-Toleranz; WO 2006/108675 | *Glycine max* L. (Sojabohne) |
| A-41 | DP-305423-1 | | Hoher Ölsäuregehalt / ALS-Hemmer-Toleranz; WO 2008/054747 | *Glycine max* L. (Sojabohne) |
| A-42 | DP356043 | Pioneer Hi-Bred International Inc. | Sojabohnen-Event mit zwei Herbizidtoleranzgenen: Glyphosate-N-acetyltransferase, die Glyphosate entgiftet, sowie eine modifizierte Acetolactatsynthase (A | *Glycine max* L. (Sojabohne) |
| A-43 | G94-1, G94-19, G168 | DuPont Canada Agricultural Products | Sojabohne mit hohem Ölsäuregehalt; Erzeugung durch Insertieren einer zweiten Kopie des Gens für eine Fettsäuredesaturase (GmFad2-1) aus der Sojabohne, was zu einem "Abschalten" des endogenen Wirtsgens führte. | *Glycine max* L. (Sojabohne) |
| A-44 | GTS 40-3-2 | Monsanto Company | Glyphosate-tolerante Sojabohnensorte; Erzeugung durch Insertieren eines modifizierten Gens für die 5-Enolpyruvylshikimat-3-phosphatsynthase (EPSPS) aus dem Bodenbakterium Agrobacterium tumefaciens. | *Glycine max* L. (Sojabohne) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-45 | GU262 | Bayer CropScience (Aventis CropScience (AgrEvo)) | Sojabohne mit Toleranz für Glufosinate-Ammonium- Herbizide ; Erzeugung durch Insertieren eines modifizierten Gens für die Phosphinothricin- acetyltransferase (PAT) aus dem Bodenbakterium Streptomyces viridochromogenes. | *Glycine max* L. (Sojabohne) |
| A-46 | MON87701 | | Insektenresistenz (CrylAc); WO 2009064652 | *Glycine max* L. (Sojabohne) |
| A-47 | MON87705 | | veränderte Fettsäurespiegel (mittlere Ölsäure und niedrig gesättigt); WO 2010037016 | *Glycine max* L. (Soj abohne) |
| A-48 | MON87754 | | erhöhter Ölgehalt; WO 2010024976 | *Glycine max* L. (Sojabohne) |
| A-49 | MON87769 | | Stearidonsäure (SDA) enthaltendes Öl; WO 2009102873 | *Glycine max* L. (Sojabohne) |
| A-50 | MON89788 | Monsanto Company | Glyphosate-tolerante Sojabohnensorte; Erzeugung durch Insertieren eines modifizierten aroA (epsps)-Gens für die 5-Enolpyruvylshikimat-3-phosphat- synthase (EPSPS) aus dem Agrobacterium tumefaciens CP4; WO 2006130436 | *Glycine max* L. (Sojabohne) |
| A-51 | OT96-15 | Agriculture & Agri-Food Canada | Sojabohne mit niedrigem Linolensäuregehalt; Erzeugung durch traditionelle Kreuzung zwecks Einbau des neuen Merkmals aus einer natürlich vorkommenden fanl-Genmutante, die auf niedrigen Linolensäuregehalt selektriert worden war. | *Glycine max* L. (Sojabohne) |
| A-52 | W62, W98 | Bayer CropScience (Aventis CropScience (AgrEvo)) | Sojabohne mit Toleranz für Glufosinate-Ammonium- Herbizide ; Erzeugung durch Insertieren eines modifizierten Gens für die Phosphinothricin- acetyltransferase (PAT) aus dem Bodenbakterium Streptomyces hygroscopicus. | *Glycine max* L. (Sojabohne) |
| A-53 | 15985 | Monsanto Company | Insektenresistente Baumwolle; Ableitung durch Transformation der Elternsorte DP50B, die Event 531 (mit Expression des CrylAc Proteins) enthielt, mit aufgereinigter Plasmid-DNA, die das cry2Ab- Gen aus B. thuringiensis subsp. Kurstaki enthielt. | *Gossypium hirsutum* L. (Baumwolle) |
| A-54 | 1143-14A | | Insektenresistenz (Cry1Ab); WO 2006/128569 | *Gossypium hirsutum* L. (Baumwolle) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-55 | 1143-51B | | Insektenresistenz (Cry1Ab); WO 2006/128570 | *Gossypium hirsutum* L. (Baumwolle) |
| A-56 | 19-51 A | DuPont Canada Agricultural Products | Einführung einer Acetolactatsynthase (ALS)-Variante. | *Gossypium hirsutum* L. (Baumwolle) |
| A-57 | 281-24-236 | DOW AgroSciences LLC | Insektenresistente Baumwolle; Erzeugung durch Insertieren des cry1F-Gens aus Bacillus thuringiensisvar. aizawai. Das Gen für die PAT aus Streptomyces viridochromogenes wurde als Selektionsmarker eingeführt. | *Gossypium hirsutum* L. (Baum-wolle) |
| A-58 | 3006-210-23 | DOW AgroSciences LLC | Insektenresistente Baumwolle; Erzeugung durch Insertieren des crylAc-Gens aus Bacillus thuringiensissubsp. kurstaki. Das Gen für die PAT aus Streptomyces viridochromogenes wurde als Selektionsmarker eingeführt. | *Gossypium hirsutum* L. (Baumwolle) |
| A-59 | 31807/31808 | Calgene Inc. | Insektenresistente Baumwolle mit Toleranz für das Herbizid Bromoxynil; Erzeugung durch Insertion des cry1Ac-Gens aus Bacillus thuringiensis und eines Gens für Nitrilase aus Klebsiella pneumoniae. | *Gossypium hirsutum* L. (Baumwolle) |
| A-60 | BXN | Calgene Inc. | Baumwolle mit Toleranz für das Herbizid Bromoxynil; Erzeugung durch Insertion eines Gens für Nitrilase aus Klebsiella pneumoniae. | *Gossypium hirsutum* L. (Baumwolle) |
| A-61 | CE43-67B | | Insektenresistenz (Cry1Ab); WO 2006/128573 | *Gossypium hirsutum* L. (Baumwolle) |
| A-62 | CE44-69D | | Insektenresistenz (Cry1Ab); WO 2006/128571 | *Gossypium hirsutum* L. (Baumwolle) |
| A-63 | CE46-02A | | Insektenresistenz (Cry1Ab); WO 2006/128572 | *Gossypium hirsutum* L. (Baumwolle) |
| A-64 | Cot102 | | Insektenresistenz (Vip3A); US 2006-130175 | *Gossypium hirsutum* L. (Baumwolle) |
| A-65 | COT102 | Syngenta Seeds, Inc. | Insektenresistente Baumwolle; Erzeugung durch Insertion des vip3A(a) Gens aus Bacillus thuringiensis AB88. Das für APH4 codierende Gen aus E. coli wurde als Selektionsmarker eingeführt. | *Gossypium hirsutum* L. (Baumwolle) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-66 | COT202 | | Insektenresistenz (VIP3A); US2009181399 | *Gossypium hirsutum* L. (Baumwolle) |
| A-67 | Cot202 | | Insektenresistenz (VIP3); US 2007-067868 | *Gossypium hirsutum* L. (Baumwolle) |
| A-68 | DAS-21023-5 x DAS-24236-5 | DOW AgroSciences LLC | WideStrike™, eine Baumwolle mit Insektenresistenzkombination; Ableitung durch traditionelles Kreuzen der Elternlinien 3006-210-23 (OECD-Bezeichnung: DAS-21023-5) und 281-24-236 (OECD-Bezeichung: DAS-24236-5). | *Gossypium hirsutum* L. (Baumwolle) |
| A-69 | DAS-21023-5 x DAS-24236-5 x MON88913 | DOW AgroSciences LLC und Pioneer HiBred International Inc. | Baumwolle mit einer Kombination von Insektenresistenz und Glyphosate-Toleranz; Erzeugung durch traditionelles Kreuzen von WideStrike-Baumwolle (OECD-Bezeichnung: DAS-21023-5 x DAS-24236-5) mit MON88913, bekannt unter der Bezeichnung RoundupReady Flex (OECD-Bezeichnung: MON-88913-8). | *Gossypium hirsutum* L. (Baumwolle) |
| A-70 | DAS-21023-5 x DAS-24236-5 x MON-Ø1445-2 | DOW AgroSciences LLC | WideStrike™/Roundup Ready®-Baumwolle, eine Baumwolle mit einer Kombination von Insektenresistenz und Glyphosate-Toleranz; Ableitung durch traditionelles Kreuzen von WideStrike-Baumwolle (OECD-Bezeichnung: DAS-21023-5 x DAS-24236-5) mit MON1445 (OECD-Bezeichnung: MON-01445-2). | *Gossypium hirsutum* L. (Baumwolle) |
| A-71 | EE-GH3 | | Glyphosate-Toleranz; WO 2007/017186 | *Gossypium hirsutum* L. (Baumwolle) |
| A-72 | EE-GH5 | | Insektenresistenz (Cry1Ab); WO 2008/122406 | *Gossypium hirsutum* L. (Baumwolle) |
| A-73 | EE-GH6 | | Insektenresistenz (cry2Ae); WO2008151780 | *Gossypium hirsutum* L. (Baumwolle) |
| A-74 | event 281-24-236 | | Insektenresistenz (Cry1F); WO 2005/103266 | *Gossypium hirsutum* L. (Baumwolle) |
| A-75 | event3006-210-23 | | Insektenresistenz (Cry1Ac); WO 2005/103266 | *Gossypium hirsutum* L. (Baumwolle) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-76 | GBH614 | Bayer CropScience (Aventis CropScience (AgrEvo)) | Baumwolle mit Toleranz für das Herbizid Glyphosate; Erzeugung durch Insertieren des 2MEPSPS-Gens in die Sorte Coker312 mittels Agrobacterium unter der Kontrolle von Ph4a748At und TpotpC. | *Gossypium hirsutum* L. (Baumwolle) |
| A-77 | LLCotton25 | Bayer CropScience (Aventis CropScience (AgrEvo)) | Baumwolle mit Toleranz gegen das Herbizid Glufosinate-Ammonium; Erzeugung durch Insertieren eines modifizierten Gens für die Phosphinothricinacetyltransferase (PAT) aus dem Bodenbakterium Streptomyces hygroscopicus; WO 2003013224 | *Gossypium hirsutum* L. (Baumwolle) |
| A-78 | LLCotton25 x MON15985 | Bayer CropScience (Aventis CropScience (AgrEvo)) | Baumwolle mit einer Kombination von Herbizidtoleranz und Insektenresistenz, bei der die Toleranz für das Herbizid Glufosinate-Ammonium aus LLCotton25 (OECD-Bezeichnung: ACS-GHØØ1-3) mit Resistenz gegen Insekten aus MON15985 (OECD-Bezeichnung: MON-15985-7) kombiniert ist. | *Gossypium hirsutum* L. (Baumwolle) |
| A-79 | MON 15985 | | Insektenresistenz (CrylA/Cry2Ab); US 2004-250317 | *Gossypium hirsutum* L. (Baumwolle) |
| A-80 | MON 1445/16 98 | Monsanto Company | Baumwolle mit Toleranz für das Herbizid Glyphosate; Erzeugung durch Insertieren einer natürlichen Glyphosat-toleranten Form des Enzyms 5-Enolpyruvylshikimat-3-phosphatsynthase (EPSPS) aus dem A. tumefaciens-Stamm CP4. | *Gossypium hirsutum* L. (Baumwolle) |
| A-81 | MON15985 x MON88913 | Monsanto Company | Baumwolle mit einer Kombination von Insektenresistenz und Glyphosate-Toleranz; Erzeugung durch traditionelles Kreuzen der Elternlinien MON88913 (OECD-Bezeichnung: MON-88913-8) und 15985 (OECD-Bezeichnung: MON-15985-7). Glyphosate-Toleranz stammt von der Linie MON88913, die zwei Gene enthält, die für das Enzym 5-Enolypyruvylshikimat-3-phosphatsynthase (EPSPS) aus dem Agrobacterium tumefaciens-Stamm CP4 codieren. Die Insektenresistenz stammt von der Linie MON15985, die durch Transformation der Elternsorte DP50B, die Event 531 (Expression des Cry1Ac-Proteins) enthielt, mit aufgereinigter Plasmid-DNA, die das cry2Ab-Gen aus B. thuringiensis subsp. kurstaki enthielt, erzeugt wurde. | *Gossypium hirsutum* L. (Baumwolle) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-82 | MON-15985-7 x MON-Ø1445-2 | Monsanto Company | Baumwolle mit einer Kombination von Insektenresistenz und Herbizidtoleranz; Erzeugung durch traditionelles Kreuzen der Elternlinien 15985 (OECD-Bezeichnung: MON-15985-7) und MON-1445 (OECD-Bezeichnung: MON-Ø1445-2). | *Gossypium hirsutum* L. (Baumwolle) |
| A-83 | MON531/757/ 1076 | Monsanto Company | Insektenresistente Baumwolle; Erzeugung durch Insertieren des cry1Ac-Gens aus Bacillus thuringiensis subsp. kurstaki HD-73 (B.t.k.). | *Gossypium hirsutum* L. (Baumwolle) |
| A-84 | MON88913 | Monsanto Company | Baumwolle mit Toleranz für das Herbizid Glyphosate; Erzeugung durch Insertieren von zwei Genen für das Enzym 5-Enolypyruvylshikimat-3-phosphatsynthase (EPSPS) aus dem Agrobacterium tumefaciens-Stamm CP4; WO 2004/072235 | *Gossypium hirsutum* L. (Baumwolle) |
| A-85 | MON-ØØ531-6 x MON-Ø1445-2 | Monsanto Company | Baumwolle mit einer Kombination von Insektenresistenz und Herbizidtoleranz; Erzeugung durch traditionelles Kreuzen der Elternlinien MON531 (OECD-Bezeichnung: MON-ØØ531-6) und MON-1445 (OECD-Bezeichnung: MON-Ø1445-2). | *Gossypium hirsutum* L. (Baumwolle) |
| A-86 | PV-GHGT07 (1445) | | Glyphosate-Toleranz; US 2004-148666 | *Gossypium hirsutum* L. (Baumwolle) |
| A-87 | T304-40 | | Insektenresistenz (Cry1Ab); WO2008/122406 | *Gossypium hirsutum* L. (Baumwolle) |
| A-88 | T342-142 | | Insektenresistenz (Cry1Ab); WO 2006/128568 | *Gossypium hirsutum* L. (Baumwolle) |
| A-89 | X81359 | BASF Inc. | Toleranz für Imidazolinonherbizide durch Selektieren auf eine natürlich vorkommende Mutante. | *Helianthus annuus* (Sonnenblume) |
| A-90 | RH44 | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Lens culinaris* (Linse) |
| A-91 | FP967 | University of Saskatchew an, Crop Dev. Centre | Eine Acetolactatsynthase (ALS)-Variante wurde von einer chlorsulfurontoleranten Linie von A. thaliana erhalten und zur Transformation von Flachs eingesetzt. | *Linum usitatissimum* L. (Flachs, Lein) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-92 | 5345 | Monsanto Company | Resistenz gegen Schadlepidopteren durch Einführen des crylAc-Gens aus Bacillus thuringiensis subsp. Kurstaki. | *Lycoper- sicon esculentum* (To mate) |
| A-93 | 8338 | Monsanto Company | Einführung einer Gensequenz, die für das Enzym 1-Aminocyclopropan-1carbonsäuredeaminase (ACCd) codiert, das die Vorstufe des Fruchtreifungshormons Ethylen metabolisiert. | *Lycoper- sicon esculentum* (To mate) |
| A-94 | 1345-4 | DNA Plant Technology Corporation | Tomaten mit verzögerter Reife wurden dadurch erzeugt, dass man eine zusätzliche Kopie eines verkürzten Gens für die 1-Aminocyclopropan-1-carbonsäure (ACC) -Synthase insertierte, was zur Herunterregulation der endogenen ACC-Synthase und zu einer verringerten Ethylenakkumulation führte. | *Lycoper- sicon esculentum* (To mate) |
| A-95 | 35 1 N | Agritope Inc. | Einführung einer Gensequenz, die für das Enzym S-Adenosylmethioninhydrolase codiert, das die Vorstufe des Fruchtreifungshormons Ethylen metabolisiert. | *Lycoper- sicon esculentum* (To mate) |
| A-96 | B, Da, F | Zeneca Seeds | Tomaten mit verzögertem Weichwerden wurden dadurch erzeugt, dass man eine verkürzte Version des Gens für die Polygalacturonase (PG) in sense- oder antisense-Orientierung insertierte, um die Expression des endogenen PG-Gens zu reduzieren und so den Pektinabbau zu reduzieren. | *Lycoper- sicon esculentum* (To mate) |
| A-97 | FLAVR SAVR | Calgene Inc. | Tomaten mit verzögertem Weichwerden wurden dadurch erzeugt, dass man eine zusätzliche Kopie des Gens für die Polygalacturonase (PG) in antisense-Orientierung insertierte, um die Expression des endogenen PG-Gens zu reduzieren und so den Pektinabbau zu reduzieren. | *Lycoper- sicon esculentum* (To mate) |
| A-98 | J101,J163 | Monsanto Company und Forage Genetics International | Eine für das Herbizid Glyphosate tolerante Luzerne wurde dadurch erzeugt, dass man ein Gen für das Enzym 5-Enolypyruvylshikimat-3-phosphatsynthase (EPSPS) aus dem Agrobacterium tumefaciens-Stamm CP4 insertierte. | *Medicago sativa* (Luzerne) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-99 | C/F/93/08-02 | Societe National d'Exploitatio n des Tabacs et Allumettes | Toleranz für die Herbizide Bromoxynil und Ioxynil durch Einbau des Nitrilasegens aus Klebsiella pneumoniae. | *Nicotiana tabacum* L. (Tabak) |
| A-100 | Vector 21-41 | Vector Tobacco Inc. | Reduzierter Nikotingehalt durch Einführung einer zweiten Kopie der Chinolinsäurephosphoribosyltransferase (QTPase) aus dem Tabak in antisense-Orientierung. Das für NPTII codierende Gen aus E. coli wurde als Selektionsmarker eingeführt, um Transformanten zu identifizieren. | *Nicotiana tabacum* L. (Tabak) |
| A-101 | CL121, CL141, CFX51 | BASF Inc. | Toleranz für das Iimidazolinonherbizid Imazethapyr wurde durch chemische Mutagenese des Enzyms Acetolactatsynthase (ALS) mittels Ethylmethansulfonat (EMS) induziert. | *Oryza sativa* (Reis) |
| A-102 | GAT-OS2 | | Glufosinate-Toleranz; WO 01/83818 | *Oryza sativa* (Reis) |
| A-103 | GAT-OS3 | | Glufosinate-Toleranz; US 2008-289060 | *Oryza sativa* (Reis) |
| A-104 | IMINTA-1, IMINTA-4 | BASF Inc. | Toleranz für Imidazolinonherbizide wurde durch chemische Mutagenese des Enzyms Acetolactatsynthase (ALS) mittels Natriumazid induziert. | *Oryza sativa* (Reis) |
| A-105 | LLRICE06, LLRICE62 | Aventis CropScience | Für das Herbizid Glufosinate-Ammonium toleranter Reis; Erzeugung durch Insertieren eines modifizierten Gens für die Phosphinothricinacetyltransferase (PAT) aus dem Bodenbakterium Streptomyces hygroscopicus). | *Oryza sativa* (Reis) |
| A-106 | LLRICE601 | Bayer CropScience (Aventis CropScience (AgrEvo)) | Für das Herbizid Glufosinate-Ammonium toleranter Reis; Erzeugung durch Insertieren eines modifizierten Gens für die Phosphinothricinacetyltransferase (PAT) aus dem Bodenbakterium Streptomyces hygroscopicus). | *Oryza sativa* (Reis) |
| A-107 | PE-7 | | Insektenresistenz (Cry1Ac); WO 2008/114282 | *Oryza sativa* (Reis) |
| A-108 | PWC16 | BASF Inc. | Toleranz für das Imidazolinon-Herbizid Imazethapyr wurde durch chemische Mutagenese des Enzyms Acetolactatsynthase (ALS) mittels Ethylmethansulfonat (EMS) induziert. | *Oryza sativa* (Reis) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-109 | TT51 | | Insektenresistenz (Cry1Ab/Cry1Ac); CN1840655 | *Oryza sativa* (Reis) |
| A-110 | C5 | United States Department of Agriculture - Agricultural Research Service | Pflaumenbaum mit Resistenz gegen das Plum-Pox-Virus (PPV), Herstellung durch Agrobacterium-vermittelte Transformation mit einem Hüllproteingen (CP) des Virus. | *Prunus domestica* (Pflaume) |
| | EH92-527 | BASF Plant Science | Erntegut-Zusammensetzung; Amflora; nur für die EU gültige Bezeichnung: BPS-25271-9 | |
| A-111 | ATBT04-6, ATBT04-27, ATBT04-30, ATBT04-31, ATBT04-36, SPBT02-5, SPBT02-7 | Monsanto Company | Kartoffelkäferresistente Kartoffeln, Erzeugung durch Insertieren des cry3A-Gens aus Bacillus thuringiensis (subsp. tenebrionis). | *Solanum tuberosum* L. (Kartoffel) |
| A-112 | BT6, BT10, BT12, BT16, BT17, BT18, BT23 | Monsanto Company | Kartoffelkäferresistente Kartoffeln, Erzeugung durch Insertieren des cry3A-Gens aus Bacillus thuringiensis (subsp. tenebrionis). | *Solanum tuberosum* L. (Kartoffel) |
| A-113 | RBMT15-101, SEMT15-02, SEMT15-15 | Monsanto Company | Kartoffeln mit Resistenz gegen den Kartoffelkäfer und das Y-Virus der Kartoffel (PVY); Erzeugung durch Insertieren des cry3A-Gens aus Bacillus thuringiensis (subsp. tenebrionis) und des PVY-Gens für das Hüllprotein. | *Solanum tuberosum* L. (Kartoffel) |
| A-114 | RBMT21-129, RBMT21-350, RBMT22-082 | Monsanto Company | Kartoffeln mit Resistenz gegen den Kartoffelkäfer und das Kartoffel-Blattrollvirus (PLRV); Erzeugung durch Insertieren des cry3A-Gens aus Bacillus thuringiensis (subsp. tenebrionis) und des PLRV-Gens für Replikase. | *Solanum tuberosum* L. (Kartoffel) |
| A-115 | AP205CL | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Triticum aestivum* (Weizen) |
| A-116 | AP602CL | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Triticum aestivum* (Weizen) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-117 | BW255-2, BW238-3 | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Triticum aestivum* (Weizen) |
| A-118 | BW7 | BASF Inc. | Toleranz gegenüber Imidazolinonherbiziden, induziert durch chemische Mutagenese des Gens für die Acetohydroxysäuresynthase (AHAS) unter Verwendung von Natriumazid. | *Triticum aestivum* (Weizen) |
| A-119 | Event 1 | | Fusarium-Resistenz (Trichothecen-3-O-cetyltransferase); CA 2561992 | *Triticum aestivum* (Weizen) |
| A-120 | JOPLIN1 | | Krankheits-(Pilz-)Resistenz (Trichothecen-3-O-acetyltransferase); US 2008064032 | *Triticum aestivum* (Weizen) |
| A-121 | MON71800 | Monsanto Company | Glyphosatetolerante Weizensorte; Erzeugung durch Insertieren eines modifizierten Gens für die 5-Enolpyruvylshikimat-3-phosphatsynthase (EPSPS) aus dem Bodenbakterium Agrobacterium tumefaciens Stamm CP4. | *Triticum aestivum* (Weizen) |
| A-122 | SWP965001 | Cyanamid Crop Protection | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Triticum aestivum* (Weizen) |
| A-123 | Teal 11A | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Triticum aestivum* (Weizen) |
| A-124 | 176 | Syngenta Seeds, Inc. | Insektenresistenter Mais; Erzeugung durch Insertieren des crylAb-Gens aus Bacillus thuringiensis subsp. kurstaki. Die genetische Modifikation vermittelt eine Resistenz gegen Schädigung durch den Maiszünsler. | *Zea mays* L. (Mais) |
| A-125 | 3272 | | Selbstverarbeitender Mais (alpha-Amylase); US 2006-230473 | *Zea mays* L. (Mais) |
| A-126 | 3751IR | Pioneer Hi-Bred International Inc. | Selektion von somaklonalen Varianten durch Embryokultur auf imidazolinonhaltigen Medien. | *Zea mays* L. (Mais) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-127 | 676, 678, 680 | Pioneer Hi-Bred International Inc. | Pollensteriler Mais mit Toleranz für das Herbizid Glufosinate-Ammonium; Erzeugung durch Insertieren von Genen für die DNA-Adeninmethylase und die Phosphinothricinacetyltransferase (PAT) aus Escherichia coli bzw. Streptomyces viridochromogenes. | *Zea mays* L. (Mais) |
| A-128 | ACS-ZMØØ3-2 x MON-ØØ81Ø-6 | Bayer CropScience (Aventis CropScience (AgrEvo)) | Maishybrid mit einer Kombination aus Insektenresistenz und Herbizidtoleranz; Ableitung durch traditionelles Kreuzen der Elternlinien T25 (OECD-Bezeichnung: ACS-ZMØØ3-2) und MON810 (OECD-Bezeichnung: MON-ØØ81Ø-6). | *Zea mays* L. (Mais) |
| A-129 | B16 | | Glufosinate-Resistenz; US 2003-126634 | *Zea mays* L. (Mais) |
| A-130 | B16 (DLL25) | Dekalb Genetics Corporation | Mais mit Toleranz für das Herbizid Glufosinate-Ammonium; Erzeugung durch Insertieren des Gens für die Phosphinothricinacetyltransferase (PAT) aus Streptomyces hygroscopicus. | *Zea mays* L. (Mais) |
| A-131 | BT11 (X4334CBR, X4734CBR) | Syngenta Seeds, Inc. | Insektenresistenter und herbizidtoleranter Mais; Erzeugung durch Insertieren des crylAb-Gens aus Bacillus thuringiensis subsp. kurstaki, und des Gens für die Phosphinothricin-N-acetyltransferase (PAT) aus S. viridochromogenes. | *Zea mays* L. (Mais) |
| A-132 | BT11 x MIR604 | Syngenta Seeds, Inc. | Mais mit einer Kombination von Insektenresistenz und Herbizidtoleranz; Erzeugung durch traditionelles Kreuzen der Elternlinien BT11 (nur für die OECD gültige Bezeichnung: SYN-BTØ11-1) und MIR604 (nur für die OECD gültige Bezeichnung: SYN-IR6Ø5-5). Die Resistenz gegen den Maiszünsler und die Toleranz für das Herbizid Glufosinate-Ammonium (Liberty) stammt von BT11, die das cry1Ab-Gen aus Bacillus thuringiensis subsp. kurstaki enthält, und das Gen für die Phosphinothricin-N-acetyltransferase (PAT) aus S. viridochromogenes. Die Resistenz gegen den Maiswurzelbohrer stammt von MIR604, die das mcry3A-Gen aus Bacillus thuringiensis enthält. | *Zea mays* L. (Mais) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-133 | BT11 x MIR604 x GA21 | Syngenta Seeds, Inc. | Mais mit einer Kombination von Insektenresistenz und Herbizidtoleranz; Erzeugung durch traditionelles Kreuzen der Elternlinien BT11 (nur für die OECD gültige Bezeichnung: SYN-BTØ11-1), MIR604 (nur für die OECD gültige Bezeichnung: SYN-IR6Ø5-5) und GA21 (nur für die OECD gültige Bezeichnung: MON-ØØØ21-9). Die Resistenz gegen den Maiszünsler und die Toleranz für das Herbizid Glufosinte-Ammonium (Liberty) stammt von BT11, die das cry1Ab-Gen aus Bacillus thuringiensis subsp. kurstaki enthält, und das Gen für die Phosphinothricin-N-acetyltransferase (PAT) aus S. viridochromogenes. Die Resistenz gegen den Maiswurzelbohrer stammt von MIR604, die das mcry3A-Gen aus Bacillus thuringiensis enthält. Die Toleranz für das Herbizid Glyphosate stammt von GA21, die ein modifiziertes EPSPS-Gen aus Mais enthält. | *Zea mays* L. (Mais) |
| A-134 | CBH-351 | Aventis CropScience | Mais mit Insektenresistenz und Toleranz für das Herbizid Glufosinate-Ammonium; Entwicklung durch Insertieren des Gens für das Cry9C-Protein aus Bacillus thuringiensis subsp. tolworthi und des Gens für die Phosphinothricinacetyltransferase (PAT) aus Streptomyces hygroscopicus. | *Zea mays* L. (Mais) |
| A-135 | DAS-06275-8 | DOW AgroSciences LLC | Maissorte mit Resistenz gegen Lepidoptereninsekten und Toleranz für das Herbizid Glufosinate-Ammonium; Erzeugung durch Insertieren des crylF-Gens aus Bacillus thuringiensis var. aizawai und der Phosphinothricinacetyltransferase (PAT) aus Streptomyces hygroscopicus. | *Zea mays* L. (Mais) |
| A-136 | DAS-59122-7 | DOW AgroSciences LLC und Pioneer Hi-Bred International Inc. | Mais mit Resistenz gegen den Maiswurzelbohrer; Erzeugung durch Insertieren des cry34Ab1- und des cry35Ab1-Gens aus dem Bacillus thuringiensis-Stamm PS149B1. Das für PAT codierende Gen aus Streptomyces viridochromogenes wurde als Selektionsmarker eingeführt,; US 2006-070139 | *Zea mays* L. (Mais) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-137 | DAS-59122-7 x NK603 | DOW AgroSciences LLC und Pioneer Hi-Bred International Inc. | Mais mit einer Kombination von Insektenresistenz und Herbizidtoleranz; Erzeugung durch traditionelles Kreuzen der Elternlinien DAS-59122-7 (nur für die OECD gültige Bezeichnung: DAS-59122-7) mit NK603 (nur für die OECD gültige Bezeichnung: MON-ØØ6Ø3-6). Die Resistenz gegen den Maiswurzelbohrer stammt von der Linie DAS-59122-7, die das cry34Ab1- und das cry35Ab1-Gen aus dem Bacillus thuringiensis-Stamm PS 149B1 enthält. Die Toleranz für das Herbizid Glyphosate stammt von NK603. | *Zea mays* L. (Mais) |
| A-138 | DAS-59122-7 x TC1507 x NK603 | DOW AgroSciences LLC und Pioneer Hi-Bred International Inc. | Mais mit einer Kombination von Insektenresistenz und Herbizidtoleranz; Erzeugung durch traditionelles Kreuzen der Elternlinien DAS-59122-7 (nur für die OECD gültige Bezeichnung: DAS-59122-7) und TC1507 (nur für die OECD gültige Bezeichnung: DAS-Ø15Ø7-1) mit NK603 (nur für die OECD gültige Bezeichnung: MON-ØØ6Ø3-6). Die Resistenz gegen den Maiswurzelbohrer stammt von der Linie DAS-59122-7, die das cry34Ab1- und das cry35Ab1-Gen aus dem Bacillus thuringiensis-Stamm PS149B1 enthält. Die Lepidopterenresistenz und die Toleranz für das Herbizid Glufosinate-Ammonium stammen von TC1507. Die Toleranz für das Herbizid Glyphosate stammt von NK603. | *Zea mays* L. (Mais) |
| A-139 | DAS-01507-1 x MON-ØØ6Ø3-6 | DOW AgroSciences LLC | Mais mit einer Kombination von Insektenresistenz und Herbizidtoleranz; Erzeugung durch traditionelles Kreuzen der Elternlinien 1507 (OECD-Bezeichnung: DAS-Ø15Ø7-1) und NK603 (OECD-Bezeichnung: MON-ØØ6Ø3-6). | *Zea mays* L. (Mais) |
| A-140 | DBT418 | Dekalb Genetics Corporation | Mais mit Insektenresistenz und Toleranz für das Herbizid Glufosinate-Ammonium; Entwicklung durch Insertieren von Genen für das CrylAC-Protein aus Bacillus thuringiensis subsp kurstaki und der Phosphinothricinacetyltransferase (PAT) aus Streptomyces hygroscopicus. | *Zea mays* L. (Mais) |
| A-141 | DK404SR | BASF Inc. | Somaklonale Varianten mit einer modifizierten Acetyl-CoA-Carboxylase (ACCase) wurden durch Embryokultur auf mit Sethoxydim angereichertem Medium selektiert. | *Zea mays* L. (Mais) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-142 | DP-098140-6 | | Glyphosate-Toleranz / ALS-Hemmer-Toleranz; WO 2008/112019 | *Zea mays* L. (Mais) |
| A-143 | DP-Ø9814Ø-6 (Event 98140) | Pioneer Hi-Bred International Inc. | Die Maislinie 98140 wurde genetisch modifiziert, das GAT4621-Protein (Glyphosateacetyltransferase) und ZM-HRA-Protein (modifizierte Mais-Version einer Acetolactatsynthase) zu exprimieren. Das GAT4621-Protein, das von dem gat4621-Gen codiert wird, vermittelt Toleranz für Glyphosate-enthaltende Herbizide durch Acetylierung von Glyphosate, wodurch dieses nichtphytotoxisch wird. Das ZM-HRA-Protein, das von dem zm-hra-Gen codiert wird, vermittelt eine Toleranz für die Herbizidklasse der ALS-Hemmer. | *Zea mays* L. (Mais) |
| A-144 | Event 3272 | Syngenta Seeds, Inc. | Maislinie, die ein hitzestabiles Alpha-Amylasegen amy797E für die Ethanolproduktion mit dem Trockenvermahlungsverfahren exprimiert. Das Phosphomannoseisomerase-Gen aus E. coli wurde als Selektionsmarker eingesetzt. | *Zea mays* L. (Mais) |
| A-145 | EXP1910IT | Syngenta Seeds, Inc. (früher Zeneca Seeds) | Eine Toleranz für das Imidazolinonherbizid Imazethapyr wurde durch chemische Mutagenese des Enzyms Acetolactatsynthase (ALS) mit Hilfe von Ethylmethansulfonat (EMS) induziert. | *Zea mays* L. (Mais) |
| A-146 | FI117 | | Glyphosate-Resistenz; US 6,040,497 | *Zea mays* L. (Mais) |
| A-147 | GA21 | Monsanto Company | Eine modifizierte 5-Enolpyruvylshikimat-3-phosphatsynthase (EPSPS), ein Enzym, das am Shikimat-Biosyntheseweg für die Bildung der aromatischen Aminosäuren beteiligt ist, wurde durch Beschuß mit der Genkanone induziert. | *Zea mays* L. (Mais) |
| A-148 | GAT-ZM1 | | Glufosinate-Toleranz; WO 01/51654 | *Zea mays* L. (Mais) |
| A-149 | GG25 | | Glyphosate-Resistenz; US 6,040,497 | *Zea mays* L. (Mais) |
| A-150 | GJ11 | | Glyphosate-Resistenz; US 6,040,497 | *Zea mays* L. (Mais) |
| A-151 | IT | Pioneer Hi-Bred International Inc. | Eine Toleranz für das Imidazolinonherbizid Imazethapyr wurde durch in-vitro-Selektion von somaklonalen Varianten erhalten. | *Zea mays* L. (Mais) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-152 | LY038 | Monsanto Company | Veränderte Aminosäurezusammensetzung, insbesondere erhöhte Lysingehalte, durch Einführung des cordapA-Gens aus Corynebacterium glutamicum, das für das Enzym Dihydrodipicolinatsynthase (cDHDPS) codiert; US 7,157,281 | *Zea mays* L. (Mais) |
| A-153 | MIR162 | | Insektenresistenz; WO 2007142840 | *Zea mays* L. (Mais) |
| A-154 | MIR604 | Syngenta Seeds, Inc. | Ein gegen den Maiswurzelbohrer resistenter Mais wurde durch Transformation mit einem modifizierten cry3A-Gen erzeugt. Das Phosphomannoseisomerase-Gen aus E.coli wurde als Selektionsmarker eingesetzt; (Cry3a055); EP 1 737 290 | *Zea mays* L. (Mais) |
| A-155 | MIR604 x GA21 | Syngenta Seeds, Inc. | Mais mit einer Kombination von Insektenresistenz und Herbizidtoleranz; Erzeugen durch traditionelles Kreuzen der Elternlinien MIR604 (nur für die OECD gültige Bezeichnung: SYN-IR6Ø5-5) und GA21 (nur für die OECD gültige Bezeichnung: MON- ØØØ21-9). Die Resistenz gegen den Maiswurzelbohrer stammt von MIR604, die mcry3A-Gen aus Bacillus thuringiensis enthält. Die Toleranz für das Herbizid Glyphosate stammt von GA21. | *Zea mays* L. (Mais) |
| A-156 | MON80100 | Monsanto Company | Insektenresistenter Mais; Erzeugung durch Insertieren des cry1Ab-Gens aus Bacillus thuringiensis subsp. kurstaki. Die genetische Modifikation vermittelt Resistenz gegen Befall durch den Maiszünsler. | *Zea mays* L. (Mais) |
| A-157 | MON802 | Monsanto Company | Mais mit Insektenresistenz und Toleranz für das Herbizid Glyphosate; Erzeugung durch Insertieren der Gene für das Cry1Ab-Protein aus Bacillus thuringiensis und die 5-Enolpyruvylshikimat-3-posphatsynthase (EPSPS) aus dem A. tumefaciens-Stamm CP4. | *Zea mays* L. (Mais) |
| A-158 | MON809 | Pioneer Hi-Bred International Inc. | Resistenz gegen den Maiszünsler (Ostrinia nubilalis) durch Einführen eines synthetischen crylAb-Gens. Glyphosate-Resistenz durch Einführen der bakteriellen Version eines pflanzlichen Enzyms, der 5-Enolpyruvylshikimat-3-phosphatsynthase (EPSPS). | *Zea mays* L. (Mais) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-159 | MON810 | Monsanto Company | Insektenresistenter Mais; Erzeugung durch Insertieren einer verkürzten Form des cry1Ab-Gens aus Bacillus thuringiensis subsp. kurstaki HD-1. Die genetische Modifikation vermittelt eine Resistenz gegen Befall durch den Maiszünsler; US 2004-180373 | *Zea mays* L. (Mais) |
| A-160 | MON810 x MON88017 | Monsanto Company | Mais mit einer Kombination von Insektenresistenz und Glyphosate-Toleranz; Erzeugung durch traditionelles Kreuzen der Elternlinien MON810 (OECD-Bezeichnung: MON-ØØ81Ø-6) und MON88017 (OECD-Bezeichnung: MON-88Ø17-3). Die Resistenz gegen den Maiszünsler stammt von einer verkürzten Form des crylAb-Gens aus Bacillus thuringiensis subsp. kurstaki HD-1, die in MON810 vorliegt. Die Resistenz gegen den Maiswurzelbohrer stammt vom cry3Bb1-Gen aus Bacillus thuringiensis subspecies kumamotoensis, Stamm EG4691, das in MON88017 vorliegt. Die Toleranz für Glyphosate stammt von einem Gen für die 5-Enolpyruvylshikimat-3-phosphatsynthase (EPSPS) aus dem Agrobacterium tumefaciens-Stamm CP4, das in MON88017 vorliegt. | *Zea mays* L. (Mais) |
| A-161 | MON832 | Monsanto Company | Einführung der Glyphosate-Oxidase (GOX) und einer modifizierten 5-Enolpyruvylshikimat-3-phosphatsynthase (EPSPS), eines Enzyms, das am Shikimat-Biosyntheseweg für die Bildung der aromatischen Aminosäuren beteiligt ist, durch Beschuß mit der Genkanone. | *Zea mays* L. (Mais) |
| A-162 | MON863 | Monsanto Company | Mais mit Resistenz gegen den Maiswurzelbohrer; Erzeugung durch Insertieren des cry3Bb1-Gens aus Bacillus thuringiensis subsp. kumamotoensis. | *Zea mays* L. (Mais) |
| A-163 | MON87460 | | Dürretoleranz; Wassermangeltoleranz; WO 2009/111263 | *Zea mays* L. (Mais) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-164 | MON88017 | Monsanto Company | Mais mit Resistenz gegen den Maiswurzelbohrer; Erzeugung durch Insertieren des cry3Bb1-Gens aus Bacillus thuringiensis subsp. Kumamotoensis, Stamm EG4691. Eine Toleranz für Glyphosate wurde dadurch erhalten, dass man ein Gen für die 5-Enolpyruvylshikimat-3-Phosphatsynthase (EPSPS) aus dem Agrobacterium tumefaciens-Stamm CP4 insertierte; WO 2005059103 | *Zea mays* L. (Mais) |
| A-165 | MON89034 | Monsanto Company | Mais-Event, das zwei unterschiedliche insektizide Proteine aus Bacillus thuringiensis, die Resistenz gegen verschiedene Schadlepigopteren vermittelt, exprimiert; Insektenresistenz (Lipidoptera -Cry1A.105-Cry2Ab); WO 2007140256 | *Zea mays* L. (Mais) |
| A-166 | MON89034 x MON88017 | Monsanto Company | Mais mit einer Kombination von Insektenresistenz und Glyphosate-Toleranz; Erzeugung durch traditionelles Kreuzen der Elternlinien MON89034 (OECD-Bezeichnung: MON-89 Ø34-3) und MON88017 (OECD-Bezeichnung: MON-88Ø17-3). Die Lepiopterenrresistenz stammt von zwei cry-Genen, die in MON89043 vorliegen. Die Resistenz gegen den Maiswurzelbohrer stammt von einem einzelnen cry-Gen, und die Toleranz für Glyphosate stammt von einem Gen für die 5-Enolpyruvylshikimat-3-phosphatsynthase (EPSPS) aus dem Agrobacterium tumefaciens, das in MON88017 vorliegt. | *Zea mays* L. (Mais) |
| A-167 | MON-ØØ6Ø3-6 x MON-ØØ81Ø-6 | Monsanto Company | Maishybrid mit einer Kombination von Insektenresistenz und Herbizidtoleranz, Erzeugung durch traditionelles Kreuzen der Elternlinien NK603 (OECD-Bezeichnung: MON-ØØ6Ø3-6) und MON810 (OECD-Bezeichnung: MON-ØØ81Ø-6). | *Zea mays* L. (Mais) |
| A-168 | MON-ØØ81Ø-6 x LY038 | Monsanto Company | Mais mit einer Kombination von Insektenresistenz und erhöhtem Lysingehalt, Erzeugung durch traditionelles Kreuzen der Elternlinien MON810 (OECD-Bezeichnung: MON-ØØ81Ø-6) und LY038 (OEC-Bezeichnung: REN-ØØØ38-3). | *Zea mays* L. (Mais) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-169 | MON-ØØ863-5 x MON-ØØ6Ø3-6 | Monsanto Company | Maishybrid mit einer Kombination von Insektenresistenz und Herbizidtoleranz, Erzeugung durch traditionelles Kreuzen der Elternlinien MON863 (OECD-Bezeichnung: MON-ØØ863-5) und NK603 (OECD-Bezeichnung: MON-ØØ6Ø3-6). | *Zea mays* L. (Mais) |
| A-170 | MON-ØØ863-5 x MON-ØØ81Ø-6 | Monsanto Company | Maishybrid mit einer Insektenresistenzkombination; Erzeugung durch traditionelles Kreuzen der Elternlinien MON863 (OECD-Bezeichnung: MON-ØØ863-5) und MON810 (OECD-Bezeichnung: MON-ØØ81Ø-6) | *Zea mays* L. (Mais) |
| A-171 | MON-ØØ863-5 x MON-ØØ81Ø-6 x MON-ØØ6Ø3-6 | Monsanto Company | Maishybrid mit einer Kombination von Insektenresistenz und Herbizidtoleranz, Erzeugung durch traditionelles Kreuzen des kombinationshaltigen Hybriden MON-ØØ863-5 x MON-ØØ81Ø-6 und NK603 (OECD-Bezeichnung: MON-ØØ6Ø3-6). | *Zea mays* L. (Mais) |
| A-172 | MON-ØØØ21-9 x MON-ØØ81Ø-6 | Monsanto Company | Maishybrid mit einer Kombination von Insektenresistenz und Herbizidtoleranz, Ableitung durch traditionelles Kreuzen der Elternlinien GA21 (OECD-Bezeichnung: MON-ØØØ21-9) und MON810 (OECD-Bezeichnung: MON-ØØ81Ø-6). | *Zea mays* L. (Mais) |
| A-173 | MS3 | Bayer Crop-Science (Aventis CropScience (AgrEvo)) | Pollensterilität durch Expression des Bamase-Ribonuklease-Gens aus Bacillus amyloliquefaciens; die PPT-Resistenz wurde über die PPT-Acetyltransferase (PAT) erzielt. | *Zea mays* L. (Mais) |
| A-174 | MS6 | Bayer Crop-Science (Aventis CropScience (AgrEvo)) | Pollensterilität durch Expression des Bamase-Ribonuklease-Gens aus Bacillus amyloliquefaciens; die PPT-Resistenz wurde über die PPT-Acetyltransferase (PAT) erzielt. | *Zea mays* L. (Mais) |
| A-175 | NK603 | Monsanto Company | Einführung einer modifizierten 5-Enolpyruvylshikimat-3-phosphatsynthase (EPSPS), eines Enzyms, das am Shikimat-Biosyntheseweg für die Bildung der aromatischen Aminosäuren beteiligt ist, durch Beschuß mit der Genkanone. | *Zea mays* L. (Mais) |
| A-176 | PV-ZMGT32 (NK603) | | Glyphosate-Toleranz; US 2007-056056 | *Zea mays* L. (Mais) |
| A-177 | PV-ZMGT32(nk603) | | Glyphosate-Toleranz; US 2007292854 | *Zea mays* L. (Mais) |
| A-178 | PV-ZMIR13 (MON863) | | Insektenresistenz (Cry3Bb); US 2006-095986 | *Zea mays* L. (Mais) |

(fortgesetzt)

| Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario K0G1N0, CANADA) zugänglich unter: http://www.agbios.com/dbase.php. | | | | |
|---|---|---|---|---|
| **Nr.** | **Transgenes Event** | **Unternehmen** | **Beschreibung** | **Kulturpflanze** |
| A-179 | SYN-BTØ11-1 x MON-ØØØ21-9 | Syngenta Seeds, Inc. | Mais mit einer Kombination von Insektenresistenz und Herbizidtoleranz, Erzeugung durch traditionelles Kreuzen der Elternlinien BT11 (nur für die OECD gültige Bezeichnung: SYN-BTØ11-1) und GA21 (nur für die OECD gültige Bezeichnung: MON-ØØØ21-9). | *Zea mays* L. (Mais) |
| A-180 | T14, T25 | Bayer CropScience (Aventis CropScience (AgrEvo)) | Mais mit Toleranz für das Herbizid Glufosinate; Erzeugung durch Insertieren des Gens für die Phosphinothricin-N-acetyltransferase (PAT) des aeroben Actinomyceten Streptomyces viridochromogenes. | *Zea mays* L. (Mais) |
| A-181 | TC1507 | Mycogen (c/o Dow AgroSciences); Pioneer (c/o Dupont) | Mais mit Insektenresistenz und Toleranz für das Herbizid Glufosinate-Ammonium; Erzeugung durch Insertieren des crylF-Gens aus Bacillus thuringiensis var. aizawai und des Gens für die Phosphinothricin-N-acetyltransferase aus Streptomyces viridochromogenes. | *Zea mays* L. (Mais) |
| A-182 | TC1507 x DAS-59122-7 | DOW AgroSciences LLC und Pioneer Hi-Bred International Inc. | Mais mit einer Kombination aus Insektenresistenz und Herbizidtoleranz; Herstellung durch traditionelles Kreuzen der Elternlinien TC1507 (nur für die OECD gültige Bezeichnung: DAS-Ø15Ø7-1) mit DAS-59122-7 (nur für die OECD gültige Bezeichnung: DAS-59122-7). Die Resistenz gegen Lepidopteren-Insekten stammt von TC1507 aufgrund des Vorhandenseins des crylF-Gens aus Bacillus thuringiensis var. aizawai Die Resistenz gegen den Maiswurzelbohrer stammt von der Linie DAS-59122-7, die das cry34Ab1- und das cry35Ab1-Gen aus dem Bacillus. thuringiensis-Stamm PS 149B1 enthält. Die Toleranz für das Herbizid Glufosinate-Ammonium stammt von TC1507 von dem Gen für die Phosphinothricin-N-acetyltransferase aus Streptomyces viridochromogenes. | *Zea mays* L. (Mais) |
| A-183 | VIP1034 | | Insektenresistenz; WO 03/052073 | *Zea mays* L. (Mais) |

In einer Ausführungsform der Erfindung werden die Pflanzen A-1 bis A-183 von Tabelle A ganz oder teilweise bzw. wird Vermehrungsmaterial dieser Pflanzen mit den erfindungsgemäßen Wirkstoffkombinationen oder den erfindungsgemäßen Mischungs-Nützlings-Kombinationen behandelt oder in Kontakt gebracht.

**Tabelle B**

Nicht allumfassende Liste von transgenen Pflanzen für die Durchführung der Erfindung aus der APHIS-Datenbank des United States Department of Agriculture (USDA). Die Datenbank findet sich unter: http://www.aphis.usda.gov/animal_welfare/efoia/index.shtml.

In dieser Tabelle verwendete Abkürzungen:

CMV-Gurkenmosaikvirus
CPB-Kartoffelkäfer
PLRV- Kartoffel-Blattrollvirus
PRSV-Papaya-Ringspot-Virus
PVY-Kartoffel-Y-Virus
WMV2- Wassermelonenmosaikvirus 2
ZYMV-Zucchini-Gelbmosaikvirus

| Nr. | Antrag | Antragserweiterung Nummer*** | Institution | Pflanze | Transformations-Event oder Linie | EA-Abschlußbeurteilung & Bestimmung |
|---|---|---|---|---|---|---|
| B-1 | 10-070-01p | | Virginia Tech | Erdnuss | Resistent gegen Sclerotinia-Fäule | N70, P39 und W171 |
| B-2 | 09-349-01p | | Dow AgroSciences | Sojabohne | 2,4-D- und Glufosinate-Toleranz | DAS-68416-4 |
| B-3 | 09-328-01p | | Bayer Crop Science | Sojabohne | Glyphosate- und Isoxaflutole-Toleranz | FG72 |
| B-4 | 09-233-01p | | Dow | Mais | 2,4-D- und ACCase-Hemmer-Toleranz | DAS-40278-9 |
| B-5 | 09-201-01p | | Monsanto | Sojabohne | verbessertes Fettsäureprofil | MON-87705-6 |
| B-6 | 09-183-01p | | Monsanto | Sojabohne | Stearidonsäurepoduktion | MON-87769 |
| B-7 | 09-082-01p | | Monsanto | Sojabohne | Lepidopteren-Resistenz | MON 87701 |
| B-8 | 09-063-01p | | Stine Seed | Mais | Glyphosate-Toleranz | HCEM485 |
| B-9 | 09-055-01p | | Monsanto | Mais | Dürretoleranz | MON 87460 |
| B-10 | 09-015-01p | | BASF Plant Science, LLC | Sojabohne | Imidazolinon-Toleranz | BPS-CV127-9 Sojabohne |
| B-11 | 08-366-01p | | ArborGen | Eucalyptus | Frosttoleranz, geänderte Fertilität | ARB-FTE1-08 |
| B-12 | 08-340-01p | | Bayer | Baumwlle | Glufosinate-Toleranz, Insektenresistenz | T304-40XGHB119 |

(fortgesetzt)

| Nr. | Antrag | Antragserweiterung Nummer*** | Institution | Pflanze | Transformations-Event oder Linie | EA-Abschlußbeurteilung & Bestimmung |
|---|---|---|---|---|---|---|
| B-13 | 08-338-01p | | Pioneer | Mais | Pollensterilität, wiederhergestellte Fertilität, visueller Marker | DP-32138-1 |
| B-14 | 08-315-01p | | Florigene | Rose | Veränderte Blütenfarbe | IFD-52401-4 und IFD-52901-9 |
| B-15 | 07-108-01p | | Syngenta | Baumwolle | Lepidopterenresistenz | COT67B |
| B-16 | 06-354-01p | | Pioneer | Sojabohne | Hoher Ölsäuregehalt | DP-3Ø5423-1 |
| B-17 | | | | | | |
| B-18 | 05-280-01p | | Syngenta | Mais | Hitzestabile Alpha-Amylase | 3272 |
| B-19 | | | | | | |
| B-20 | 04-110-01p | | Monsanto & Forage Genetics | Alfalfa | Glyphosate-Toleranz | J101, J163 |
| B-21 | | | | | | |
| B-22 | | | | | | |
| B-23 | | | | | | |
| B-24 | 03-104-01p | | Monsanto & Scotts | Weißes Straußgras | Glyphosate-Toleranz | ASR368 |
| B-25 | | | | | | |
| B-26 | | | | | | |
| B-27 | | | | | | |
| B-28 | | | | | | |
| B-29 | | | | | | |
| B-30 | 07-253-01p | | Syngenta | Mais | Lepidopteren-resistenz | MIR-162 Mais |
| B-31 | | | | | | |
| B-32 | 07-152-01p | | Pioneer | Mais | Glyphosate- & Imidazolinon-Toleranz | DP-098140-6 |
| B-33 | | | | | | |
| B-34 | 04-337-01p | | University of Florida | Papaya | Resistenz gegen Papaya-Ringspot-Virus | X17-2 |
| B-35 | | | | | | |

(fortgesetzt)

| Nr. | Antrag | Antragserweiterung Nummer*** | Institution | Pflanze | Transformations-Event oder Linie | EA-Abschlußbeurteilung & Bestimmung |
|---|---|---|---|---|---|---|
| B-36<br>B-37 | 06-332-01p | | Bayer CropScience | Baumwolle | Glyphosate-Toleranz | GHB614 |
| B-38<br>B-39 | 06-298-01p | | Monsanto | Mais | Maiszünsler-resistenz | MON 89034 |
| B-40<br>B-41 | 06-271-01p | | Pioneer | Sojabohne | Glyphosate- & Acetolactat-synthase-toleranz | 356043 (DP-356Ø43-5) |
| B-42<br>B-43 | 06-234-01p | 98-329-01p | Bayer CropScience | Reis | Phosphino-thricintoleranz | LLRICE601 |
| B-44<br>B-45 | 06-178-01p | | Monsanto | Sojabohne | Glyphosatetoleranz | MON 89788 |
| B-46<br>B-47<br>B-48 | 04-362-01p | | Syngenta | Mais | Schutz gegen den Maiswurzelbohrer | MIR604 |
| B-49<br>B-50 | 04-264-01p | | ARS | Pflaume | Resistenz gegen das Plum-Pox-Virus | C5 |
| B-51<br>B-52 | 04-229-01p | | Monsanto | Mais | Hoher Lysingehalt | LY038 |
| B-53<br>B-54 | 04-125-01p | | Monsanto | Mais | Maiswurzelbohrerresistenz | 88017 |
| B-55<br>B-56<br>B-57 | 04-086-01p | | Monsanto | Baumwolle | Glyphosate-Toleranz | MON 88913 |
| B-58<br>B-59 | 03-353-01p | | Dow | Mais | Maiswurzelbohrerresistenz | 59122 |

(fortgesetzt)

| Nr. | Antrag | Antragserweiterung Nummer*** | Institution | Pflanze | Transformations-Event oder Linie | EA-Abschlußbeurteilung & Bestimmung |
|---|---|---|---|---|---|---|
| B-60<br>B-61 | 03-323-01p | | Monsanto | Zuckerrübe | Glyphosate-Toleranz | H7-1 |
| B-62<br>B-63 | 03-181-01p | 00-136-01p | Dow | Mais | Lepidopteren-Resistenz & Phosphinothricintoleranz | TC-6275 |
| B-64<br>B-65 | 03-155-01p | | Syngenta | Baumwolle | Lepidopteren-resistenz | COT 102 |
| B-66<br>B-67 | 03-036-01p | | Mycogen/Dow | Baumwolle | Lepidopteren-resistenz | 281-24-236 |
| B-68<br>B-69 | 03-036-02p | | Mycogen/Dow | Baumwolle | Lepidopteren-resistenz | 3006-210-23 |
| B-70 | 02-042-01p | | Aventis | Baumwolle | Phosphinothricintoleranz | LLCotton25 |
| B-71 | 01-324-01p | 98-216-01p | Monsanto | Raps | Glyphosate-Toleranz | RT200 |
| B-72 | 01-206-01p | 98-278-01p | Aventis | Raps | Phosphinothricin- toleranz & Bestäubungskontrolle | MS1 & RF1/RF2 |
| B-73 | 01-206-02p | 97-205-01p | Aventis | Raps | Phosphinothricintoleranz | Topas 19/2 |
| B-74 | 01-137-01p | | Monsanto | Meis | Maiswurzelbohrerresistenz | MON 863 |
| B-75 | 01-121-01p | | Vector | Tabak | Verringerter Nikotingehalt | Vector 21-41 |
| B-76 | 00-342-01p | | Monsanto | Baumwolle | Lepidopteren-resistenz | Cotton Event 15985 |
| B-77 | 00-136-01p | | Mycogen c/o Dow & Pioneer | Mais | Lepidopteren-Resistenz & Phosphino-thricintoleranz | Line 1507 |
| B-78 | 00-011-01p | 97-099-01p | Monsanto | Mais | Glyphosate-Toleranz | NK603 |
| B-79 | 99-173-01p | 97-204-01p | Monsanto | Kartoffel | PLRV- & CPB-Resistenz | RBMT22-82 |
| B-80 | 98-349-01p | 95-228-01p | AgrEvo | Mais | Phosphinothricintoleranz und Pollensterilität | MS6 |

(fortgesetzt)

| Nr. | Antrag | Antragserweiterung Nummer*** | Institution | Pflanze | Transformations-Event oder Linie | EA-Abschlußbeurteilung & Bestimmung |
|---|---|---|---|---|---|---|
| B-81 | 98-335-01p | | U. of Saskatchewan | Flachs | Toleranz für Sulfonylharnstoffherbizidrückstände im Boden | CDC Triffid |
| B-82 | 98-329-01p | | AgrEvo | Reis | Phosphinothricintoleranz | LLRICE06, LLRICE62 |
| B-83 | 98-278-01p | | AgrEvo | Raps | Phosphinothricintoleranz & Bestäubungskontrolle | MS8 & RF3 |
| B-84 | 98-238-01p | | AgrEvo | Sojabohne | Phosphinothricintoleranz | GU262 |
| B-85 | 98-216-01p | | Monsanto | Raps | GlyphosateToleranz | RT73 |
| B-86 | 98-173-01p | | Novartis Seeds & Monsanto | Rübe | Glyphosate-Toleranz | GTSB77 |
| B-87 | 98-014-01p | 96-068-01p | AgrEvo | Sojabohne | Phosphinothricintoleranz | A5547-127 |
| B-88 | 97-342-01p | | Pioneer | Mais | Pollensterilität & Phosphinothricintoleranz | 676, 678, 680 |
| B-89 | 97-339-01p | | Monsanto | Kartoffel | CPB- & PVY-Resistenz | RBMT15-101, SEMT15-02, SEMT15-15 |
| B-90 | 97-336-01p | | AgrEvo | Rübe | Phosphinothricintoleranz | T-120-7 |
| B-91 | 97-287-01p | | Monsanto | Tomate | Lepidopterenresistenz | 5345 |
| B-92 | 97-265-01p | | AgrEvo | Mais | Phosphinothricintoleranz & Lepidopterenresistenz | CBH-351 |
| B-93 | 97-205-01p | | AgrEvo | Raps | Phosphinothricintoleranz | T45 |
| B-94 | 97-204-01p | | Monsanto | Kartoffel | CPB- & PLRV-Resistenz | RBMT21-129 & RBMT21-350 |
| B-95 | 97-148-01p | | Bejo | Cichorium intybus | Pollensterilität | RM3-3, RM3-4, RM3-6 |
| B-96 | 97-099-01p | | Monsanto | Mais | Glyphosate-Toleranz | GA21 |
| B-97 | 97-013-01p | | Calgene | Baumwolle | Bromoxyniltoleranz & Lepidopterenresistenz | Events 31807 & 31808 |

(fortgesetzt)

| Nr. | Antrag | Antragserweiterung Nummer*** | Institution | Pflanze | Transformations-Event oder Linie | EA-Abschlußbeurteilung & Bestimmung |
|---|---|---|---|---|---|---|
| B-98 | 97-008-01p | | Du Pont | Sojabohne | Verändertes Ölprofil | G94-1, G94-19, G-168 |
| B-99 | 96-317-01p | | Monsanto | Mais | Glyphosatetoleranz & ECB-Resistenz | MON802 |
| B-100 | 96-291-01p | | DeKalb | Mais | Maiszünslerresistenz | DBT418 |
| B-101 | 96-248-01p | 92-196-01p | Calgene | Tomate | Veränderte Fruchtabreifung | 1 zusätzliche FLAVRSAVR Linie |
| B-102 | 96-068-01p | | AgrEvo | Sojabohne | Phosphinothricintoleranz | W62, W98, A2704- 12, A2704-21, A5547-35 |
| B-103 | 96-051-01p | | Cornell U | Papaya | PRSV-Resistenz | 55-1, 63-1 |
| B-104 | 96-017-01p | 95-093-01p | Monsanto | Mais | Maiszünslerresistenz | MON809 & MON810 |
| B-105 | 95-352-01p | | Asgrow | Sommerkürbis | CMV, ZYMV, WMV2-Resistenz | CZW-3 |
| B-106 | 95-338-01p | | Monsanto | Kartoffel | CPB-Resistenz | SBT02-5 & -7, ATBT04-6 & - 27, -30, -31, - 36 |
| B-107 | 95-324-01p | | Agritope | Tomate | Veränderte Fruchtabreifung | 35 1 N |
| B-108 | 95-256-01p | | Du Pont | Baumwolle | Sulfonylharnstoffresistenz | 19-51a |
| B-109 | 95-228-01p | | Plant Genetic Systems | Mais | Pollensteril | MS3 |
| B-110 | 95-195-01p | | Northrup King | Mais | Maiszünslerresistenz | Bt11 |
| B-111 | 95-179-01p | 92-196-01p | Calgene | Tomate | Veränderte Fruchtabreifung | 2 zusätzliche FLAVRSAVR-Linien |
| B-112 | 95-145-01p | | DeKalb | Mais | Phosphinothricintoleranz | B16 |
| B-113 | 95-093-01p | | Monsanto | Mais | Lepidopterenresistenz | MON 80100 |
| B-114 | 95-053-01p | | Monsanto | Tomate | Veränderte Fruchtabreifung | 8338 |
| B-115 | 95-045-01p | | Monsanto | Baumwolle | Glyphosate-toleranz | 1445, 1698 |
| B-116 | 95-030-01p | 92-196-01p | Calgene | Tomate | Veränderte Fruchtabreifung | 20 zusätzliche FLAVRSAVR-Linien |
| B-117 | 94-357-01p | | AgrEvo | Mais | Phosphinothricintoleranz | T14, T25 |

(fortgesetzt)

| Nr. | Antrag | Antragserweiterung Nummer*** | Institution | Pflanze | Transformations-Event oder Linie | EA-Abschlußbeurteilung & Bestimmung |
|---|---|---|---|---|---|---|
| B-118 | 94-319-01p | | Ciba Seeds | Mais | Lepidopterenresistenz | Event 176 |
| B-119 | 94-308-01p | | Monsanto | Baumwolle | Lepidopterenresistenz | 531, 757, 1076 |
| B-120 | 94-290-01p | | Zeneca & Petoseed | Tomate | Verringerter Polygalacturonasegehalt in der Frucht | B, Da, F |
| B-121 | 94-257-01p | | Monsanto | Kartoffel | Coleopterenresistenz | BT6, BT10, BT12, BT16, BT17, BT18, BT23 |
| B-122 | 94-230-01p | 92-196-01p | Calgene | Tomate | Veränderte Fruchtabreifung | 9 zusätzliche FLAVRSAVR-Linien |
| B-123 | 94-228-01p | | DNA Plant Tech | Tomate | Veränderte Fruchtabreifung | 1345-4 |
| B-124 | 94-227-01p | 92-196-01p | Calgene | Tomate | Veränderte Fruchtabreifung | Linie N73 1436-111 |
| B-125 | 94-090-01p | | Calgene | Raps | Verändertes Ölprofil | pCGN3828-212/86- 18 & 23 |
| B-126 | 93-258-01p | | Monsanto | Sojabohne | Glyphosatetoleranz | 40-3-2 |
| B-127 | 93-196-01p | | Calgene | Baumwolle | Bromoxyniltoleranz | BXN |
| B-128 | 92-204-01p | | Upjohn | Sommerkürbis | WMV2- & ZYMV-Resistenz | ZW-20 |
| B-129 | 92-196-01p | | Calgene | Tomate | Veränderte Fruchtabreifung | FLAVR SAVR |

In einer Ausführungsform der Erfindung werden die Pflanzen B-1 bis B-129 von Tabelle B ganz oder teilweise bzw. wird Vermehrungsmaterial dieser Pflanzen mit den erfindungsgemäßen Wirkstoffkombinationen oder den erfindungsgemäßen Mischungs-Nützlings-Kombinationen behandelt oder in Kontakt gebracht.

**Tabelle C**

Nicht allumfassende Liste von Merkmalen für die Nacharbeitung der Erfindung mit Bezugnahme auf Schriften, in denen sie beschrieben sind.

| Nr. | Merkmal | Literaturstelle |
|---|---|---|
| C-1 | Wasserverwertungseffizienz | WO 2000/073475 |
| | | WO2009/150541 |
| C-2 | Stickstoffverwertungseffizienz | WO 1995/009911 |
| | | WO 1997/030163 |
| | | WO 2007/092704 |
| | | WO 2007/076115 |
| | | WO 2005/103270 |
| | | WO 2002/002776 |
| | | WO2008/051608 |
| | | WO2008/112613 |
| | | WO2009/015096 |
| | | WO2009/061776 |
| | | WO2009/105492 |
| | | WO2009/105612 |
| | | WO2009/117853 |
| | | WO2010/006010 |
| | | WO2009/117853 |
| | | WO2009/061776 |
| | | WO2009/015096 |
| | | WO2009/105492 |
| | | WO2009/105612 |
| | | WO2010/006010 |
| | | WO2010/007496 |
| C-3 | Verbesserte Photosynthese | WO 2008/056915 |
| | | WO 2004/101751 |
| C-4 | Nematodenresistenz | WO 1995/020669 |
| | | WO 2001/051627 |
| | | WO 2008/139334 |
| | | WO 2008/095972 |
| | | WO 2006/085966 |
| | | WO 2003/033651 |
| | | WO 1999/060141 |
| | | WO 1998/012335 |
| | | WO 1996/030517 |

(fortgesetzt)

| Nicht allumfassende Liste von Merkmalen für die Nacharbeitung der Erfindung mit Bezugnahme auf Schriften, in denen sie beschrieben sind. | | |
|---|---|---|
| **Nr.** | **Merkmal** | **Literaturstelle** |
| | | WO 1993/018170 |
| | | WO2008/095886 |
| | | WO2008/095887 |
| | | WO2008/095888 |
| | | WO2008/095889 |
| | | WO2008/095910 |
| | | WO2008/095911 |
| | | WO2008/095916 |
| | | WO2008/095919 |
| | | WO2008/095969 |
| | | WO2008/095970 |
| | | WO2008/095972 |
| | | WO2008/110522 |
| | | WO2008/139334 |
| | | WO2008/152008 |
| | | WO2009/000736 |
| | | WO2009/065863 |
| | | WO2009/112505 |
| | | WO2009/132089 |
| | | WO2010/023186 |
| | | WO2010/025172 |
| | | WO2010/027793 |
| | | WO2010/027799 |
| | | WO2010/027804 |
| | | WO2010/027805 |
| | | WO2010/027808 |
| | | WO2010/027809 |
| C-5 | Verringertes Schotenplatzen | WO 2006/009649 |
| | | WO 2004/113542 |
| | | WO 1999/015680 |
| | | WO 1999/000502 |
| | | WO 1997/013865 |
| | | WO 1996/030529 |
| | | WO 1994/023043 |
| C-6 | Blattlausresistenz | WO 2006/125065 |
| | | WO 1997/046080 |

(fortgesetzt)

| Nicht allumfassende Liste von Merkmalen für die Nacharbeitung der Erfindung mit Bezugnahme auf Schriften, in denen sie beschrieben sind. | | |
|---|---|---|
| **Nr.** | **Merkmal** | **Literaturstelle** |
| | | WO 2008/067043 |
| | | WO 2004/072109 |
| | | WO2009/091860 |
| | | WO 2009021153 |
| | | WO2010036764 |
| C-7 | Sclerotinia-Resistenz | WO 2006/135717 |
| | | WO 2006/055851 |
| | | WO 2005/090578 |
| | | WO 2005/000007 |
| | | WO 2002/099385 |
| | | WO 2002/061043 |
| C-8 | Botrytis-Resistenz | WO 2006/046861 |
| | | WO 2002/085105 |
| C-9 | Bremia-Resistenz | US 20070022496 |
| | | WO 2000/063432 |
| | | WO 2004/049786 |
| | | WO2009/111627 |
| C10 | Erwinia-Resistenz | WO 2004/049786 |
| C-11 | Closterovirus-Resistenz | WO 2007/073167 |
| | | WO 2007/053015 |
| | | WO 2002/022836 |
| C-12 | Stresstoleranz (darunter Dürretoleranz) | WO 2010/019838 |
| | | WO 2009/049110 |
| | | WO2008/002480 |
| | | WO2005/033318 |
| | | WO2008/002480 |
| | | WO2008/005210 |
| | | WO2008/006033 |
| | | WO2008/008779 |
| | | WO2008/022486 |
| | | WO2008/025097 |
| | | WO2008/027534 |
| | | WO2008/027540 |
| | | WO2008/037902 |
| | | WO2008/046069 |
| | | WO2008/053487 |

(fortgesetzt)

| Nicht allumfassende Liste von Merkmalen für die Nacharbeitung der Erfindung mit Bezugnahme auf Schriften, in denen sie beschrieben sind. | | |
|---|---|---|
| **Nr.** | **Merkmal** | **Literaturstelle** |
| | | WO2008/057642 |
| | | WO2008/061240 |
| | | WO2008/064222 |
| | | WO2008/064341 |
| | | WO2008/073617 |
| | | WO2008/074025 |
| | | WO2008/076844 |
| | | WO2008/096138 |
| | | WO2008/110848 |
| | | WO2008/116829 |
| | | WO2008/117537 |
| | | WO2008/121320 |
| | | WO2008/125245 |
| | | WO2008/142034 |
| | | WO2008/142036 |
| | | WO2008/150165 |
| | | WO2008/092935 |
| | | WO2008/145675 |
| | | WO2009/010460 |
| | | WO2009/016240 |
| | | WO2009/031664 |
| | | WO2009/038581 |
| | | WO2009/049110 |
| | | WO2009/053511 |
| | | WO2009/054735 |
| | | WO2009/067580 |
| | | WO2009/073605 |
| | | WO2009/077611 |
| | | WO2009/079508 |
| | | WO2009/079529 |
| | | WO2009/083958 |
| | | WO2009/086229 |
| | | WO2009/092009 |
| | | WO2009/094401 |
| | | WO2009/094527 |
| | | WO2009/102965 |

(fortgesetzt)

| Nicht allumfassende Liste von Merkmalen für die Nacharbeitung der Erfindung mit Bezugnahme auf Schriften, in denen sie beschrieben sind. | | |
|---|---|---|
| **Nr.** | **Merkmal** | **Literaturstelle** |
| | | WO2009/114733 |
| | | WO2009/117448 |
| | | WO2009/126359 |
| | | WO2009/126462 |
| | | WO2009/129162 |
| | | WO2009/132057 |
| | | WO2009/141824 |
| | | WO2009/148330 |
| | | WO2010/037714 |
| | | WO2010/031312 |
| | | WO2010/006010 |
| | | WO2010/007495 |
| | | WO2010/019838 |
| | | WO2010/025513 |
| C-13 | Tobamovirus-Resistenz | WO 2006/038794 |
| | | WO2002081713 |
| | | WO2009086850 |
| C-14 | Ertrag | WO2008/125983A2 |
| | | WO2008/112613A1 |
| | | WO2008/118394A1 |
| | | WO2008/015263A2 |
| | | WO2008/021021A2 |
| | | WO2008/043849A2 |
| | | WO2008/044150A2 |
| | | WO2008/049183A1 |
| | | WO2008/056915A1 |
| | | WO2008/059048A1 |
| | | WO2008/062049A1 |
| | | WO2008/071767A1 |
| | | WO2008/074891A2 |
| | | WO2008/087932A1 |
| | | WO2008/092910A1 |
| | | WO2008/092935A2 |
| | | WO2008/104598A2 |
| | | WO2008/111779A1 |
| | | WO2008/122980A2 |

(fortgesetzt)

| Nicht allumfassende Liste von Merkmalen für die Nacharbeitung der Erfindung mit Bezugnahme auf Schriften, in denen sie beschrieben sind. | | |
|---|---|---|
| **Nr.** | **Merkmal** | **Literaturstelle** |
| | | WO2008/135206A2 |
| | | WO2008/135467A2 |
| | | WO2008/135603A2 |
| | | WO2008/137108A2 |
| | | WO2008/138975A1 |
| | | WO2008/142146A1 |
| | | WO2008/142163A2 |
| | | WO2008/145629A2 |
| | | WO2008/145675A2 |
| | | WO2008/145761A1 |
| | | WO2008/148872A1 |
| | | WO2008/073617A2 |
| | | WO2009//127671A1 |
| | | WO2009/0 65912A2 |
| | | WO2009/000789A1 |
| | | WO2009/000848A1 |
| | | WO2009/000876A1 |
| | | WO2009/003977A2 |
| | | WO2009/009142A2 |
| | | WO2009/012467A2 |
| | | WO2009/013225A2 |
| | | WO2009/013263A2 |
| | | WO2009/014665A2 |
| | | WO2009/016104A1 |
| | | WO2009/016212A2 |
| | | WO2009/016232A2 |
| | | WO2009/021548A1 |
| | | WO2009/034188A1 |
| | | WO2009/037279A1 |
| | | WO2009/037329A2 |
| | | WO2009/037338A1 |
| | | WO2009/040665A2 |
| | | WO2009/056566A2 |
| | | WO2009/060040A1 |
| | | WO2009/068564A1 |
| | | WO2009/068588A2 |

(fortgesetzt)

| Nicht allumfassende Liste von Merkmalen für die Nacharbeitung der Erfindung mit Bezugnahme auf Schriften, in denen sie beschrieben sind. | | |
|---|---|---|
| **Nr.** | **Merkmal** | **Literaturstelle** |
| | | WO2009/072676A1 |
| | | WO2009/073069A2 |
| | | WO2009/075860A2 |
| | | WO2009/077973A1 |
| | | WO2009/080743A2 |
| | | WO2009/080802A2 |
| | | WO2009/091518A2 |
| | | WO2009/092772A2 |
| | | WO2009/095455A1 |
| | | WO2009/095641A2 |
| | | WO2009/095881A2 |
| | | WO2009/097133A2 |
| | | WO2009/102978A2 |
| | | WO2009/106596A2 |
| | | WO2009/108513A2 |
| | | WO2009/113684A1 |
| | | WO2009/134339A2 |
| | | WO2009/135130A2 |
| | | WO2009/135810A1 |
| | | WO2009/145290A1 |
| | | WO2009/150170A1 |
| | | WO2009/153208A1 |
| | | WO2009/156360A1 |
| | | WO2010/012796A1 |
| | | WO2010/003917A1 |
| | | WO2010/037228A1 |
| | | WO2010/000794A1 |
| | | WO2010/005298A2 |
| | | WO2010/006732A2 |
| | | WO2010/007035A1 |
| | | WO2010/007496A2 |
| | | WO2010/012760A2 |
| | | WO2010/019872A1 |
| | | WO2010/023310A2 |
| | | WO2010/023320A2 |
| | | WO2010/025465A1 |

(fortgesetzt)

| Nicht allumfassende Liste von Merkmalen für die Nacharbeitung der Erfindung mit Bezugnahme auf Schriften, in denen sie beschrieben sind. | | |
|---|---|---|
| **Nr.** | **Merkmal** | **Literaturstelle** |
| | | WO2010/025466A2 |
| | | WO2010/028205A1 |
| | | WO2010/028456A1 |
| | | WO2010/033564A1 |
| | | WO2010/034652A1 |
| | | WO2010/034672A1 |
| | | WO2010/034681A1 |
| | | WO2010/035784A1 |
| | | WO2010/036866A1 |
| | | WO2010/039750A2 |

In einer Ausführungsform der Erfindung werden die Pflanzen, die Merkmale gemäß C-1 bis C-14 von Tabelle C umfassen oder exprimieren, ganz oder teilweise bzw. wird Vermehrungsmaterial dieser Pflanzen mit den erfindungsgemäßen Wirkstoffkombinationen oder den erfindungsgemäßen Mischungs-Nützlings-Kombinationen behandelt oder in Kontakt gebracht.

**Tabelle D**

| Nicht allumfassende Liste von transgenen Events und Merkmalen, auf die die Erfindung angewandt werden kann, unter Bezugnahme auf Patentanmeldungen. | | | | |
|---|---|---|---|---|
| **Nr.** | **Pflanzenart** | **Transgenes Event** | **Merkmal** | **Patentbezeichnung** |
| D-1 | Mais | PV-ZMGT32 (NK603) | Glyphosate-Toleranz | US 2007-056056 |
| D-2 | Mais | MIR604 | Insektenresistenz (Cry3a055) | EP-A 1 737 290 |
| D-3 | Mais | LY038 | Hoher Lysingehalt | US 7,157,281 |
| D-4 | Mais | 3272 | Selbstverarbeitender Mais (Alpha-Amylase) | US 2006-230473 |
| D-5 | Mais | PV-ZMIR13 (MON863) | Insektenresistenz (Cry3Bb) | US 2006-095986 |
| D-6 | Mais | DAS-59122-7 | Insektenresistenz (Cry34Ab1/Cry35Ab1) | US 2006-070139 |
| D-7 | Mais | TC1507 | Insektenresistenz (Cry1F) | US 7,435,807 |
| D-8 | Mais | MON810 | Insektenresistenz (Cry1Ab) | US 2004-180373 |
| D-9 | Mais | VIP1034 | Insektenresistenz | WO 03/052073 |
| D-10 | Mais | B16 | Glufosinate-Resistenz | US 2003-126634 |
| D-11 | Mais | GA21 | Glyphosate-Resistenz | US 6,040,497 |
| D-12 | Mais | GG25 | Glyphosate-Resistenz | US 6,040,497 |
| D-13 | Mais | GJ11 | Glyphosate-Resistenz | US 6,040,497 |
| D-14 | Mais | FI117 | Glyphosate-Resistenz | US 6,040,497 |
| D-15 | Mais | GAT-ZM1 | Glufosinate-Toleranz | WO 01/51654 |

(fortgesetzt)

| Nicht allumfassende Liste von transgenen Events und Merkmalen, auf die die Erfindung angewandt werden kann, unter Bezugnahme auf Patentanmeldungen. | | | | |
|---|---|---|---|---|
| **Nr.** | **Pflanzenart** | **Transgenes Event** | **Merkmal** | **Patentbezeichnung** |
| D-16 | Mais | DP-098140-6 | Glyphosate-Toleranz / ALS-Hemmer-Toleranz | WO 2008/112019 |
| D-17 | Weizen | Event 1 | Fusarium-Resistenz (Trichothecen-3-O-acetyltransferase) | CA 2561992 |
| D-18 | Zuckerrübe | T227-1 | Glyphosate-Toleranz | US 2004-117870 |
| D-19 | Zuckerrübe | H7-1 | Glyphosate-Toleranz | WO 2004-074492 |
| D-20 | Sojabohne | MON89788 | Glyphosate-Toleranz | US 2006-282915 |
| D-21 | Sojabohne | A2704-12 | Glufosinate-Toleranz | WO 2006/108674 |
| D-22 | Sojabohne | A5547-35 | Glufosinate-Toleranz | WO 2006/108675 |
| D-23 | Sojabohne | DP-305423-1 | Hoher Ölsäuregehalt / ALS-Hemmer-Toleranz | WO 2008/054747 |
| D-24 | Reis | GAT-OS2 | Glufosinate-Toleranz | WO 01/83818 |
| D-25 | Reis | GAT-OS3 | Glufosinate-Toleranz | US 2008-289060 |
| D-26 | Reis | PE-7 | Insektenresistenz (Cry1Ac) | WO 2008/114282 |
| D-27 | Raps | MS-B2 | Pollensterilität | WO 01/31042 |
| D-28 | Raps | MS-BN1/RF-BN1 | Pollensterilität/-Restoration | WO 01/41558 |
| D-29 | Raps | RT73 | Glyphosate-Resistenz | WO 02/36831 |
| D-30 | Baumwolle | CE43-67B | Insektenresistenz (Cry1Ab) | WO 2006/128573 |
| D-31 | Baumwolle | CE46-02A | Insektenresistenz (Cry1Ab) | WO 2006/128572 |
| D-32 | Baumwolle | CE44-69D | Insektenresistenz (Cry1Ab) | WO 2006/128571 |
| D-33 | Baumwolle | 1143-14A | Insektenresistenz (Cry1Ab) | WO 2006/128569 |
| D-34 | Baumwolle | 1143-51B | Insektenresistenz (Cry1Ab) | WO 2006/128570 |
| D-35 | Baumwolle | T342-142 | Insektenresistenz (Cry1Ab) | WO 2006/128568 |
| D-36 | Baumwolle | event3006-210-23 | Insektenresistenz (Cry1Ac) | WO 2005/103266 |
| D-37 | Baumwolle | PV-GHGT07 (1445) | Glyphosate-Toleranz | US 2004-148666 |
| D-38 | Baumwolle | MON88913 | Glyphosate-Toleranz | WO 2004/072235 |
| D-39 | Baumwolle | EE-GH3 | Glyphosate-Toleranz | WO 2007/017186 |
| D-40 | Baumwolle | T304-40 | Insektenresistenz (Cry1Ab) | WO2008/122406 |
| D-41 | Baumwolle | Cot202 | Insektenresistenz (VIP3) | US 2007-067868 |
| D-42 | Baumwolle | LLcotton25 | Glufosinate-Resistenz | WO 2007/017186 |
| D-43 | Baumwolle | EE-GH5 | Insektenresistenz (Cry1Ab) | WO 2008/122406 |
| D-44 | Baumwolle | event 281-24-236 | Insektenresistenz (Cry1F) | WO 2005/103266 |
| D-45 | Baumwolle | Cot102 | Insektenresistenz (Vip3A) | US 2006-130175 |
| D-46 | Baumwolle | MON 15985 | Insektenresistenz (Cry1A/Cry2Ab) | US 2004-250317 |
| D-47 | Straußgras | Asr-368 | Glyphosate-Toleranz | US 2006-162007 |
| D-48 | Aubergine | EE-1 | Insektenresistenz (Cry1Ac) | WO 2007/091277 |

In einer Ausführungsform werden die Pflanzen, die ein transgenes Event gemäß D-1 bis D-48 von Tabelle D umfassen oder solch ein Merkmal exprimieren, ganz oder teilweise, bzw. wird Vermehrungsmaterial dieser Pflanzen, mit den erfindungsgemäßen Wirkstoffkombinationen oder den erfindungsgemäßen Mischungs-Nützlings-Kombinationen behandelt oder in Kontakt gebracht.

**Tabelle E**

Nicht allumfassende Liste von transgenen Events und Merkmalen und deren Handelsnamen.

| Nr. | Handelsname | Pflanze | Unternehmen | genetisch modifizierte Eigenschaften | zusätzliche Informationen |
|---|---|---|---|---|---|
| E-1 | Roundup Ready® | *Beta vulgaris* (Zuckerrübe) | Monsanto Company | Toleranz für Glyphosate | |
| E-2 | InVigor® | *Brassica napus* (Argentinischer Canola-Raps) | Bayer CropScience | Canola-Raps wurde mit folgendem Ergebnis genetisch modifiziert:<br>Ø Expression eines Gens, das Toleranz für das Herbizid Glyfosinate-Ammonium vermittelt;<br>Ø Einführung eines neuen Hybridzüchtungssystems für Canola-Raps, das auf genetisch modifizierten Pollensterilitäts- (MS) und Fertilitätsrestorer- (RF) Linien beruht;<br>Ø Expression eines Gens für Antibiotikaresistenz. | |
| E-3 | Liberty Link® | *Brassica napus* (Argentinischer Canola-Raps) | BayerCropScience | Toleranz für Phosphinotricin | |
| E-4 | Roundup Ready® | *Brassica napus* (Canola-Raps) | Monsanto Company | Toleranz für Glyphosate | |
| E-5 | Clearfield® | (Canola-Raps) | BASF Corporation | nicht-GMO, Toleranz für Imazamox | |
| E-6 | Optimum™ GAT™ | *Glycine max* L. (Sojabohne) | Pioneer Hi-Bred International, Inc | Toleranz für Glyphosate und ALS-Herbizide | |
| E-7 | Roundup Ready® | *Glycine max* L. (Sojabohne-) | Monsanto Company | Toleranz für Glyphosate | |
| E-8 | Roundup RReady2Yie1 TM | *Glycine max* L. (Sojabohne) | Monsanto Company | Toleranz für Glyphosate | |
| E-9 | STS® | *Glycine max* L. (Sojabohne) | DuPont | Toleranz für Sulfonylharnstoffe | |
| E-10 | YIELD GARD® | *Glycine max* L. (Sojabohne) | Monsanto Company | | |

(fortgesetzt)

Nicht allumfassende Liste von transgenen Events und Merkmalen und deren Handelsnamen.

| Nr. | Handelsname | Pflanze | Unternehmen | genetisch modifizierte Eigenschaften | zusätzliche Informationen |
|---|---|---|---|---|---|
| E-11 | AFD® | *Gossypium hirsutum* L. (Baumwolle) | Bayer CropScience | Zu den Linien zählen z.B. AFD5062LL, AFD5064F, AFD 5065B2F; AFD-Saatgut ist in verschiedenen Sorten mit integrierter Technologie verfügbar, wie zum Beispiel die Bollgard®-, Bollgard II-, Roundup Ready-, Roundup Ready Flex- und LibertyLink®-Technologien | |
| E-12 | Bollgard II® | *Gossypium hirsutum* L. (Baumwolle) | Monsanto Company | MON 15985-Event: Cry2(A)b1; Cry1A(c) | |
| E-13 | Bollgard® | *Gossypium hirsutum* L. (Baumwolle) | Monsanto Company | Cry 1Ac | |
| E-14 | FiberMax® | *Gossypium hirsutum* L. (Baumwolle) | Bayer CropScience | | |
| E-15 | Liberty Link® | *Gossypium hirsutum* L. (Baumwolle) | Bayer CropScience | Toleranz gegen Phosphinotricin | |
| E-16 | Nucotn 33B | *Gossypium hirsutum* L. (Baumwolle) | Delta Pine and Land | Bt-Toxin in den Linien von Delta Pine: Cry1Ac | |
| E-17 | Nucotn 35B | *Gossypium hirsutum* L. (Baumwolle) | Delta Pine and Land | Bt-Toxin in den Linien von Delta Pine: Cry1Ac | |
| E-18 | Nucotn® | *Gossypium hirsutum* L. (Baumwolle) | Delta Pine and Land | Bt-Toxin in Linien von Delta Pine | |
| E-19 | PhytoGen™ | *Gossypium hirsutum* L. (Baumwolle) | PhytoGen Seed Company, Dow AgroSciences LLC | umfaßt Sorten, die zum Beispiel Roundup Ready flex, Widestrike enthalten | |

(fortgesetzt)

| Nicht allumfassende Liste von transgenen Events und Merkmalen und deren Handelsnamen. | | | | | |
|---|---|---|---|---|---|
| **Nr.** | **Handelsname** | **Pflanze** | **Unternehmen** | **genetisch modifizierte Eigenschaften** | **zusätzliche Informationen** |
| E-20 | Roundup Ready Flex® | *Gossypium hirsutum* L. (Baumwolle) | Monsanto Company | Toleranz für Glyphosate | |
| E-21 | Roundup Ready® | *Gossypium hirsutum* L. (Baumwolle) | Monsanto Company | Toleranz für Glyphosate | |
| E-22 | Widestrike™ | *Gossypium hirsutum* L. (Baumwolle) | Dow AgroSciences LLC | Cry1F und Cry1Ac | Monsanto/Dow |
| E-23 | YIELD GARD® | *Gossypium hirsutum* L. (Baumwolle) | Monsanto Company | | http://www.garstseed.com/GarstClient/Technology/agrisure.aspx |
| E-24 | Roundup Ready® | *Medicago sativa* (Luzerne) | Monsanto Company | Toleranz für Glyphosate | |
| E-25 | Clearfield® | *Oryza sativa* (Reis) | BASF Corporation | nicht-GMO, Toleranz für Imazamox | |
| E-26 | NewLeaf® | *Solanum tuberosum* L. (Kartoffel) | Monsanto Company | Resistenz gegen Infektion durch Kartoffel-Blattrollvirus (PLRV) und Fraßschaden durch den Kartoffelkäfer Leptinotarsa decemlineata | |
| E-27 | NewLeaf® plus | *Solanum tuberosum* L. (Kartoffel) | Monsanto Company | Resistenz gegen Infektion durch Kartoffel-Blattrollvirus (PLRV) und Fraßschaden durch den Kartoffelkäfer Leptinotarsa decemlineata | http://www.dowagro.com/phytogen/index.htm |
| E-28 | Protecta® | *Solanum tuberosum* L. (Kartoffel) | | | |
| E-29 | Clearfield® | Sonnenblume | BASF Corporation | nicht-GMO, Toleranz für Imazamox | |

(fortgesetzt)

Nicht allumfassende Liste von transgenen Events und Merkmalen und deren Handelsnamen.

| Nr. | Handelsname | Pflanze | Unternehmen | genetisch modifizierte Eigenschaften | zusätzliche Informationen |
|---|---|---|---|---|---|
| E-30 | Roundup Ready® | *Triticum aestivum* (Weizen) | Monsanto Company | Toleranz für Glyphosate, NK603 | |
| E-31 | Clearfield® | Weizen | BASF Corporation | nicht-GMO, Toleranz für Imazamox | |
| E-32 | Agrisure® (Familie) | *Zea mays* L. (Mais) | Syngenta Seeds, Inc. | hierzu zählen Agrisure CB/LL (BT 11-Event plus Toleranz für Phosphinotricin durch GA21-Event); Agrisure CB/LL/RW (Bt 11-Event, modifiziertes synthetisches Cry3A-Gen, Toleranz für Phosphinotricin durch GA21-Event); Agrisure GT (Toleranz für Glyphosate) ; Agrisure GT/CB/LL(Toleranz für Glyphosate und für Phosphinotricin durch GA21-Event, Bt 11-Event); Agrisure 3000GT (CB/LL/RW/GT: Toleranz für Glyphosate und gegen Phosphinotricin durch GA21-Event, Bt 11-Event, modifiziertes synthetisches Cry3A-Gen) ; Agrisure GT/RW (Toleranz für Glyphosate, modifiziertes synthetisches Cry3A-Gen) ; Agrisure RW (modifiziertes synthetisches Cry3A-Gen); Zukünftige Merkmale | |
| E-33 | BiteGard® | *Zea mays* L. (Mais) | Novartis Seeds | cry1A(b) -Gen. | |
| E-34 | Bt-Xtra® | *Zea mays* L. (Mais) | DEKALB Genetics Corporation | cry1Ac-Gen. | |
| E-35 | Clearfield® | *Zea mays* L. (Mais) | BASF Corporation | nicht-GMO, Toleranz für Imazamox | |
| E-36 | Herculex® (Familie) | *Zea mays* L. (Mais) | Dow AgroSciences LLC | | |
| E-37 | IMI® | *Zea mays* L. (Mais) | DuPont | Toleranz für Imidazolinone | |
| E-38 | KnockOut® | *Zea mays* L. (Mais) | Syngenta Seeds, Inc. | SYN-EV176-9: cry1A(b)-Gen. | |
| E-39 | Mavera® | *Zea mays* L. (Mais) | Renessen LLC | lysinreich | http://www.dowagro.com/ widestrike/ |

(fortgesetzt)

| Nicht allumfassende Liste von transgenen Events und Merkmalen und deren Handelsnamen. | | | | | |
|---|---|---|---|---|---|
| **Nr.** | **Handelsname** | **Pflanze** | **Unternehmen** | **genetisch modifizierte Eigenschaften** | **zusätzliche Informationen** |
| E-40 | NatureGard® | *Zea mays* L. (Mais) | Mycogen | cry1A(b)-Gen. | |
| E-41 | Roundup Ready® | *Zea mays* L. (Mais) | Monsanto Company | Toleranz für Glyphosate | http://www.starlinkcom.com/starlinkcom.htm |
| E-42 | Roundup Ready® 2 | *Zea mays* L. (Mais) | Monsanto Company | Toleranz für Glyphosate | |
| E-43 | SmartStax | *Zea mays* L. (Mais) | Monsanto Company | Kombination von acht Genen | |
| E-44 | StarLink® | *Zea mays* L. (Mais) | Aventis CropScience - >Bayer CropScience | Cry9c-Gen. | |
| E-45 | STS® | *Zea mays* L. (Mais) | DuPont | Toleranz für Sulfonylharnstoffe | |
| E-46 | YIELD GARD® | *Zea mays* L. (Mais) | Monsanto Company | Mon810, Cry1Ab1; Resistenz gegen den Maiszünsler | http://www.dowagro.com/herculex/about/herculexfamily/ |
| E-47 | YieldGard Plus | *Zea mays* L. (Mais) | Monsanto Company | Mon810xMon863, Zweierkombination, Resistenz gegen Maiszünsler und Maiswurzelbohrer | |
| E-48 | YieldGard Rootworm | *Zea mays* L. (Mais) | Monsanto Company | Mon863, Cry3Bb1, Resistenz gegen Maiswurzelbohrer | |
| E-49 | YieldGard® VT | *Zea mays* L. (Mais) | Monsanto Company | Merkmalskombination | |
| E-50 | YieldMaker™ | *Zea mays* L. (Mais) | DEKALB Genetics Corporation | enthält Roundup Ready 2-Technologie, YieldGard VT, YieldGard Com Borer, YieldGard Rootworm und YieldGard Plus | |

In einer Ausführungsform werden die Pflanzen, die ein transgenes Event gemäß E-1 bis E-50 von Tabelle E umfassen oder solch ein Merkmal exprimieren ganz oder teilweise, bzw. wird Vermehrungsmaterial dieser Pflanzen, mit den erfindungsgemäßen Wirkstoffkombinationen oder den erfindungsgemäßen Mischungs-Nützlings-Kombinationen behandelt oder in Kontakt gebracht.

Die aufgeführten Pflanzen können besonders vorteilhaft erfindungsgemäß mit den erfindungsgemäßen Wirkstoffkombinationen bzw. Mischungs-Nützlings-Kombinationen behandelt werden. Die bei den Kombinationen oben angegebenen Vorzugsbereiche gelten auch für die Behandlung dieser Pflanzen. Besonders hervorgehoben sei die Pflanzenbehandlung mit den im vorliegenden Text speziell aufgeführten Wirkstoffkombinationen bzw. Mischungs-Nützlings-Kombinationen.

Die Wirkstoffkombinationen bzw. Mischungs-Nützlings-Kombinationen können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen des Wirkstoffs mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Als Streckmittel eignen sich z.B. Wasser, polare und unpolare organische chemische Flüssigkeiten z.B. aus den Klassen der aromatischen und nichtaromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (poly-)Ether, der einfachen und substituierten Amine, Amide, Lactame (wie N-Alkylpyrrolidone) und Lactone, der Sulfone und Sulfoxide (wie Dimethylsulfoxid).

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Papier, Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage nicht-ionische und/oder ionische Stoffe, z.B. aus den Klassen der Alkohol-POE- und/oder POP-Ether, Säure- und/oder POP- POE-Ester, Alkyl-Aryl- und/oder POP- POE-Ether, Fett- und/oder POP- POE-Addukte, POE- und/oder POP-Polyol Derivate, POE- und/oder POP-Sorbitan- oder-Zucker-Addukte, Alkyoder Aryl-Sulfate, Sulfonate und Phosphate oder die entsprechenden PO-Ether-Addukte. Ferner geeignete Oligo- oder Polymere, z.B. ausgehend von vinylischen Monomeren, von Acrylsäure, aus EO und/oder PO allein oder in Verbindung mit z.B. (poly-) Alkoholen oder (poly-) Aminen. Ferner können Einsatz finden Lignin und seine Sulfonsäure-Derivate, einfache und modifizierte Cellulosen, aromatische und/oder aliphatische Sulfonsäuren sowie deren Addukte mit Formaldehyd.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 % und daneben bevorzugt Streckmittel und/oder oberflächenaktive Mittel.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten üblichen Weise.

Die gute insektizide und/oder akarizide Wirkung der Wirkstoffkombinationen geht aus den nachfolgenden Beispielen hervor. Während die einzelnen Wirkstoffe in der Wirkung Schwächen aufweisen, zeigen die Kombinationen eine Wirkung, die über eine einfache Wirkungssummierung hinausgeht.

Ein synergistischer Effekt liegt bei Insektiziden/Akariziden immer dann vor, wenn die Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby, Weeds 15 (1967), 20-22) wie folgt berechnet werden:

Wenn

X den Abtötungsgrad, ausgedrückt in % der unbehandelten Kontrolle, beim Einsatz des Wirkstoffes A in einer Aufwandmenge von m g/ha oder in einer Konzentration von m ppm bedeutet,

Y den Abtötungsgrad, ausgedrückt in % der unbehandelten Kontrolle, beim Einsatz des Wirkstoffes B in einer Aufwandmenge von n g/ha oder in einer Konzentration von n ppm bedeutet und

E den Abtötungsgrad, ausgedrückt in % der unbehandelten Kontrolle, beim Einsatz der Wirkstoffe A und B in Aufwandmengen von m und n g/ha oder in einer Konzentration von m und n ppm bedeutet,

dann ist

$$E = X + Y - \frac{X \cdot Y}{100}$$

Ist der tatsächliche insektizide Abtötungsgrad größer als berechnet, so ist die Kombination in ihrer Abtötung überadditiv, d.h. es liegt ein synergistischer Effekt vor. In diesem Fall muß der tatsächlich beobachtete Abtötungsgrad größer sein als der aus der oben angeführten Formel errechnete Wert für den erwarteten Abtötungsgrad (E).

Besonders bevorzugt sind tierische Schädlinge aus der Ordnung der Milben (Acari), insbesondere aus den Familien der Gallmilben (Eriophyidae), Weichhautmilben (Tarsonemidae) und Spinnmilben (Tetranychidae).

Gallmilben (Eriophyidae)

Ganz besonders bevorzugt ist die Bekämpfung folgender Arten aus der Familie der Gallmilben (Eriophyidae) in folgenden Kulturen:

| | |
|---|---|
| Aculops lycopersici<br>Aculops pelekassi | in Gemüse wie z.B. Tomaten, Auberginen, in Citrus wie z.B. Orangen, Grapefruits, Mandarinen |
| Aculus schlechtendali<br>Aculus fokeui, Aculus berochensis<br>Aculus conutus | in Kernobst wie z.B. Äpfel, in Steinobst wie z.B Zwetschgen, Pfirsiche |
| Aceria sheldoni<br>Aceria tulipai | in Zitrus wie z.B. Orangen, Klementinen, Limonen, in Gemüse wie z.B. Zwiebeln, Getreide wie z.B. Weizen |
| Epitrimerus pyri<br>Epitrimerus vitis | in Kernobst wie z.B. Birnen, in Wein |

(fortgesetzt)

| | |
|---|---|
| Eriophyes avellanae<br>Eriophyes guerreronis<br>Eriophyes litchii<br>Eriophyes piri<br>Eriophyes ribis<br>Eriophyes theae<br>Eriophyes vitis | in Nüssen, wie z.B. Haselnüsse, in Coniferen, in tropischen Kulturen, wie z.B. Kokosnüsse, Litchies, in Kernobst, wie z.B. Birnen, in Beerenfrüchten, wie z.B. Johannisbeeren, in Tee, in Wein |
| Phyllocoptrutua oleivora | in Citrus, wie z.B. Oangen, Grapefruits, Mandarinen |

Weichhautmilben (Tarsonemidae)

Ganz besonders bevorzugt ist die Bekämpfung folgender Arten aus der Familie der Weichhautmilben (Tarsonemidae) in folgenden Kulturen:

| | |
|---|---|
| Hemitarsonemus latus | in Zierpflanzen, in Soja, in Baumwolle, in Gemüse, wie z.B. Chilli, Paprika, Tee, Koniferen |

Spinnmilben (Tetranychidae)

Ganz besonders bevorzugt ist die Bekämpfung folgender Arten aus der Familie der Spinnmilben (Tetranychidae) in folgenden Kulturen:

| | |
|---|---|
| Brevipalpus lewisi<br>Brevipalpus obovatus<br>Brevipalpus oudemansi<br>Brevipalpus phoenicis | in Zitrus, wie z.B. Orangen, Zitronen, Grapefruits, Mandarinen, in Zierpflanzen, z.B. Nachtschattengewächse, in Kaffee, in tropischen Früchten, wie z.B. Mangos, Passionsfrüchte, Papayas, in Wein, in Tee, in Kernobst, wie z.B. Äpfel und Birnen, in Nüssen z.B. Walnüsse |
| Eotetranychus carpirii<br>Eotetranychus willamelti<br>Eotetranychus hicoriae<br>Eotetranychus yumensis | in Wein, in Nüssen, wie z.B. Pecannüsse, in Citrus wie z.B. Limonen, Klementinen, Grapefruits, Kernobst, z.B. Äpfel, Birnen |
| Panonychus citri<br>Panonychus ulmi | in Wein, in Kernobst, z.B. Äpfel, Birnen, in Steinobst, z.B. Pfirsiche, Kirschen, Zwetschgen, Pflaumen, in Citrus, wie z.B. Orangen, Mandarinen, Grapefruits, Limonen, in Beerenfrüchten, wie z.B. Johannisbeeren, in Nüssen, wie z.B. Mandeln, Walnüsse |

(fortgesetzt)

| | |
|---|---|
| Tetranychus canadensis<br>Tetranychus urticae<br>Tetranychus parcificus<br>Tetranychus cinnabarinus<br>Tetranychus turkestani<br>Tetranychus viennensis<br>Tetranychus kanzawai | in Kernobst, wie z.B. Äpfel, Birnen, in Steinobst, wie z.B. Pflaumen, Pfirsiche, Kirschen, in Beerenobst, wie z.B. Erdbeeren, Stachelbeeren, Himbeeren, in Gemüse, wie z.B. Tomaten, Gurke, Auberginen, Paprika, Chillis, in Zierpflanzen, wie z.B. Rosen, Orchideen, Schönmalven, in Coniferen, in Gehölzen, in Wein, in Nüssen, wie z.B. Mandeln, Pistazien, in Soja, in Baumwolle, in Tee, in Hopfen |
| Oligonychus coffeae<br>Oligonychus ilicis<br>Oligonychus mexicanus<br>Oligonychus persea<br>Oligonychus punicae | in Kaffee, in Mais, in tropischen Früchten, wie z.B. Avocados, Persimon, in Steinobst, wie z.B. Pflaumen, in Wein |

Beispiel 1

In ca. 14 $m^2$ großen Parzellen werden Auberginen (ca. 11 Wochen nach der Verpflanzung) der Sorte "Heilongchangqie" in drei Replikationen gegen Tetranychus urticae behandelt. Die Applikation erfolgt mit einem Sprühgerät. Dabei wird die Mischung der Wirkstoffe Oberon Beispiel (I) und Abamectin Beispiel (VI) gegen die kommerziellen Standards Abamectin (018 EC) und Oberon (240 SC) in den angegebenen Aufwandmengen und Mischungsverhältnissen geprüft. Die Wasseraufwandmenge beträgt 450 l/ha.

Die Auswertung erfolgt 1 und 55 Tage nach der Behandlung, indem man die Abtötung der Eier auf den Blättern bonitiert.

| Wirkstoff | Aufwandmenge g a.i./ha | Abtötung (% Abbott) | |
|---|---|---|---|
| | | 1 Tag | 55 Tage |
| Abamectin (VI) | 10 | 19.8 | 0 |
| Oberon (I) | 120 | 26.7 | 0 |
| Oberon (I)<br>+<br>Abamectin (VI) | 120<br>+<br>6 | 65.1* (41.2)** | 42.0* (0)** |
| * gefundene Wirkung<br>* * nach Colby-Formel berechnete Wirkung | | | |

Eine weitere Auswertung erfolgt 45 und 55 Tage nach der Behandlung, indem man die Abtötung der Nymphen auf den Blättern bonitiert.

| Wirkstoff | Aufwandmenge g a.i./ha | Abtötung (% Abbott) | |
|---|---|---|---|
| | | 45 Tage | 55 Tage |
| Abamectin (VI) | 10 | 0 | 0 |

(fortgesetzt)

| Wirkstoff | Aufwandmenge g a.i./ha | Abtötung (% Abbott) | |
|---|---|---|---|
| | | 45 Tage | 55 Tage |
| Oberon (I) | 120 | 14.8 | 24.1 |
| Oberon (I) + Abamectin (VI) | 120 + 6 | 57.2* (14.8)** | 61.4*(24.1)** |
| * gefundene Wirkung<br>* * nach Colby-Formel berechnete Wirkung | | | |

Beispiel 2

In ca. 6 $m^2$ großen Parzellen werden ca. 3 Jahre alte Rosen der Sorte "Blizard" in drei Replikationen gegen Tetranychus urticae behandelt. Die Applikation erfolgt mit einem Rückensprühgerät (3.5 bar). Dabei wird die Mischung der Wirkstoffe Oberon Beispiel (I) und Abamectin Beispiel (VI) gegen die kommerziellen Standards Abamectin (018 EC) und Oberon (240 SC) in den angegebenen Aufwandmengen und Mischungsverhältnissen geprüft. Die Wasseraufwandmenge beträgt 1320 l/ha.

Die Auswertung erfolgt 3 Tage nach der Behandlung, durch Zählen der adulten Tiere auf den Blättern / Square inch. Anschließend wird der Wirkungsgrad in Prozent nach Henderson und Tilton berechnet

| Wirkstoff | Aufwandmenge g a.i./ha | Wirkung (% H. + T.) 3 Tage |
|---|---|---|
| Abamectin (VI) | 21 | 0 |
| Oberon (I) | 210 | 40.7 |
| Oberon (I) + Abamectin (VI) | 210 + 21 | 72.2* (40.7)** |
| * gefundener nach Henderson und Tilton berechneter Wirkungsgrad<br>** nach Colby berechneter Wirkungsgrad | | |

| Wirkstoff | Aufwandmenge g a.i./ha | Wirkung (% H. + T.) 3 Tage |
|---|---|---|
| Abamectin (VI) | 10.5 | 0 |
| Oberon (I) | 105 | 32.2 |
| Oberon (I) + Abamectin (VI) | 105 + 10.5 | 52.7* (32.2)** |
| * gefundener nach Henderson und Tilton berechneter Wirkungsgrad<br>** nach Colby berechneter Wirkungsgrad | | |

Beispiel 3

In ca. 6 $m^2$ großen Parzellen werden Tomaten der Sorte "Leader" in drei Replikationen gegen Tetranychus urticae behandelt. Die Applikation erfolgt mit einem Rückensprühgerät (4.5 bar). Dabei wird die Mischung der Wirkstoffe Beispiel Oberon Beispiel (I) und Abamectin Beispiel (VI) gegen die kommerziellen Standards Abamectin (018 EC) und Oberon (480 SC) in den angegebenen Aufwandmengen und Mischungsverhältnissen geprüft. Die Wasseraufwandmenge beträgt 1000 l/ha.

Die Auswertung erfolgt 3 Tage nach der Behandlung, indem man die Abtötung der adulten Tiere auf den Blättern boniert.

| Wirkstoff | Aufwandmenge g a.i./ha | Abtötung (% Abbott) 3 Tage |
|---|---|---|
| Abamectin (VI) | 10 | 45.8 |
| Oberon (I) | 120 | 25.0 |
| Oberon (I)<br>+<br>Abamectin (VI) | 120<br>+<br>6 | 75* (59.4)** |
| * gefundene Wirkung<br>* * nach Colby-Formel berechnete Wirkung | | |

Beispiel 4

(Vergleichsbeispiel)

In ca. 15 $m^2$ großen Parzellen werden ca. 80 cm hohe Baumwollpflanzen der Sorte "BRS Aroeira" in drei Replikationen gegen Tetranychus urticae behandelt. Die Applikation erfolgt mit einem Sprühgerät mit 2.5 bar. Dabei wird die Mischung der Wirkstoffe Oberon Beispiel (I) und Abamectin Beispiel (VI) gegen die kommerziellen Standards Abamectin (018 EC) und Oberon (240 SC) in den angegebenen Aufwandmengen und Mischungsverhältnissen geprüft. Die Wasseraufwandmenge beträgt 200 l/ha.

Die Auswertung erfolgt 13 Tage nach der Behandlung, indem man die Abtötung der Population auf den Blättern bonitiert.

| Wirkstoff | Aufwandmenge g a.i./ha | Abtötung (% Abbott) 13 Tage |
|---|---|---|
| Abamectin (VI) | 7.2 | 16.5 |
| Oberon (I) | 120 | 58.5 |
| Oberon (I)<br>+<br>Abamectin (VI) | 120<br>+<br>7.2 | 70.0* (65.3)** |
| * gefundene Wirkung<br>* * nach Colby-Formel berechnete Wirkung | | |

Beispiel 5

In ca. 14 $m^2$ großen Parzellen werden Rosen (Wachsstumstadium 46) der Sorte "Freedom" in Zweierreihen in drei Replikationen gegen Tetranychus urticae behandelt. Die Applikation erfolgt mit einem Rückensprühgerät. Dabei wird die Mischung der Wirkstoffe Oberon Beispiel (I) und Abamectin Beispiel (VI) gegen die kommerziellen Standards Abamectin (018 EC) und Oberon (240 SC) in den angegebenen Aufwandmengen und Mischungsverhältnissen geprüft. Die Wasseraufwandmenge beträgt 1000 l/ha.

Die Auswertung erfolgt 1 Tag nach der Behandlung, indem man die Abtötung der Population auf den Blättern bonitiert.

| Wirkstoff | Aufwandmenge g a.i./ha | Wirkung (% Abbott) 1 Tag |
|---|---|---|
| Abamectin (VI) | 6 | 27 |
| Oberon (I) | 120 | 32.4 |
| Oberon (I)<br>+<br>Abamectin (VI) | 120<br>+<br>6 | 59.5* (50.7)** |
| * gefundene Wirkung<br>** nach Colby-Formel berechnete Wirkung | | |

Beispiel 6

In ca. 8 $m^2$ großen Parzellen werden Auberginen (Wachstumsstadium 15) der Sorte "Suqi qie" in drei Replikationen gegen Tetranychus urticae behandelt. Die Applikation erfolgt mit einem Rückensprühgerät. Dabei wird eine Fertigmischung (Mischungsverhältnis 20:1) der Wirkstoffe Oberon Beispiel (I) und Abamectin Beispiel (VI) als SC 240 gegen die kommerziellen Standards Abamectin (018 EC) und Oberon (240 SC) in den angegebenen Aufwandmengen geprüft. Die Wasseraufwandmenge beträgt 450 l/ha.

Die Auswertung erfolgt 1 Tag nach der Behandlung, indem man die Abtötung der Männchen auf den Blättern bonitiert.

| Wirkstoff | Aufwandmenge g a.i./ha | Abtötung (% Abbott) 1 Tage |
|---|---|---|
| Abamectin (VI) | 10 | 33.3 |
| Oberon (I) | 120 | 0 |
| Oberon (I)<br>+<br>Abamectin (VI) | 120<br>+<br>6 | 73.3* (33.3)** |
| * gefundene Wirkung<br>* * nach Colby-Formel berechnete Wirkung | | |

Eine weitere Auswertung erfolgt 21 Tage nach der Behandlung, indem man die Abtötung der Eier, die Abtötung der Männchen und die Gesamtpopulation auf den Blättern bonitiert.

| Wirkstoff | Aufwandmenge g a.i./ha | Abtötung (% Abbott) | | |
|---|---|---|---|---|
| | | 21 Tage (Eier) | 21 Tage (Männchen) | 21 Tage (Population) |
| Abamectin (VI) | 10 | 0 | 45 | 47.6 |
| Oberon (I) | 120 | 0 | 5 | 1.9 |
| Oberon (I)<br>+<br>Abamectin (VI) | 120<br>+<br>6 | 25* (0)** | 80.0* (47.8)** | 77.7* (40.5)** |
| * gefundene Wirkung<br>* * nach Colby-Formel berechnete Wirkung | | | | |

Beispiel 7

In ca. 6 $m^2$ großen Parzellen werden Paprika der Sorte "California Wonder" (Wachstumsstadium 75) in drei Replikationen gegen Hemitarsonemus latus behandelt. Die Applikation erfolgt mit einem Sprühgerät bei 2.5 bar Druck. Dabei wird eine Fertigmischung (Mischungsverhältnis 20:1) der Wirkstoffe Oberon Beispiel (I) und Abamectin Beispiel (VI) als SC 240 gegen die kommerziellen Standards Abamectin (018 EC) und Oberon (240 SC) in den angegebenen Aufwandmengen und Mischungsverhältnissen geprüft. Die Wasseraufwandmenge beträgt 300 l/ha.

Die Auswertung erfolgt 2 Tage nach der Behandlung, indem man die Abtötung der adulten Tiere auf den Blättern bonitiert.

| Wirkstoff | Aufwandmenge g a.i./ha | Abtötung (% Abbott) 2 Tage |
|---|---|---|
| Abamectin (VI) | 10 | 0 |
| Oberon (I) | 120 | 50 |
| Oberon (I)<br>+<br>Abamectin (VI) | 120<br>+<br>6 | 92.9* (50)** |
| * gefundene Wirkung<br>* * nach Colby-Formel berechnete Wirkung | | |

Beispiel 8

**Tetranychus urticae -Test auf Baumwolle**

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration. Baumwollpflanzen (*Gossypium hirsutum*), die mit der Gemeinen Spinnmilbe (*Tetranychus urticae*) infiziert sind, werden durch Spritzen mit der Wirkstoffzubereitung in der gewünschten Konzentration behandelt.

Nach der gewünschten Zeit wird die Abtötung in % bestimmt. Dabei bedeutet 100 %, dass alle Spinnmilben abgetötet wurden; 0 % bedeutet, dass keine Spinnmilben abgetötet wurden. Die ermittelten Abtötungswerte verrechnet man nach der Colby-Formel.

Bei diesem Test zeigt die folgende Wirkstoffkombination gemäß vorliegender Anmeldung eine synergistisch verstärkte Wirksamkeit im Vergleich zu den einzeln angewendeten Verbindungen:

Tabelle: **Tetranychus urticae - Test auf Baumwolle**

| **Wirkstoff** | **Konzentration g ai/ha** | **Abtötung in % nach 3d** | |
|---|---|---|---|
| | | | |
| **Abamectin (VI)** | 4 | 10 | |
| **Spiromesifen (I)** | 100 | 30 | |
| **Abamectin + Spiromesifen (1 : 25)**<br>Vergleich sbeispiel | **4+100** | **gef.***<br>**75** | **ber.****<br>**37** |
| *gef.=gefundeneWirkung<br>** ber. = nach der Colby-Formel berechnete Wirkung | | | |

**Thripse (Thripidae)**

Weiterhin ganz besonders bevorzugt ist die Bekämpfung folgender Arten aus der Familie der Thripse (Thripidae) in folgenden Kulturen:

| | |
|---|---|
| Frankliniella occidentalis<br>Frankliniella schultzei<br>Frankliniella fusca | in Gemüse wie z.B. Paprika, Tomaten, Gurken, Kohl z.B. Broccoli, Bohnen, Salat, Auberginen, Zucchini, Kürbisse, in Beerenfrüchten, z.B. Erdbeeren, in Melonen z.B. Wassermelonen, Netzmelonen, Cantaloup-Melonen, in Zierpflanzen wie Rosen, Hibiskus, Chrysanthemen sowie in Kartoffeln und in tropischen Kulturen wie z.B. Papayas, Avocado, Baumwolle, Tabak, Coniferen |
| Thrips palmi<br>Thrips tabaci<br>Thrips hawaiiensis | in Baumwolle, in Gemüse wie z.B. Paprika, Tomaten, Gurken, Bohnen, Kürbisgewächse, Auberginen, Zucchini, Kohl, Lauch, Zwiebeln, Frühlingszwiebeln, in Beerenfrüchten, in Melonen z.B. Wassermelonen, Netzmelonen, Cantaloup-Melonen, in Zierpflanzen wie z.B. Rosen, Hibiskus, in tropischen Kulturen wie z.B. Papayas, Ananas, Bananen, Kartoffeln, Wein, Baumwolle, Reis, Nüsse |
| Heliothrips haemorrhoidalis | in Gemüse wie z.B. Tomaten, Paprika, Bohnen, Gurken, Kürbisse, Auberginen, in Melonen sowie in Zierpflanzen wie z.B. Rosen, Hibiskus, Azaleen, tropische Kulturen wie Guaven, Zitrus wie z.B. Zitronen, Orangen, Wein, Nüsse wie z.B. Macademia-Nüsse |

(fortgesetzt)

| | |
|---|---|
| Hercinothrips femoralis<br>Hercinothrips bicinctus<br><br>Hercinothrips phaseoli | in tropischen Kulturen wie z.B. Bananen, Zierpflanzen, Gemüse wie z.B. Bohnen |
| Caliothrips phaseoli | in Gemüse, wie z.B. Bohnen, Zucchini, in tropischen Früchten wie z.B. Avocados |
| Baliothrips biformis | in Reis |
| Anaphothrips obscurus | in Mais, Kohlgemüse wie z.B. Weißkohl, Getreide wie z.B. Weizen |
| Scirthothrips aurantii<br>Scirthothrips dorsalis<br>Scirthothrips citri | in Zitrus wie z.B. Orangen, Zitronen, Grapefruits, Mandarinen, Zierpflanzen, Gemüse wie z.B. Gurken, Tomaten, Bohnen, Auberginen, Kürbisse; Melonen wie Wassermelonen, Cantaloup-Melonen, Gewürze wie Chilli; Tee |
| Kakothrips pisivora | in Gemüse wie z.B. Erbsen, Bohnen |

Beispiel 9

In ca. 10 $m^2$ großen Parzellen werden Paprika der Sorte "Italiano verde" in drei Replikationen gegen Frankliniella occidentalis behandelt. Die Applikation erfolgt mit einem Rückensprühgerät (10 bar). Dabei wird die Mischung der Wirkstoffe Oberon Beispiel (I) und Abamectin Beispiel (VI) gegen die kommerziellen Standards Abamectin (018 EC) und Oberon (240 SC) in den angegebenen Aufwandmengen und Mischungsverhältnissen geprüft. Die Wasseraufwandmenge beträgt 750 l/ha. Es werden zwei Applikationen im Abstand von 7 Tagen durchgeführt.

Die Auswertung erfolgt 7 Tage nach der zweiten Behandlung, indem man die Abtötung der adulten Tiere in den Blüten boniert.

| Wirkstoff | Aufwandmenge g a.i./ha | Abtötung (% Abbott) 7 Tage |
|---|---|---|
| Abamectin (VI) | 10.5 | 0 |
| Oberon (I) | 105 | 3.3 |
| Oberon (I)<br>+<br>Abamectin (VI) | 105<br>+<br>10.5 | 27.8* (3.3)** |
| * gefundene Wirkung<br>* * nach Colby-Formel berechnete Wirkung | | |

Die Auswertung erfolgt 14 Tage nach der zweiten Behandlung, indem man die Abtötung der gemischten Population in den Blüten boniert.

| Wirkstoff | Aufwandmenge g a.i./ha | Abtötung (% Abbott) 14 Tage | Aufwandmenge g a.i./ha | Abtötung (% Abbott) 14 Tage |
|---|---|---|---|---|
| Abamectin (VI) | 21 | 2.0 | 10.5 | 0 |

(fortgesetzt)

| Wirkstoff | Aufwandmenge g a.i./ha | Abtötung (% Abbott) 14 Tage | Aufwandmenge g a.i./ha | Abtötung (% Abbott) 14 Tage |
|---|---|---|---|---|
| Oberon (I) | 210 | 0 | 105 | 0 |
| Oberon (I)<br>+<br>Abamectin (VI) | 210<br>+<br>21 | 26.1* (2.0)** | 105<br>+<br>10.5 | 16.7* (0)** |
| * gefundene Wirkung<br>* * nach Colby-Formel berechnete Wirkung | | | | |

**Mottenschildläuse (Aleyrodidae)**

Weiterhin ganz besonders bevorzugt ist die Bekämpfung folgender Arten aus der Familie der Mottenschildläuse (Aleyrodidae) in folgenden Kulturen:

| | |
|---|---|
| Bemisia tabaci | in Gemüse wie Paprika, Tomaten, Gurken, Kohl z.B. Broccoli, Bohnen, Salat, Auberginen, Zucchini, Kürbisse, in Beerenfrüchten, in Melonen z.B. Wassermelonen, Netzmelonen, Cantaloup-Melonen, in Zierpflanzen wie Rosen, Hibiskus, in Zitrus wie Orangen, Mandarinen, Grapefruits sowie in Kartoffeln, in Tabak, in Soja, in Baumwolle und in tropischen Kulturen wie z.B. Papayas, Bananen, |
| Bemisia argentifolii | in Baumwolle, in Gemüse wie Paprika, Tomaten, Gurken, Bohnen, Sojabohnen, Kürbisgewächse, Auberginen, Zucchini, Kohl, in Beerenfrüchten, in Melonen z.B. Wassermelonen, Netzmelonen, Cantaloup-Melonen, in Zierpflanzen wie z.B. Rosen, Hibiskus, in tropischen Kulturen wie z.B. Papayas, Bananen, in Soja, in Baumwolle |
| Trialeurodes vaporariorum | in Gemüse wie Tomate, Paprika, Bohnen, Gurken, Kürbisse, Auberginen, in Beerenfrüchten, in Melonen sowie in Zierpflanzen wie z.B. Rosen, Hibiskus, |
| Aleurothrixus floccosus | in Zitrus wie Orangen, Mandarinen, Zitronen, Apfelsinen, |
| Aleurodes citri | in Zitrus wie Orangen, Mandarinen, Zitronen, Grapefruits, Limetten, Kumquats, |
| Aleurodes fragriae | in Beerenfrüchten, wie z.B. Erdbeeren |
| Aleurodes azaleae | in Zierpflanzen, wie z.B. Azaleen |

Beispiel 10

**Bemisia tabaci -Test auf Baumwolle**

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Baumwollpflanzen (*Gossypium hirsutum*), die mit der Weißen Fliege (*Bemisia tabaci*) infiziert sind, werden durch Spritzen mit der Wirkstoffzubereitung in der gewünschten Konzentration behandelt.

Nach der gewünschten Zeit wird die Abtötung in % bestimmt. Dabei bedeutet 100 %, dass alle Weißen Fliegen abgetötet wurden; 0 % bedeutet, dass keine Weißen Fliegen abgetötet wurden. Die ermittelten Abtötungswerte verrechnet man nach der Colby-Formel.

Bei diesem Test zeigt die folgende Wirkstoffkombination gemäß vorliegender Anmeldung eine synergistisch verstärkte Wirksamkeit im Vergleich zu den einzeln angewendeten Verbindungen:

Tabelle: **Bemisia tabaci - Test auf Baumwolle**

| Wirkstoff | Konzentration g ai/ha | Abtötung in % nach 7$^d$ | |
|---|---|---|---|
| | | | |
| **Abamectin (VI)** | 6 | 0 | |
| **Spiromesifen (I)** | 120 | 70 | |
| **Abamectin & Spiromesifen (1 : 20)**<br>Erfindungsgemäß | **6+120** | **gef.*** **90** | **ber.**** **70** |
| gef.=gefundeneWirkung<br>** ber. = nach der Colby-Formel berechnete Wirkung | | | |

Beispiel 11

**Bemisia tabaci - Test auf Kohl**

Lösungsmittel: 7 Gewichtsteile Dimethylformamid
Emulgator: 2 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.
Kohlpflanzen (*Brassica oleracea*), die mit der Weißen Fliege (*Bemisia tabaci*) infiziert sind, werden durch Spritzen mit der Wirkstoffzubereitung in der gewünschten Konzentration behandelt.
Nach der gewünschten Zeit wird die Abtötung in % bestimmt. Dabei bedeutet 100 %, dass alle Weißen Fliegen abgetötet wurden; 0 % bedeutet, dass keine Weißen Fliegen abgetötet wurden. Die ermittelten Abtötungswerte verrechnet man nach der Colby-Formel.
Bei diesem Test zeigte die folgende Wirkstoffkombination gemäß vorliegender Anmeldung eine synergistisch verstärkte Wirksamkeit im Vergleich zu den einzeln angewendeten Verbindungen:

**Tabelle: Bemisia tabaci - Test auf Kohl**

| Wirkstoff | Konzentration g ai/ha | Abtötung in % nach 9$^d$ | |
|---|---|---|---|
| | | | |
| **Abamectin (VI)** | 15<br>6 | 0<br>0 | |
| **Spiromesifen (I)** | 150 | 55 | |
| **Abamectin + Spiromesifen** | | **gef.*** | **ber.**** |
| **(1 : 10)** | **15 + 150** | **85** | **55** |
| **(1 : 25)**<br>(Vergleichsbeispiel) | **6 + 150** | **65** | **55** |
| *gef.=gefundeneWirkung<br>** ber. = nach der Colby-Formel berechnete Wirkung | | | |

**Minierfliegen (Agromyzidae)**

Weiterhin ganz besonders bevorzugt ist die Bekämpfung folgender Arten aus der Familie der Minierfliegen (Agromyzidae) in folgenden Kulturen:

| | |
|---|---|
| Liriomyza brassicae<br>Liriomyza bryoniae<br>Liriomyza cepae<br>Liriomyza chilensis<br>Liriomyza hunidobrensis<br>Liriomyza sativae<br>Liriomyza trifolie<br>Liriomyza quadrata | in Gemüse wie Paprika, Tomaten, Gurken, Kohl, Bohnen, Salat, Auberginen, Zucchini, Kürbisse, in Melonen z.B. Wassermelonen, Netzmelonen, Cantaloup-Melonen, in Zierpflanzen wie Rosen, Hibiskus, sowie in Kartoffeln, Rüben, |
| Pegomya hyoscyami<br>Pegomya spinaciae | in Rüben, in Gemüse und Getreide, z.B. Weizen |

**Blattflöhe (Psyllidae)**

Ganz besonders bevorzugt ist die Bekämpfung folgender Arten aus der Familie der Blattflöhe (Psyllidae):

| | |
|---|---|
| Psylla pyricola | in Kernobst wie z.B. Birnen, Äpfeln, in Steinobst wie z.B. Kirschen, Pflaumen, Zwetschgen, Pfirsischen, Nektarinen |
| Psylla piri | in Kernobst wie z.B. Birnen |
| Psylla pyrisuga | in Kernobst wie z.B. Birnen |
| Psylla costalis | in Kernobst wie z.B. Äpfeln |
| Paratrioza cockerelli | in Fruchtgemüse wie z.B. Tomaten, Paprika, Chillis, in Wurzelgemüse wie z.B. Möhren, in Kartoffeln |
| Tenalaphara malayensis | in tropischen Kulturen wie z.B. Durians (Stinkfrüchte), |
| Diaphorina citri | in Zitrus wie z.B. Orangen, Mandarinen, Limonen, Grapefruits, |
| Trioza erythrae | in Zitrus wie z.B. Orangen, Grapefruits |

Die gute Nützlingsschonung und/oder insektizide und/oder akarizide Wirkung der erfindungsgemäßen Mischungs-Nützlings-Kombinationen geht aus den nachfolgenden Beispielen hervor.

Die zu erwartende Wirkung für eine gegebene Kombination zweier Wirkstoffe kann nach Colby, S.R., Weeds 15, Seiten 20-22, (1967) wie folgt berechnet werden:

Wenn

X den Abtötungsgrad, ausgedrücht in % der unbehandelten Kontrolle, beim Einsatz des Wirkstoffes A in einer Aufwandmenge von m g/ha oder in einer Konzentration von m ppm bedeutet,

Y den Abtötungsgrad, ausgedrücht in % der unbehandelten Kontrolle, beim Einsatz des Wirkstoffes B in einer Aufwandmenge von n g/ha oder in einer Konzentration von n ppm bedeutet,

E den Abtötungsgrad, ausgedrücht in % der unbehandelten Kontrolle, beim Einsatz der Wirkstoffe A und B in Aufwandmengen von m und n g/ha oder in einer Konzentration von m und n ppm bedeutet,

dann ist

$$E = X + Y - \frac{X \cdot Y}{100}$$

Ist der tatsächliche insektizide oder akarizide Abtötungsgrad kleiner als berechnet, so ist die Kombination in ihrer Abtötung nicht additiv, d.h. es liegt ein antagonistischer Effekt vor und die Nützlingspopulation wird geschont. In diesem Fall muss der tatsächlich beobachtete Abtötungsgrad kleiner sein als der aus der oben angeführten Formel errechnete Wert für den erwarteten Abtötungsgrad (E).

## Beispiel 12

### Amblyseius swirskii-Test auf Pflaume

Zur Herstellung einer zweckmäßigen Applikationslösung verdünnt man die jeweilige Formulierung auf die gewünschte Konzentration.

Pflaumenblätter, die mit einer gemischten Population der Raubmilbe (*Amblyseius swirskii*) besiedelt sind, werden durch Spritzen mit der Applikationslösung in der gewünschten Konzentration behandelt.

Nach der gewünschten Zeit wird die Anzahl der aktiven Stadien in % bestimmt. Dabei bedeutet 100 %, dass alle Raubmilben abgetötet wurden; 0 % bedeutet, dass keine Raubmilben abgetötet wurden. Die ermittelten Abtötungswerte verrechnet man nach der Colby-Formel.

Bei diesem Test zeigt sich, dass die Wirkstoffkombination in verschiedenen Konzentrationsbereichen nützlingsschonender ist im Vergleich zu mindestens einer einzeln angewendeten Verbindung:

**Tabelle: Amblyseius swirskii - Test auf Pflaume**

| Wirkstoff | Konzentration g ai/ha | Abtötung in % nach 1d | | Abtötung in % nach 4d | |
|---|---|---|---|---|---|
| **Abamectin (VI) EC 018** | 6 | 62 | | 68 | |
| **Spiromesifen (I) SC 240** | 120 | 28 | | 32 | |
| **Abamectin EC 018 + Spiromesifen SC 240 (1 : 20)** Erfindungsgemäß | **6 + 120** | **gef.*** **41** | **ber.**** **78,64** | **gef.*** **44** | **ber.**** **78,24** |
| **Abamectin (VI) EC 018** | 3 | 38 | | 44 | |
| **Spiromesifen (I) SC 240** | 60 | 17 | | 20 | |
| **Abamectin EC 018 + Spiromesifen SC 240 (1 : 20)** Erfindungsgemäß | **3 + 60** | **gef.*** **21** | **ber.**** **48,54** | **gef.*** **24** | **ber.**** **55,2** |
| *gef.=gefundeneWirkung<br>** ber. = nach der Colby-Formel berechnete Wirkung | | | | | |

## Beispiel 13

### Coccinella septempunctata/Larven -Test auf Pflaume

Zur Herstellung einer zweckmäßigen Applikationslösung verdünnt man die jeweilige Formulierung auf die gewünschte Konzentration.

Pflaumenblätter, die mit Larven des Marienkäfers *(Coccinella septempunctata)* besiedelt sind, werden durch Spritzen mit der Applikationslösung in der gewünschten Konzentration behandelt.

Nach der gewünschten Zeit wird die Abtötung in % bestimmt. Dabei bedeutet 100 %, dass alle Marienkäferlarven abgetötet wurden; 0 % bedeutet, dass keine Marienkäferlarven abgetötet wurden. Die ermittelten Abtötungswerte verrechnet man nach der Colby-Formel.

Bei diesem Test zeigt sich, dass die Wirkstoffkombination in verschiedenen Konzentrationsbereichen nützlingsschonender ist im Vergleich zu mindestens einer einzeln angewendeten Verbindung:

Tabelle: **Coccinella septempunctata Larven - Test auf Pflaume**

| Wirkstoff | Konzentration g ai/ha | Abtötung in % nach 3d |
|---|---|---|
| **Abamectin (VI) EC 018** | 6 | 100 |
| **Spiromesifen (I) SC 240** | 120 | 10 |

(fortgesetzt)

| Wirkstoff | Konzentration g ai/ha | Abtötung in % nach 3d | |
|---|---|---|---|
| **Abamectin EC 018 + Spiromesifen SC 240 (1 : 20)** Erfindungsgemäß | **6 + 120** | **gef.*** **73** | **ber.**** **100** |
| **Abamectin (VI) EC 018** | 3 | 63 | |
| **Spiromesifen (I) SC 240** | 60 | 3 | |
| **Abamectin EC 018 + Spiromesifen SC 240 (1 : 20)** Erfindungsgemäß | **3 + 60** | **gef.*** **33** | **ber.**** **64,11** |
| *gef.=gefundeneWirkung<br>** ber. = nach der Colby-Formel berechnete Wirkung | | | |

**Minierfliegen (Agromyzidae)**

Weiterhin ganz besonders bevorzugt ist die Bekämpfung folgender Arten aus der Familie der Minierfliegen (Agromyzidae) in folgenden Kulturen:

| | |
|---|---|
| Liriomyza brassicae<br>Liriomyza bryoniae<br>Liriomyza cepae<br>Liriomyza chilensis<br>Liriomyza hunidobrensis<br>Liriomyza sativae<br>Liriomyza trifolie<br>Liriomyza quadrata | in Gemüse wie Paprika, Tomaten, Gurken, Kohl, Bohnen, Salat, Auberginen, Zucchini, Kürbisse, in Melonen z.B. Wassermelonen, Netzmelonen, Cantaloup-Melonen, in Zierpflanzen wie Rosen, Hibiskus, sowie in Kartoffeln, Rüben, |
| Pegomya hyoscyami<br>Pegomya spinaciae | in Rüben, in Gemüse und Getreide, z.B. Weizen |

**Blattflöhe (Psyllidae)**

Ganz besonders bevorzugt ist die Bekämpfung folgender Arten aus der Familie der Blattflöhe (Psyllidae):

| | |
|---|---|
| Psylla pyricola | in Kernobst wie z.B. Birnen, Äpfeln, in Steinobst wie z.B. Kirschen, Pflaumen, Zwetschgen, Pfirsischen, Nektarinen |
| Psylla piri | in Kernobst wie z.B. Birnen |
| Psylla pyrisuga | in Kernobst wie z.B. Birnen |
| Psylla costalis | in Kernobst wie z.B. Äpfeln |
| Paratrioza cockerelli | in Fruchtgemüse wie z.B. Tomaten, Paprika, Chillis, in Wurzelgemüse wie z.B. Möhren, in Kartoffeln |
| Tenalaphara malayensis | in tropischen Kulturen wie z.B. Durians (Stinkfrüchte), |
| Diaphorina citri | in Zitrus wie z.B. Orangen, Mandarinen, Limonen, Grapefruits, |
| Trioza erythrae | in Zitrus wie z.B. Orangen, Grapefruits |

Die gute Nützlingsschonung und/oder insektizide und/oder akarizide Wirkung der erfindungsgemäßen Mischungs-Nützlings-Kombinationen geht aus den nachfolgenden Beispielen hervor.

Die zu erwartende Wirkung für eine gegebene Kombination zweier Wirkstoffe kann nach Colby, S.R., Weeds 15, Seiten 20-22, (1967) wie folgt berechnet werden:

Wenn

X den Abtötungsgrad, ausgedrücht in % der unbehandelten Kontrolle, beim Einsatz des Wirkstoffes A in einer Aufwandmenge von m g/ha oder in einer Konzentration von m ppm bedeutet,

Y den Abtötungsgrad, ausgedrücht in % der unbehandelten Kontrolle, beim Einsatz des Wirkstoffes B in einer Aufwandmenge von n g/ha oder in einer Konzentration von n ppm bedeutet,

E den Abtötungsgrad, ausgedrücht in % der unbehandelten Kontrolle, beim Einsatz der Wirkstoffe A und B in Aufwandmengen von m und n g/ha oder in einer Konzentration von m und n ppm bedeutet,

dann ist

$$E = X + Y - \frac{X \cdot Y}{100}$$

Ist der tatsächliche insektizide oder akarizide Abtötungsgrad kleiner als berechnet, so ist die Kombination in ihrer Abtötung nicht additiv, d.h. es liegt ein antagonistischer Effekt vor und die Nützlingspopulation wird geschont. In diesem Fall muss der tatsächlich beobachtete Abtötungsgrad kleiner sein als der aus der oben angeführten Formel errechnete Wert für den erwarteten Abtötungsgrad (E).

**Beispiel 12**

**Amblyseius swirskii-Test auf Pflaume**

Zur Herstellung einer zweckmäßigen Applikationslösung verdünnt man die jeweilige Formulierung auf die gewünschte Konzentration.

Pflaumenblätter, die mit einer gemischten Population der Raubmilbe (Am*blyseius swirskii*) besiedelt sind, werden durch Spritzen mit der Applikationslösung in der gewünschten Konzentration behandelt.

Nach der gewünschten Zeit wird die Anzahl der aktiven Stadien in % bestimmt. Dabei bedeutet 100 %, dass alle Raubmilben abgetötet wurden; 0 % bedeutet, dass keine Raubmilben abgetötet wurden. Die ermittelten Abtötungswerte verrechnet man nach der Colby-Formel.

Bei diesem Test zeigt sich, dass die Wirkstoffkombination in verschiedenen Konzentrationsbereichen nützlingsschonender ist im Vergleich zu mindestens einer einzeln angewendeten Verbindung:

Tabelle: **Amblyseius swirskii - Test auf Pflaume**

| **Wirkstoff** | **Konzentration g ai/ha** | **Abtötung in % nach 1$^d$** | | **Abtötung in % nach 4$^d$** | |
|---|---|---|---|---|---|
| **Abamectin (VI) EC 018** | 6 | 62 | | 68 | |
| **Spiromesifen (I) SC 240** | 120 | 28 | | 32 | |
| **Abamectin EC 018 + Spiromesifen SC 240 (1 : 20)** Erfindungsgemäß | **6+120** | **gef.*** **41** | **ber.**** **78,64** | **gef. *** **44** | **ber.**** **78,24** |
| **Abamectin (VI) EC 018** | 3 | 38 | | 44 | |
| **Spiromesifen (I) SC 240** | 60 | 17 | | 20 | |
| **Abamectin EC 018 + Spiromesifen SC 240 (1 : 20)** | **3+60** | **gef. *** **21** | **ber.**** **48,54** | **gef. *** **24** | **ber.**** **55,2** |

(fortgesetzt)

| Wirkstoff | Konzentration g ai/ha | Abtötung in % nach 1d | Abtötung in % nach 4d |
|---|---|---|---|
| Erfindungsgemäß | | | |
| *gef.=gefundeneWirkung<br>** ber. = nach der Colby-Formel berechnete Wirkung | | | |

**Beispiel 13**

**Coccinella septempunctata/Larven -Test auf Pflaume**

Zur Herstellung einer zweckmäßigen Applikationslösung verdünnt man die jeweilige Formulierung auf die gewünschte Konzentration.

Pflaumenblätter, die mit Larven des Marienkäfers (*Coccinella septempunctata*) besiedelt sind, werden durch Spritzen mit der Applikationslösung in der gewünschten Konzentration behandelt.

Nach der gewünschten Zeit wird die Abtötung in % bestimmt. Dabei bedeutet 100 %, dass alle Marienkäferlarven abgetötet wurden; 0 % bedeutet, dass keine Marienkäferlarven abgetötet wurden. Die ermittelten Abtötungswerte verrechnet man nach der Colby-Formel.

Bei diesem Test zeigt sich, dass die Wirkstoffkombination in verschiedenen Konzentrationsbereichen nützlingsschonender ist im Vergleich zu mindestens einer einzeln angewendeten Verbindung:

Tabelle: **Coccinella septempunctata Larven - Test auf Pflaume**

| Wirkstoff | Konzentration g ai/ha | Abtötung in % nach 3d | |
|---|---|---|---|
| **Abamectin (VI)**<br>**EC 018** | 6 | 100 | |
| **Spiromesifen (I)**<br>**SC 240** | 120 | 10 | |
| **Abamectin EC 018 +**<br>**Spiromesifen SC 240 (1 : 20)**<br>Erfindungsgemäß | 6+120 | **gef.** *<br>**73** | **ber.****<br>**100** |
| **Abamectin (VI)**<br>**EC 018** | 3 | 63 | |
| **Spiromesifen (I)**<br>**SC 240** | 60 | 3 | |
| **Abamectin EC 018 +**<br>**Spiromesifen SC 240 (1 : 20)**<br>Erfindungsgemäß | 3+60 | **gef.***<br>33 | **ber.****<br>64,11 |
| *gef.=gefundeneWirkung<br>** ber. = nach der Colby-Formel berechnete Wirkung | | | |

**Patentansprüche**

**1.** Wirkstoffkombinationen enthaltend die Verbindung der Formel (I)

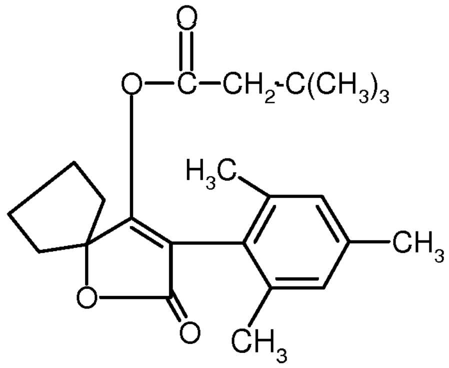

(I)

und Abamectin im Verhältnis 10:1.

**2.** Wirkstoffkombination enthaltend die Verbindung der Formel (I) und Abamectin im Verhältnis 20:1.

**3.** Nicht-therapeutische Verwendung der Wirkstoffkombinationen gemäß Anspruch 1 oder 2 zur Bekämpfung von tierischen Schädlingen aus der Ordnung der Milben (Acari).

**4.** Verwendung der Wirkstoffkombinationen gemäß Anspruch 1 oder 2, zur Bekämpfung von tierischen Schädlingen aus der Familie der Thripse.

**5.** Verwendung der Wirkstoffkombinationen gemäß Anspruch 1 oder 2, zur Bekämpfung von tierischen Schädlingen aus der Familie der Aleyrodidae.

**6.** Verwendung der Wirkstoffkombinationen gemäß Anspruch 1 oder 2, zur Bekämpfung von tierischen Schädlingen aus der Familie der Psyllidae.

**7.** Verwendung der Wirkstoffkombinationen gemäß Anspruch 1 oder 2 zur Bekämpfung von tierischen Schädlingen aus der Familie der Spinnmilben.

**8.** Verwendung der Wirkstoffkombinationen gemäß Anspruch 1 oder 2 zur Bekämpfung von Tetranychus urticae, Hemitarsonemus latus, Frankliniella occidentalis, Bemisia tabaci.

**9.** Verwendung von Wirkstoffkombinationen gemäß Anspruch 1 oder 2 in Gemüse.

**10.** Verwendung von Wirkstoffkombinationen gemäß Anspruch 1 oder 2 in Zierpflanzen.

**11.** Verwendung von Wirkstoffkombinationen gemäß Anspruch 1 oder 2 in Baumwolle.

**12.** Verwendung von Wirkstoffkombinationen gemäß Anspruch 1 oder 2 in Obst, Mais oder Soja.

**13.** Mischungs-Nützlings-Kombinationen enthaltend eine Wirkstoffkombination gemäß Anspruch 1 oder 2 und Nützlinge aus den Ordnungen bzw. Unterordnungen der Araneae, Acari, Dermaptera, Hymenoptera, Coleoptera, Neuroptera, Tysanoptera, Heteroptera, Diptera, Hemiptera, Dermaptera und / oder Parasitiformes, wobei die Mischungs-Nützlings-Kombinationen gegebenenfalls nacheinander angewendet werden können.

**14.** Kit enthaltend eine Wirkstoffkombination gemäß Anspruch 1 oder 2 und Nützlinge aus den Ordnungen bzw. Unterordnungen der Araneae, Acari, Dermaptera, Hymenoptera, Coleoptera, Neuroptera, Tysanoptera, Heteroptera, Diptera, Hemiptera, Dermaptera und / oder Parasitiformes

**15.** Verwendung von Mischungs-Nützlings-Kombinationen, wie in Anspruch 13 definiert oder eines Kits gemäß Anspruch 14, zur Bekämpfung tierischer Schädlinge.

**16.** Verfahren zur Bekämpfung tierischer Schädlinge, **dadurch gekennzeichnet, dass** man Mischungs-Nützlings-Kombinationen, wie in Anspruch 13 definiert oder ein Kit gemäß Anspruch 14, auf tierische Schädlinge und/oder deren

Lebensraum einwirken lässt.

**17.** Verfahren zur Reduktion von Spritzfolgen (Anzahl der Anwendungen pro Saison) durch den Einsatz von Mischungs-Nützlings-Kombinationen gemäß Anspruch 13 oder eines Kits gemäß Anspruch 14.

**18.** Verfahren zur Verminderung der Gesamtrückstände an Insektiziden und/oder Akarziden auf dem Erntegut und in der Umwelt durch den Einsatz von Mischungs-Nützlings-Kombinationen gemäß Anspruch 13 oder eines Kits gemäß Anspruch 14.

**19.** Verfahren zur Verbesserung der Nutzung des Produktionspotentials einer transgenen Pflanze durch Bekämpfung von tierischen Schädlingen und/oder durch Verbesserung der Pflanzengesundheit und/oder durch Verbesserung der abiotischen Stressresistenz, bei dem die transgene Pflanze mit einer wirksamen Menge einer Wirkstoffkombination gemäß Anspruch 1 oder 2 oder einer Mischungs-Nützlings-Kombination gemäß Anspruch 13 behandelt wird.

**20.** Verfahren gemäß Anspruch 19, **dadurch gekennzeichnet, dass** es sich bei der transgenen Pflanze um eine Soja-, Baumwolle- oder Maispflanze handelt.

## Claims

**1.** Active ingredient combinations comprising the compound of the formula (I)

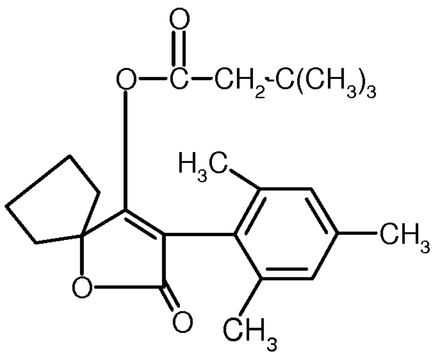

(I)

and abamectin in a ratio of 10:1.

**2.** Active ingredient comprising the compound of the formula (I) and abamectin in a ratio of 20:1.

**3.** Non-therapeutic use of the active ingredient combinations according to Claim 1 or 2 for controlling animal pests from the order of the mites (Acari).

**4.** Use of the active ingredient combinations according to Claim 1 or 2 for controlling animal pests from the family of the thrips.

**5.** Use of the active ingredient combinations according to Claim 1 or 2 for controlling animal pests from the family of the Aleyrodidae.

**6.** Use of the active ingredient combinations according to Claim 1 or 2 for controlling animal pests from the family of the Psyllidae.

**7.** Use of the active ingredient combinations according to Claim 1 or 2 for controlling animal pests from the family of the spider mites.

**8.** Use of the active ingredient combinations according to Claim 1 or 2 for controlling Tetranychus urticae, Hemitarsonemus latus, Frankliniella occidentalis, Bemisia tabaci.

**9.** Use of active ingredient combinations according to Claim 1 or 2 in vegetables.

**10.** Use of active ingredient combinations according to Claim 1 or 2 in ornamental plants.

**11.** Use of active ingredient combinations according to Claim 1 or 2 in cotton.

**12.** Use of active ingredient combinations according to Claim 1 or 2 in fruit, maize or soybeans.

**13.** Mixture/beneficial species combinations comprising an active ingredient combination according to Claim 1 or 2 and beneficial species from the orders and suborders of the Araneae, Acari, Dermaptera, Hymenoptera, Coleoptera, Neuroptera, Tysanoptera, Heteroptera, Diptera, Hemiptera, Dermaptera and/or Parasitiformes, the mixture/beneficial species combinations possibly, if desired, being applied in succession.

**14.** Kit comprising an active ingredient combination according to Claim 1 or 2 and beneficial species from the orders and suborders of the Araneae, Acari, Dermaptera, Hymenoptera, Coleoptera, Neuroptera, Tysanoptera, Heteroptera, Diptera, Hemiptera, Dermaptera and/or Parasitiformes.

**15.** Use of mixture/beneficial species combinations, as defined in Claim 13, or of a kit according to Claim 14, for controlling animal pests.

**16.** Method for controlling animal pests, **characterized in that** mixture/beneficial species combinations as defined in Claim 13 or a kit according to Claim 14 are or is caused to act on animal pests and/or their habitat.

**17.** Method for reducing spraying (number of applications per season) through the use of mixture/beneficial species combinations according to Claim 13 or of a kit according to Claim 14.

**18.** Method for reducing the overall residues of insecticides and/or acaricides on the harvested produce and in the environment through the use of mixture/beneficial species combinations according to Claim 13 or a kit according to Claim 14.

**19.** Method for improving the utilization of the production potential of a transgenic plant by control of animals pests and/or by improvement in plant health and/or by improvement in abiotic stress resistance, wherein the transgenic plant is treated with an effective amount of an active ingredient combination according to Claim 1 or 2 or a mixture/beneficial species combination according to Claim 13.

**20.** Method according to Claim 19, **characterized in that** the transgenic plant is a soybean plant, cotton plant or maize plant.

**Revendications**

**1.** Combinaisons d'agents actifs contenant le composé de formule (I)

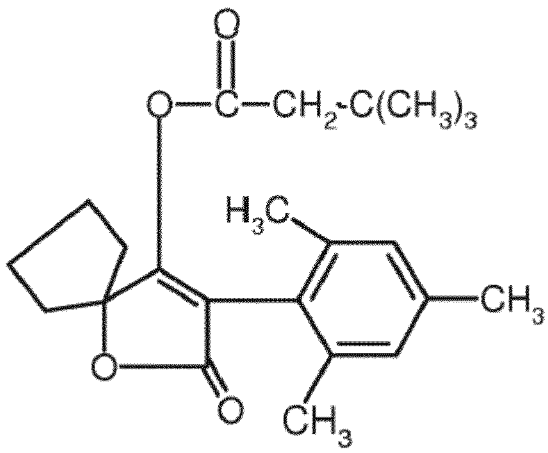

(I)

et de l'abamectine en un rapport de 10:1.

**2.** Combinaison d'agents actifs contenant le composé de formule (I) et de l'abamectine en un rapport de 20:1.

**3.** Utilisation non thérapeutique des combinaisons d'agents actifs selon la revendication 1 ou 2 pour lutter contre des animaux nuisibles de l'ordre des acariens (Acari).

**4.** Utilisation des combinaisons d'agents actifs selon la revendication 1 ou 2 pour lutter contre des animaux nuisibles de la famille des thrips.

**5.** Utilisation des combinaisons d'agents actifs selon la revendication 1 ou 2 pour lutter contre des animaux nuisibles de la famille des aleurodes.

**6.** Utilisation des combinaisons d'agents actifs selon la revendication 1 ou 2 pour lutter contre des animaux nuisibles de la famille des psylles.

**7.** Utilisation des combinaisons d'agents actifs selon la revendication 1 ou 2 pour lutter contre des animaux nuisibles de la famille des tétraniques.

**8.** Utilisation des combinaisons d'agents actifs selon la revendication 1 ou 2 pour lutter contre Tetranychus urticae, Hemitarsonemus latus, Frankliniella occidentalis, Bemisia tabaci.

**9.** Utilisation de combinaisons d'agents actifs selon la revendication 1 ou 2 dans des légumes.

**10.** Utilisation de combinaisons d'agents actifs selon la revendication 1 ou 2 dans des plantes ornementales.

**11.** Utilisation de combinaisons d'agents actifs selon la revendication 1 ou 2 dans le coton.

**12.** Utilisation de combinaisons d'agents actifs selon la revendication 1 ou 2 dans les fruits, le maïs ou le soja.

**13.** Combinaisons mélange-organisme auxiliaire contenant une combinaison d'agents actifs selon la revendication 1 ou 2 et des organismes auxiliaires des ordres ou sous-ordres des aranéides, des acariens, des dermaptères, des hyménoptères, des coléoptères, des neuroptères, des thysanoptères, des hétéroptères, des diptères, des hémiptères, des dermaptères et/ou des parasitiformes, les combinaisons mélange-organisme auxiliaire pouvant éventuellement être appliquées successivement.

**14.** Kit contenant une combinaison d'agents actifs selon la revendication 1 ou 2 et des organismes auxiliaires des ordres ou sous-ordres des aranéides, des acariens, des dermaptères, des hyménoptères, des coléoptères, des neuroptères, des thysanoptères, des hétéroptères, des diptères, des hémiptères, des dermaptères et/ou des parasitiformes.

**15.** Utilisation de combinaisons mélange-organismes auxiliaires telles que définies dans la revendication 13 ou d'un kit selon la revendication 14, pour lutter contre des animaux nuisibles.

**16.** Procédé de lutte contre des animaux nuisibles, **caractérisé en ce que** des combinaisons mélange-organisme auxiliaire telles que définies dans la revendication 13 ou d'un kit selon la revendication 14 sont laissés agir sur des animaux nuisibles et/ou leur habitat.

**17.** Procédé de réduction de pulvérisations (nombre d'applications par saison) par l'utilisation de combinaisons mélange-organisme auxiliaire selon la revendication 13 ou d'un kit selon la revendication 14.

**18.** Procédé de réduction des résidus totaux d'insecticides et/ou d'acaricides sur des produits récoltés et dans l'environnement par l'utilisation de combinaisons mélange-organisme auxiliaire selon la revendication 13 ou d'un kit selon la revendication 14.

**19.** Procédé d'amélioration de l'utilisation du potentiel de production d'une plante transgénique par lutte contre des animaux nuisibles et/ou par amélioration de la santé de la plante et/ou par amélioration de la résistance au stress abiotique, selon lequel la plante transgénique est traitée avec une quantité efficace d'une combinaison d'agents actifs selon la revendication 1 ou 2 ou d'une combinaison mélange-organisme auxiliaire selon la revendication 13.

**20.** Procédé selon la revendication 19, **caractérisé en ce que** la plante transgénique est une plante de soja, de coton

ou de maïs.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0528156 A
- WO 0042850 A
- WO 06002824 A
- WO 07115686 A
- WO 0056156 A
- WO 0160158 A
- WO 0170027 A
- WO 0176369 A
- WO 0178511 A
- WO 0172125 A
- WO 05048712 A
- WO 05065453 A
- WO 07098852 A
- DE 10342673 A
- DE 02717040 A
- WO 2009132779 A
- WO 07144087 A
- US 11765491 B
- US 11765494 B
- US 10926819 B
- US 10782020 B
- US 12032479 B
- US 10783417 B
- US 10782096 B
- US 11657964 B
- US 12192904 B
- US 11396808 B
- US 12166253 B
- US 12166239 B
- US 12166124 B
- US 12166209 B
- US 11762886 B
- US 12364335 B
- US 11763947 B
- US 12252453 B
- US 12209354 B
- US 12491396 B
- US 12497221 B
- WO 9205251 A
- WO 9509910 A
- WO 9827806 A
- WO 05002324 A
- WO 06021972 A
- US 6229072 B
- WO 8910396 A
- WO 9102069 A
- WO 0166704 A
- EP 0837944 A
- WO 0066746 A
- WO 0066747 A
- WO 0226995 A
- US 5776760 A
- US 5463175 A
- WO 02036782 A
- WO 03092360 A
- WO 05012515 A
- WO 07024782 A
- WO 01024615 A
- WO 03013226 A
- US 11517991 B
- US 10739610 B
- US 12139408 B
- US 12352532 B
- US 11312866 B
- US 11315678 B
- US 12421292 B
- US 11400598 B
- US 11651752 B
- US 11681285 B
- US 11605824 B
- US 12468205 B
- US 11760570 B
- US 11762526 B
- US 11769327 B
- US 11769255 B
- US 11943801 B
- US 12362774 B
- US 11588811 B
- US 11185342 B
- US 12364724 B
- US 11185560 B
- US 12423926 B
- US 11760602 B
- US 5561236 A
- US 5648477 A
- US 5646024 A
- US 5273894 A
- US 5637489 A
- US 5276268 A
- US 5739082 A
- US 5908810 A
- US 7112665 B
- WO 9638567 A
- WO 9924585 A
- WO 9924586 A
- WO 9934008 A
- WO 0236787 A
- WO 2004024928 A

- WO 2007103567 A
- WO 2008150473 A
- US 5605011 A
- US 5378824 A
- US 5141870 A
- US 5013659 A
- US 5767361 A
- US 5731180 A
- US 5304732 A
- US 4761373 A
- US 5331107 A
- US 5928937 A
- WO 9633270 A
- WO 2004040012 A
- WO 2004106529 A
- WO 2005020673 A
- WO 2005093093 A
- WO 2006007373 A
- WO 2006015376 A
- WO 2006024351 A
- WO 2006060634 A
- US 61288958 B
- US 5084082 A
- WO 9741218 A
- US 5773702 A
- WO 99057965 A
- US 5198599 A
- WO 01065922 A
- EP 1999141 A
- WO 2007107302 A
- US 12249016 B
- US 12214022 B
- EP 08010791 A
- WO 2007027777 A
- WO 9421795 A
- US 61126083 B
- US 61195019 B
- WO 2007080126 A
- WO 2006129204 A
- WO 2007074405 A
- WO 2007080127 A
- WO 2007035650 A
- WO 0004173 A
- WO 2006045633 A
- EP 04077984 A
- EP 06009836 A
- WO 2004090140 A
- EP 04077624 A
- WO 2006133827 A
- EP 07002433 W
- EP 1999263 A
- WO 2007107326 A
- EP 0571427 A
- WO 9504826 A
- EP 0719338 A
- WO 9615248 A
- WO 9619581 A
- WO 9627674 A
- WO 9711188 A
- WO 9726362 A
- WO 9732985 A
- WO 9742328 A
- WO 9744472 A
- WO 9745545 A
- WO 9827212 A
- WO 9840503 A
- WO 9958688 A
- WO 9958690 A
- WO 9958654 A
- WO 0008184 A
- WO 0008185 A
- WO 0008175 A
- WO 0028052 A
- WO 0077229 A
- WO 0112782 A
- WO 0112826 A
- WO 02101059 A
- WO 03071860 A
- WO 2004056999 A
- WO 2005030942 A
- WO 2005030941 A
- WO 2005095632 A
- WO 2005095617 A
- WO 2005095619 A
- WO 2005095618 A
- WO 2005123927 A
- WO 2006018319 A
- WO 2006103107 A
- WO 2006108702 A
- WO 2007009823 A
- WO 0022140 A
- WO 2006063862 A
- WO 2006072603 A
- WO 02034923 A
- EP 06090134 A
- EP 06090228 A
- EP 06090227 A
- EP 07090007 A
- EP 07090009 A
- WO 0114569 A
- WO 0279410 A
- WO 0333540 A
- WO 2004078983 A
- WO 0119975 A
- WO 9526407 A
- WO 9634968 A
- WO 9820145 A
- WO 9912950 A
- WO 9966050 A
- WO 9953072 A
- US 6734341 B
- WO 0011192 A
- WO 9822604 A
- WO 9832326 A
- WO 0198509 A
- WO 2005002359 A

- US 5824790 A
- US 6013861 A
- WO 9404693 A
- WO 9409144 A
- WO 9411520 A
- WO 9535026 A
- WO 9720936 A
- EP 0663956 A
- WO 9601904 A
- WO 9621023 A
- WO 9839460 A
- WO 9924593 A
- WO 9531553 A
- US 2002031826 A
- US 6284479 B
- US 5712107 A
- WO 9747806 A
- WO 9747807 A
- WO 9747808 A
- WO 0014249 A
- WO 0073422 A
- WO 0047727 A
- EP 06077301 A
- US 5908975 A
- EP 0728213 A
- WO 2006032538 A
- WO 2007039314 A
- WO 2007039315 A
- WO 2007039316 A
- JP 2006304779 B
- WO 2005012529 A
- US 12020360 B
- US 61054026 B
- WO 9800549 A
- WO 2004053219 A
- WO 0117333 A
- WO 0245485 A
- WO 2005017157 A
- EP 08075514 A
- US 61128938 B
- WO 2006136351 A
- US 5969169 A
- US 5840946 A
- US 6323392 B
- US 6063 A
- US 947 A
- US 6270828 B
- US 6169190 B
- US 5965755 A
- US 5434283 A
- US 12668303 B
- US 61135230 B
- WO 09068313 A
- WO 10006732 A
- US 2006162007 A
- WO 2004074492 A
- US 2004117870 A
- WO 0131042 A
- WO 0141558 A
- WO 0236831 A
- WO 2007091277 A
- WO 2008002872 A
- WO 2006108674 A
- WO 2006108675 A
- WO 2008054747 A
- WO 2009064652 A
- WO 2010037016 A
- WO 2010024976 A
- WO 2009102873 A
- WO 2006130436 A
- WO 2006128569 A
- WO 2006128570 A
- WO 2006128573 A
- WO 2006128571 A
- WO 2006128572 A
- US 2006130175 A
- US 2009181399 A
- US 2007067868 A
- WO 2007017186 A
- WO 2008122406 A
- WO 2008151780 A
- WO 2005103266 A
- WO 2003013224 A
- US 2004250317 A
- WO 2004072235 A
- US 2004148666 A
- WO 2006128568 A
- WO 0183818 A
- US 2008289060 A
- WO 2008114282 A
- CN 1840655
- CA 2561992
- US 2008064032 A
- US 2006230473 A
- US 2003126634 A
- US 2006070139 A
- WO 2008112019 A
- US 6040497 A
- WO 0151654 A
- US 7157281 B
- WO 2007142840 A
- EP 1737290 A
- US 2004180373 A
- WO 2009111263 A
- WO 2005059103 A
- WO 2007140256 A
- US 2007056056 A
- US 2007292854 A
- US 2006095986 A
- WO 03052073 A
- WO 2000073475 A
- WO 2009150541 A
- WO 1995009911 A
- WO 1997030163 A
- WO 2007092704 A
- WO 2007076115 A

- WO 2005103270 A
- WO 2002002776 A
- WO 2008051608 A
- WO 2008112613 A
- WO 2009015096 A
- WO 2009061776 A
- WO 2009105492 A
- WO 2009105612 A
- WO 2009117853 A
- WO 2010006010 A
- WO 2010007496 A
- WO 2008056915 A
- WO 2004101751 A
- WO 1995020669 A
- WO 2001051627 A
- WO 2008139334 A
- WO 2008095972 A
- WO 2006085966 A
- WO 2003033651 A
- WO 1999060141 A
- WO 1998012335 A
- WO 1996030517 A
- WO 1993018170 A
- WO 2008095886 A
- WO 2008095887 A
- WO 2008095888 A
- WO 2008095889 A
- WO 2008095910 A
- WO 2008095911 A
- WO 2008095916 A
- WO 2008095919 A
- WO 2008095969 A
- WO 2008095970 A
- WO 2008110522 A
- WO 2008152008 A
- WO 2009000736 A
- WO 2009065863 A
- WO 2009112505 A
- WO 2009132089 A
- WO 2010023186 A
- WO 2010025172 A
- WO 2010027793 A
- WO 2010027799 A
- WO 2010027804 A
- WO 2010027805 A
- WO 2010027808 A
- WO 2010027809 A
- WO 2006009649 A
- WO 2004113542 A
- WO 1999015680 A
- WO 1999000502 A
- WO 1997013865 A
- WO 1996030529 A
- WO 1994023043 A
- WO 2006125065 A
- WO 1997046080 A
- WO 2008067043 A
- WO 2004072109 A
- WO 2009091860 A
- WO 2009021153 A
- WO 2010036764 A
- WO 2006135717 A
- WO 2006055851 A
- WO 2005090578 A
- WO 2005000007 A
- WO 2002099385 A
- WO 2002061043 A
- WO 2006046861 A
- WO 2002085105 A
- US 20070022496 A
- WO 2000063432 A
- WO 2004049786 A
- WO 2009111627 A
- WO 2007073167 A
- WO 2007053015 A
- WO 2002022836 A
- WO 2010019838 A
- WO 2009049110 A
- WO 2008002480 A
- WO 2005033318 A
- WO 2008005210 A
- WO 2008006033 A
- WO 2008008779 A
- WO 2008022486 A
- WO 2008025097 A
- WO 2008027534 A
- WO 2008027540 A
- WO 2008037902 A
- WO 2008046069 A
- WO 2008053487 A
- WO 2008057642 A
- WO 2008061240 A
- WO 2008064222 A
- WO 2008064341 A
- WO 2008073617 A
- WO 2008074025 A
- WO 2008076844 A
- WO 2008096138 A
- WO 2008110848 A
- WO 2008116829 A
- WO 2008117537 A
- WO 2008121320 A
- WO 2008125245 A
- WO 2008142034 A
- WO 2008142036 A
- WO 2008150165 A
- WO 2008092935 A
- WO 2008145675 A
- WO 2009010460 A
- WO 2009016240 A
- WO 2009031664 A
- WO 2009038581 A
- WO 2009053511 A
- WO 2009054735 A
- WO 2009067580 A
- WO 2009073605 A

- WO 2009077611 A
- WO 2009079508 A
- WO 2009079529 A
- WO 2009083958 A
- WO 2009086229 A
- WO 2009092009 A
- WO 2009094401 A
- WO 2009094527 A
- WO 2009102965 A
- WO 2009114733 A
- WO 2009117448 A
- WO 2009126359 A
- WO 2009126462 A
- WO 2009129162 A
- WO 2009132057 A
- WO 2009141824 A
- WO 2009148330 A
- WO 2010037714 A
- WO 2010031312 A
- WO 2010007495 A
- WO 2010025513 A
- WO 2006038794 A
- WO 2002081713 A
- WO 2009086850 A
- WO 2008125983 A2
- WO 2008112613 A1
- WO 2008118394 A1
- WO 2008015263 A2
- WO 2008021021 A2
- WO 2008043849 A2
- WO 2008044150 A2
- WO 2008049183 A1
- WO 2008056915 A1
- WO 2008059048 A1
- WO 2008062049 A1
- WO 2008071767 A1
- WO 2008074891 A2
- WO 2008087932 A1
- WO 2008092910 A1
- WO 2008092935 A2
- WO 2008104598 A2
- WO 2008111779 A1
- WO 2008122980 A2
- WO 2008135206 A2
- WO 2008135467 A2
- WO 2008135603 A2
- WO 2008137108 A2
- WO 2008138975 A1
- WO 2008142146 A1
- WO 2008142163 A2
- WO 2008145629 A2
- WO 2008145675 A2
- WO 2008145761 A1
- WO 2008148872 A1
- WO 2008073617 A2
- WO 2009127671 A1
- WO 2009065912 A2
- WO 2009000789 A1
- WO 2009000848 A1
- WO 2009000876 A1
- WO 2009003977 A2
- WO 2009009142 A2
- WO 2009012467 A2
- WO 2009013225 A2
- WO 2009013263 A2
- WO 2009014665 A2
- WO 2009016104 A1
- WO 2009016212 A2
- WO 2009016232 A2
- WO 2009021548 A1
- WO 2009034188 A1
- WO 2009037279 A1
- WO 2009037329 A2
- WO 2009037338 A1
- WO 2009040665 A2
- WO 2009056566 A2
- WO 2009060040 A1
- WO 2009068564 A1
- WO 2009068588 A2
- WO 2009072676 A1
- WO 2009073069 A2
- WO 2009075860 A2
- WO 2009077973 A1
- WO 2009080743 A2
- WO 2009080802 A2
- WO 2009091518 A2
- WO 2009092772 A2
- WO 2009095455 A1
- WO 2009095641 A2
- WO 2009095881 A2
- WO 2009097133 A2
- WO 2009102978 A2
- WO 2009106596 A2
- WO 2009108513 A2
- WO 2009113684 A1
- WO 2009134339 A2
- WO 2009135130 A2
- WO 2009135810 A1
- WO 2009145290 A1
- WO 2009150170 A1
- WO 2009153208 A1
- WO 2009156360 A1
- WO 2010012796 A1
- WO 2010003917 A1
- WO 2010037228 A1
- WO 2010000794 A1
- WO 2010005298 A2
- WO 2010006732 A2
- WO 2010007035 A1
- WO 2010007496 A2
- WO 2010012760 A2
- WO 2010019872 A1
- WO 2010023310 A2
- WO 2010023320 A2
- WO 2010025465 A1
- WO 2010025466 A2

- WO 2010028205 A1
- WO 2010028456 A1
- WO 2010033564 A1
- WO 2010034652 A1
- WO 2010034672 A1
- WO 2010034681 A1
- WO 2010035784 A1
- WO 2010036866 A1
- WO 2010039750 A2
- US 7435807 B
- US 2006282915 A

**In der Beschreibung aufgeführte Nicht-Patentliteratur**

- **KOPPERT B.V.** *Reed Business Information,* 2003
- **COMAI et al.** *Science,* 1983, vol. 221, 370-371
- **BARRY et al.** *Curr. Topics Plant Physiol.,* 1992, vol. 7, 139-145
- **SHAH et al.** *Science,* 1986, vol. 233, 478-481
- **GASSER et al.** *J. Biol. Chem.,* 1988, vol. 263, 4280-4289
- **TRANEL ; WRIGHT.** *Weed Science,* 2002, vol. 50, 700-712
- **VON CRICKMORE et al.** *Microbiology and Molecular Biology Reviews,* 1998, vol. 62, 807-813
- **VON CRICKMORE et al.** *Bacillus thuringiensis-Toxinnomenklatur aktualisiert,* 2005, http://www.lifesci.sussex.ac.uk/Home/Neil_Crickmore/Bt
- **MOELLENBECK et al.** *Nat. Biotechnol.,* 2001, vol. 19, 668-72
- **SCHNEPF et al.** *Applied Environm. Microbiol.,* 2006, vol. 71, 1765-1774
- **S.R. COLBY.** *Weeds,* 1967, vol. 15, 20-22
- **COLBY, S.R.** *Weeds,* 1967, vol. 15, 20-22